# EUROPEAN PATENT APPLICATION

(11) **EP 1 764 947 A2**
(43) Date of publication of application: **21.03.2007**
(21) Application number: 06076888.4
(22) Date of filing: 19.12.1999
(51) Int. Cl.: H04L 12/10, H04L 12/44, H02G 3/00, H02H 9/02

(54) **System and method for providing electrical power over communication cabling**

(30) Priority: 12.01.1999 US 115628 P; 16.04.1999 US 293343; 02.08.1999 US 365584
(62) Divisional of application: 99959656.2
(71) Applicant: Powerdsine, Ltd., 45421 Hod Hasharon (IL)
(72) Inventor: Lehr, amir, 64386 Tel Aviv (IL); Atias, Ilan, 34383 Haifa (IL); Korcharz, Dror, 59304 Bat Yam (IL); Pincu, David, 58261 Holon (IL)
(74) Representative: Greenwood, John David

(57) **Abstract**

This invention discloses a local area network including a hub, a plurality of nodes, communication cabling connecting the plurality of nodes to the hub for providing data communication, and a power supply distributor operative to provide at least one operating power to at least some of the plurality of nodes via the communication cabling.

## Description

### FIELD OF THE INVENTION

The present invention relates to structured cabling systems and more particularly to structured cabling systems used in local area networks.

### BACKGROUND OF THE INVENTION

Structured cabling systems are well known for use in institutional infrastructure. Such systems provide a standardized yet flexible platform for a dynamic communications environment. Typically structure cabling systems employ twisted copper pairs which are installed in accordance with predetermined criteria. Structured cabling systems are conventionally employed for telephone, data communications, as well as for alarms, security and access control applications.

Currently, the infrastructure making up Ethernet Local Area Networks (LANs) and Wide Area Networks (WANs) is constructed to carry and distribute high bit rate data communication signals between network devices. The network devices or elements, may include, for example, hubs, switches, bridges, routers, interconnection equipment, various devices that are equipped with Network Interface Cards (NICs), data servers, desktop PCs, portable PCs and other various network equipment. What all these devices have in common, among other things, is that they all require electrical power in order to operate. In each case, the electrical power consumed by these devices is supplied by internal or external batteries or by AC power supplied from a power utility.

Today, every network element device that is not self energized, i.e., includes an internal or external battery, requires a connection to a source of electrical power in addition to one or more network connections. The requirement of network devices to connect to a source of electrical power complicates installation and makes it more costly. In addition, it limits the location of network elements to locations where electrical power connections and data network connections are available. Ultimately, two separate networks must be built and maintained, wherein each network is connected to the network device. One network supplies electrical power distribution and the other network supplies connectivity to the data communications network.

Further, for network devices to operate during partial or complete electrical power supply interruption or failure, each network device must either incorporate an internal battery backup system or must be connected to an Uninterruptable Power Supply (UPS). Depending on the application, such as with IP or LAN telephones, the number of network devices that must operate during building power failures may be very high.

Thus, it would be desirable to eliminate the need for each network device that does not operate from a battery to be connected to a source of AC utility power, i.e., a standard AC electrical receptacle, in addition to a network connection. This would significantly reduce the number of electrical cables, AC receptacles and associated connections thereby simplifying the installation of network devices. In addition, this would also provide a cost effective means for providing an uninterruptable power source to multiple network devices.

It is important to point out that the data communications network infrastructure was primarily designed and optimized to carry high bandwidth low power data communications signals and was not designed to deliver electrical power. The IEEE 802.3 standard requires that the electrical voltages carried over the transmitting cable be isolated and balanced in reference to earth ground at both ends. Category 3 to 5 LAN cables, RJ-45 connectors, the line interface of network devices and all IEEE 802.3 compatible devices within the network were not designed to carry electrical power at a sufficient level to operate the majority of network devices.

Therefore, any solution that uses the LAN infrastructure to simultaneously distribute electrical power and provide network data communications should address the following points: (1) electrical power distribution over the LAN infrastructure should neither increase the network bit error rate (BER) beyond permissible levels nor disturb normal data communications in any way; (2) electrical power on the LAN infrastructure should not introduce any possibility of harm or risk to users and network maintenance personnel; (3) electrical power over the LAN infrastructure should not harm or cause damage to standard LAN equipment which is not designed to receive power from the data communications network; and (4) the addition of electrical power over the data communications network should not degrade the reliability of the network.

Systems for delivering data communication signals over power networks are known in the art. Power line carrier systems are well known and function to superimpose relatively high frequency data signals over low frequency power cabling. These systems, however, are designed to operate over power lines that are very different from the LAN. The LAN medium is designed and constructed to carry data communication signals. Thus, the cables, connectors, line interface circuitry and terminal devices are not designed to handle high levels of electrical power. This is very different from superimposing low energy level data communication signals over power line networks.

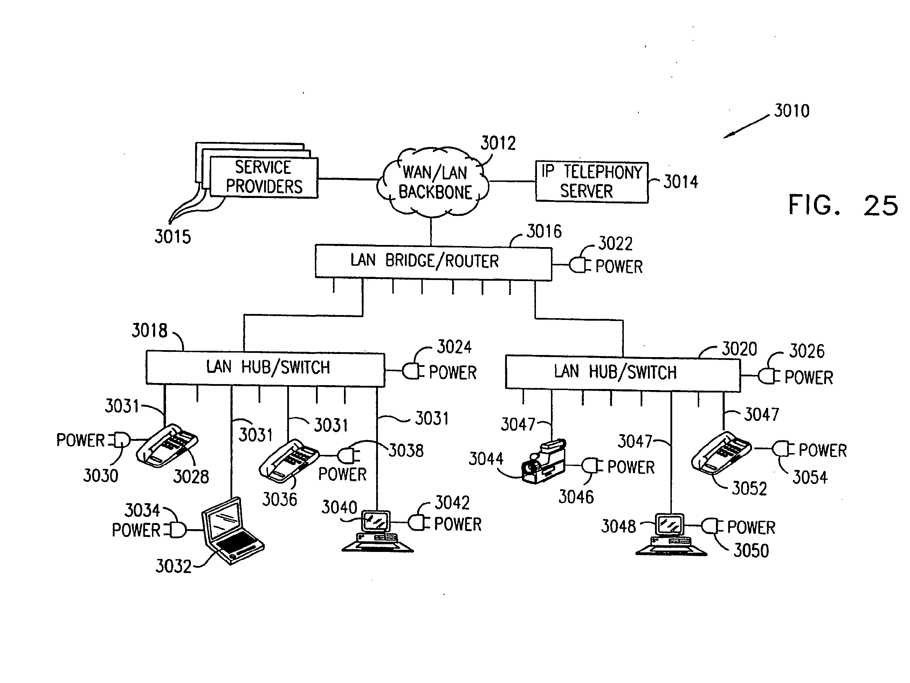

A block diagram illustrating an example prior art data communications network wherein network devices are coupled to the AC main utility power is shown in Fig. 25. This example network is presented to illustrate the various network elements that are typically found in a LAN environment. The network, generally referenced 3010, comprises a combination WAN and/or LAN backbone 3012 coupled to an IP telephony server 3014 and/or to one or more other service providers 3015 and also to a LAN bridge/router 3016 which is connected to a source of AC power via electrical plug 3022. The IP telephony server 3014 functions to provide telephone service for a plurality of Internet or IP telephones 3052, 3036, 3028.

The LAN bridge/router 3016 is coupled to two LAN hubs or switches 3018, 3020. IP telephones 3028, 3036, laptop or other portable computer 3032 and desktop computer 3040 are coupled to LAN hub/switch 3018 via network data connections 3031. LAN hub/switch 3018 is connected to a separate source of AC power via electrical plug 3024. IP telephone 3028, 3036, portable computer 3032 and desktop computer 3040 are connected to a source of AC power via electrical plugs 3030, 3038, 3034, 3042, respectively.

The LAN hub/switch 3020 is also coupled to a separate source of AC power via electrical plug 3026. A video camera 3044 (e.g., standard video camera or Web camera), portable computer 3048 and IP telephone 3052 are coupled to LAN hub/switch 3020 via network data only connections 3047. Video camera 3044, portable computer 3048 and IP telephone 3052 are connected to a source of AC power via electrical plugs 3046, 3050, 3054, respectively.

It is noted that each network device requires a separate data communications connection and a connection to a source of electrical power. The data networking connection is made in the normal manner using standard LAN cabling to conventional hubs, switches, routers, etc. Electrical power to each network device is supplied via a plurality of AC mains receptacles. Thus, each network device must be provided with at least two utility hook ups: one to the data communications network and the second to the AC electrical power network.

### SUMMARY OF THE INVENTION

The present invention seeks to provide an enhanced structured cabling system and local area network employing such a system.

Network installations that utilize the present invention can be simplified and are less costly because the number of required power cables, power receptacles and AC power supplies or adapters is greatly reduced. In addition, network devices, terminals and other networking equipment can be placed without regard to the existence of or the location of AC receptacles.

The system of the present invention also provides for a significant cost reduction in providing uninterruptable backup electrical power to critical network devices and terminals in the event of a power supply failure or interruption. This is due to the fact that distributing backup power, i.e., power from an uninterruptable power supply, from a few points in the network via the LAN infrastructure is far more efficient than connecting each critical network element to its own dedicated UPS or to a backed up power line. An assumption that is valid most of the time is that only a relatively small portion of the network elements, e.g., hubs, switches, routers, etc., need to be connected to a dedicated source of uninterruptable power while the remainder of the critical network devices receive their operating power via the LAN infrastructure.

Another benefit of the system of the present invention is that the safety requirements and cost of network terminal equipment can be reduced since electrical power can now be fed from low voltages delivered over the LAN infrastructure. This is in contrast to the current method of providing an internal or external 110/220 VAC power supply that requires that the network device receive certification by one or more testing organizations such as Underwriters Laboratory (UL). In the case of IP telephony, which is becoming more and more popular, providing power over the LAN permits the IP telephone to have a source of uninterruptable power just as ordinary analog based telephones connected to the PSTN enjoy today.

The disclosure presented hereinbelow describes an apparatus for and methods for generating, delivering and managing electrical power over LAN network infrastructures that are primarily designed for digital communications purposes. The invention functions to reduce any possible disturbances to the data communications and to maintain compatibility with the IEEE 802.3 and other relevant standards.

The power over LAN system of the present invention operates with high bandwidth data communication networks, i.e., 10 Mbps, 100 Mbps, 1000 Mbps, which are naturally more susceptible to noise, network bandwidth, near end and alien crosstalk. In addition, the present invention takes into account the limitation in cable length imposed by modern LANs, i.e., hundreds of meters versus kilometers in Public Switched Telephone Network (PSTN), Integrated Service Digital Network (ISDN) and High bit rate Digital Subscriber Loop (HDSL) communication lines. The invention discloses novel remote power feeding methods that are better suited for shorter haul cable runs.

Further, the electrical power distributed over the LAN can be delivered as DC or low frequency AC voltages which in either case will interfere minimally with data communications signals. The electrical power delivered over the data communications cable can be transmitted using one or more spare pairs in the cable. Ethernet communications requires 2 pairs (4 conductors) to implement. If 4 pair (8 conductor) Category 3, 4 or 5 cable is used, than 2 pairs are not used for data communications. The electrical power can be transmitted using one or more of the cable wire pairs. Alternatively, if the data cable comprises only two pair, then the electrical power is distributed using one or two of the available pairs, i.e., the receive and transmit wires. Thus, in accordance with the invention, power can be delivered over any combination of used and/or unused twisted pair wires in the data communication cable.

There is thus provided in accordance with a preferred embodiment of the present invention a local area network including a hub, a plurality of nodes, communication cabling connecting the plurality of nodes to the hub for providing data communication; and a power supply distributor operative to provide at least some operating power to at least some of the plurality of nodes via the communication cabling.

Further in accordance with a preferred embodiment of.the present invention the communication cabling includes at least part of a structured cabling system.

Still further in accordance with a preferred embodiment of the present invention the power supply distributor is located within the hub.

Additionally in accordance with a preferred embodiment of the present invention the power supply distributor is located outside the hub.

Moreover in accordance with a preferred embodiment of the present invention the power supply distributor is located partially within the hub and partially outside the hub.

Still further in accordance with a preferred embodiment of the present invention the operating power supplied by said power supply distributor to at least some of said plurality nodes via said communication cabling includes backup power.

Additionally in accordance with a preferred embodiment of the present invention the hub includes a data communication concentrator, the power supply distributor includes a combiner, and the communication cabling connects the data communication concentrator via the combiner to the nodes.

Sill further in accordance with a preferred embodiment of the present invention the hub includes a data communication concentrator and wherein the power supply distributor is also located within the hub.

Additionally in accordance with a preferred embodiment of the present invention the hub includes a data communication concentrator and wherein the power supply distributor is also located within the hub and includes a power supply and a combiner, the combiner coupling power from the power supply to the communication cabling which also carries data from the data communication concentrator.

Preferably the data communication concentrator comprises a LAN switch which functions as a data communication switch/repeater.

Additionally in accordance with a preferred embodiment of the present invention the plurality of nodes includes at least one of the following types of nodes: wireless LAN access points, emergency lighting system elements, paging loudspeakers, CCTV cameras, alarm sensors, door entry sensors, access control units, laptop computers, IP telephones, hubs, switches, routers, monitors and memory backup units for PCs and workstations.

Still further in accordance with a preferred embodiment of the present invention the hub includes a data communication concentrator the power supply distributor includes a combiner and a power supply, the communication cabling connects the data communication concentrator via the combiner to the nodes; and the combiner includes a plurality of couplers, each of which is connected to an output of the power supply.

Further in accordance with a preferred embodiment of the present invention the hub includes a data communication concentrator, the power supply distributor includes a combiner and a power supply, the communication cabling connects the data communication concentrator via the combiner to the nodes, and the combiner comprises a plurality of couplers and a plurality of filters, each coupler being connected via a filter to an output of the power supply.

Still further according to a preferred embodiment of the present invention the hub includes a data communication concentrator, the power supply distributor includes a combiner and a power supply, the communication cabling connects the data communication concentrator via the combiner to the nodes, and the combiner includes a plurality of couplers and a plurality of filters and a plurality of smart power allocation and reporting circuits (SPEARs), each coupler being connected via a filter and a SPEAR to an output of the power supply.

Moreover in accordance with a preferred embodiment of the present invention the hub includes a data communication concentrator, the power supply distributor includes a combiner and a power supply, and the power supply includes a power failure backup facility.

Additionally or alternatively the hub includes a data communication concentrator; the power supply distributor includes a combiner and a power supply, the communication cabling connects the data communication concentrator via the combiner to the nodes, and the combiner comprises a plurality of couplers and a plurality of filters, each coupler being connected via a filter to an output of the power supply.

Moreover according to a preferred embodiment of the present invention the hub includes a data communication concentrator, the power supply distributor includes a combiner and a power supply, the communication cabling connects the data communication concentrator via the combiner to the nodes, and the combiner includes a plurality of couplers and a plurality of filters and a plurality of smart power allocation and reporting circuits (SPEARs), each coupler being connected via a filter and a SPEAR to an output of the power supply.

Preferably the hub includes a data communication concentrator, the power supply distributor includes a combiner and a power supply, the communication cabling connects the data communication concentrator via the combiner to the nodes, and the combiner includes a plurality of couplers and a plurality of filters, each coupler being connected via a filter to an output of the power supply.

Additionally or alternatively the hub includes a data communication concentrator, the power supply distributor includes a combiner and a power supply, the communication cabling connects the data communication concentrator via the combiner to the nodes, and the combiner comprises a plurality of couplers and a plurality of filters and a plurality of smart power allocation and reporting circuits (SPEARs), each coupler being connected via a filter and a SPEAR to an output of the power supply.

Preferably the hub includes a data communication concentrator, the power supply distributor includes a combiner and a power supply, the communication cabling connects the data communication concentrator via the combiner to the nodes, and the combiner includes a plurality of couplers and a plurality of filters, each coupler being connected via a filter to an output of the power supply.

Additionally or alternatively the hub includes a data communication concentrator, the power supply distributor includes a combiner and a power supply, the communication cabling connects the data communication concentrator via the combiner to the nodes, and the combiner includes a plurality of couplers and a plurality of filters and a plurality of smart power allocation and reporting circuits (SPEARs), each coupler being connected via a filter and a SPEAR to an output of the power supply.

Further in accordance with a preferred embodiment of the present invention the power supply distributor is operative to provide electrical power along the communication cabling without unacceptable degradation of the digital communication.

Still further in accordance with a preferred embodiment of the present invention the communication cabling comprises at least one twisted wire pair connected to each node and wherein power is transmitted over a twisted wire pair along which data is also transmitted.

Preferably the hub includes a data communication concentrator, the power supply distributor includes a power supply interface and a power supply, the communication cabling connects the data communication concentrator via the power supply interface to the nodes, and power supply interface includes a plurality of filters and a plurality of smart power allocation and reporting circuits (SPEARs), each filter being connected via a SPEAR to an output of the power supply.

Additionally in accordance with a preferred embodiment of the present invention the communication cabling comprises at least two twisted wire pairs connected to each node and wherein power is transmitted over a twisted wire pair different from that along which data is transmitted.

Preferably the hub includes a data communication concentrator, the power supply distributor includes a power supply interface and a power supply, the communication cabling connects the data communication concentrator via the power supply interface to the nodes, and the power supply interface includes a plurality of filters and a plurality of smart power allocation and reporting circuits (SPEARs), each filter being connected via a SPEAR to an output of the power supply.

Additionally or alternatively the hub includes a data communication concentrator, the power supply distributor includes a power supply interface and a power supply, the communication cabling connects the data communication concentrator via the power supply interface to the nodes, and the power supply interface includes a plurality of smart power allocation and reporting circuits (SPEARs), each SPEAR being connected to an output of the power supply.

Still further in accordance with a preferred embodiment of the present invention the hub includes a data communication concentrator, the power supply distributor includes a combiner and a power supply, the communication cabling connects the data communication concentrator via the combiner to the nodes, the combiner includes a plurality of couplers and a plurality of filters and a plurality of smart power allocation and reporting circuits (SPEARs), each coupler being connected via a filter and a SPEAR to an output of the power supply, and each coupler has at least two ports, one of which is connected to a port of the data communication concentrator and the other of which is connected, via communication cabling, to one of the plurality of nodes.

There is also provided in accordance with a preferred embodiment of the present invention a local area network node for use in a local area network including a hub, a plurality of nodes, communication cabling connecting the plurality of nodes to the hub for providing digital communication and a power supply distributor operative to provide at least some operating power to at least some of the plurality of nodes via the hub and the communication cabling, the local area network node including a communications cabling interface receiving both power and data and separately providing power to a node power input and data to a node data input.

Further in accordance with a preferred embodiment of the present invention the power supply distributor is located within the hub. Additionally or alternatively the power supply distributor is located outside the hub.

Still further in accordance with a preferred embodiment of the present invention the node is operative for node initiated sleep mode operation in voluntary power management. Preferably the node has the functionality in node initiated sleep mode operation in voluntary power management, namely measuring the time duration TD1 since the last activity of the node. If TD 1 exceeds a first threshold, in the absence of a user or system input contraindicating sleep mode operation, the node then operates in a sleep mode which involves reduced power consumption.

Additionally or alternatively the node has the functionality in node initiated sleep mode operation in voluntary power management, namely measuring a time duration TD2 since the last communication of the node. If TD2 exceeds a first threshold, in the absence of a user or system input contraindicating sleep mode operation, the node then operates in a sleep mode, which involves reduced power consumption.

Moreover in accordance with a preferred embodiment of the present invention the node may operate with the functionality of operating the node normally within a periodically occurring time slot, and operating the node in a sleep mode outside the periodically occurring time slot.

Furthermore the node may also operate in a sleep mode as the result of a sensed fault condition. Preferably the node has the functionality of the node periodically performing a self-test. If the node passes the test, it operates normally. However, if the node fails the test, it operates in the sleep mode.

Still further in accordance with a preferred embodiment of the present invention, the node is operative for power supply distributor initiated sleep mode operation in voluntary power management. Preferably the node has the functionality in power supply distributor initiated sleep mode operation in voluntary power management, namely measuring the time duration TD1 since the last activity of the node. If TD1 exceeds a first threshold, in the absence of a user or system input contraindicating sleep mode operation, the node is operated in a sleep mode which involves reduced power consumption.

Additionally in accordance with a preferred embodiment of the present invention the node has the functionality, in power supply distributor initiated sleep mode operation in voluntary power management, that measuring a time duration TD2 since the last communication of the node. If TD2 exceeds a first threshold, in the absence of a user or system input contraindicating sleep mode operation, the node is then operated in a sleep mode, which involves reduced power consumption.

Further in accordance with a preferred embodiment of the present invention the node has the functionality that the power supply distributor periodically performs a test on the node. If the node passes the test, it is operated normally. However, if the node fails the test, it is operated in the sleep mode.

Further in accordance with a preferred embodiment of the present invention the communications cabling interface is internal to at least one of the plurality of nodes.

Still further in accordance with a preferred embodiment of the present invention the communications cabling interface is external to at least one of the plurality of nodes.

Additionally in accordance with a preferred embodiment of the present invention the power supply distributor is operative to provide electrical power along the communication cabling without unacceptable degradation of the digital communication.

Still further in accordance with a preferred embodiment of the present invention the communication cabling includes at least one twisted wire pair connected to each node and wherein power is transmitted over a twisted wire pair along which data is also transmitted.

Additionally in accordance with a preferred embodiment of the present invention the communication cabling includes at least two twisted wire pairs connected to each node and wherein power is transmitted over a twisted wire pair different from that along which data is transmitted.

Preferably the power supply distributor is operative to provide electrical power along the communication cabling without unacceptable degradation of the digital communication.

Additionally the communication cabling may include at least one twisted wire pair connected to each node and wherein power is transmitted over a twisted wire pair along which data is also transmitted.

Further more in accordance with a preferred embodiment of the present invention the communication cabling includes at least two twisted wire pairs connected to each node and wherein power is transmitted over a twisted wire pair different from that along which data is transmitted.

Preferably the power supply distributor is operative to provide electrical power along the communication cabling without unacceptable degradation of the digital communication.

Further in accordance with a preferred embodiment of the present invention the communication cabling includes at least one twisted wire pair connected to each node and wherein power is transmitted over a twisted wire pair along which data is also transmitted.

Still further in accordance with a preferred embodiment of the present invention the communication cabling includes at least two twisted wire pairs connected to each node and wherein power is transmitted over a twisted wire pair different from that along which data is transmitted.

Moreover in accordance with a preferred embodiment of the present invention the hub includes a data communication concentrator, the power supply distributor includes a combiner, a management and control unit and a power supply, the communication cabling connects said data communication concentrator via the combiner to the node, the combiner includes a plurality of couplers and a plurality of filters and a plurality of smart power allocation and reporting circuits (SPEARs), each coupler being connected via a filter and a SPEAR to an output of said power supply, and the SPEAR is operative to report to the management and control unit the current consumption of a node connected thereto.

Further in accordance with a preferred embodiment of the present invention the hub includes a data communication concentrator, the power supply distributor includes a combiner and a power supply, the communication cabling connects the data communication concentrator via the combiner to the nodes, the combiner comprises a plurality of couplers and a plurality of filters and a plurality of smart power allocation and reporting circuits (SPEARs), each coupler being connected via a filter and a SPEAR to an output of the power supply, and the SPEAR is operative to limit the maximum current supplied to a node connected thereto.

Alternatively according to a preferred embodiment of the present invention the hub includes a data communication concentrator, the power supply distributor includes a combiner and a power supply, the communication cabling connects the data communication concentrator via the combiner to the nodes, the combiner includes a plurality of couplers and a plurality of filters and a plurality of smart power allocation and reporting circuits (SPEARs), each coupler being connected via a filter and a SPEAR to an output of the power supply, and the SPEAR is operative to automatically disconnect a node connected thereto displaying an overcurrent condition following elapse of a programmably predetermined period of time.

Additionally in accordance with a preferred embodiment of the present invention the hub includes a data communication concentrator, the power supply distributor includes a combiner and a power supply, the communication cabling connects the data communication concentrator via the combiner to the nodes, the combiner includes a plurality of couplers and a plurality of filters and a plurality of smart power allocation and reporting circuits (SPEARs), each coupler being connected via a filter and a SPEAR to an output of the power supply, and the SPEAR is operative to automatically disconnect power from a node connected thereto displaying an overcurrent condition following elapse of a programmably predetermined period of time and to automatically reconnect the node to power thereafter when it no longer displays the overcurrent condition.

Moreover in accordance with a preferred embodiment of the present invention the hub includes a data communication concentrator, the power supply distributor includes a combiner and a power supply, the communication cabling connects said data communication concentrator via the combiner to the nodes, the combiner includes a plurality of couplers and a plurality of filters and a plurality of smart power allocation and reporting circuits (SPEARs), each coupler being connected via a filter and a SPEAR to an output of the power supply, and the SPEAR includes a current sensor which receives a voltage input Vin from a power supply and generates a signal which is proportional to the current passing therethrough, and a multiplicity of comparators receiving the signal from the current sensor and also receiving a reference voltage Vref from respective reference voltage sources.

Preferably the reference voltage sources are programmable reference voltage sources and receive control inputs from management & control circuits.

Additionally the outputs of the multiplicity of comparators may be supplied to a current limiter and switch which receives input voltage Vin via the current sensor and provides a current-limited voltage output Vout.

Furthermore the outputs of the comparators are supplied to management & control circuits to serve as monitoring inputs providing information regarding the DC current flowing through the SPEAR.

Additionally in accordance with a preferred embodiment of the present invention the hub includes a data communication concentrator, the power supply distributor includes a combiner and a power supply, the communication cabling connects the data communication concentrator via the combiner to the nodes, and the combiner includes a plurality of couplers each of which includes at least a pair of transformers, each having a center tap at a secondary thereof via which the DC voltage is fed to each wire of a twisted pair connected thereto.

Further in accordance with a preferred embodiment of the present invention the hub includes a data communication concentrator, the power supply distributor includes a combiner and a power supply, the communication cabling connects the data communication concentrator via the combiner to the nodes, and the combiner includes a plurality of couplers each of which includes at least one transformer, which is characterized in that it includes a secondary which is split into two separate windings and a capacitor which is connected between the two separate windings and which effectively connects the two windings in series for high frequency signals, but effectively isolates the two windings for DC.

Still further in accordance with a preferred embodiment of the present invention the hub includes a data communication concentrator, the power supply distributor includes a combiner a power supply, the communication cabling connects the data communication concentrator via the combiner to the nodes, and the combiner includes a pair of capacitors which effectively block DC from reaching the data communication concentrator.

Still further in accordance with a preferred embodiment of the present invention the hub includes a data communication concentrator, the power supply distributor includes a combiner and a power supply, the communication cabling connects the data communication concentrator via the combiner to the nodes, and the combiner comprises two pairs of capacitors which effectively block DC from reaching the data communication concentrator.

Additionally in accordance with a preferred embodiment of the present invention the hub includes a data communication concentrator, the power supply distributor includes a combiner and a power supply, the communication cabling connects the data communication concentrator via the combiner to the nodes, and the combiner includes a self-balancing capacitor-less and transformer-less common mode coupling circuit.

Preferably the communications cabling interface includes a separator and a pair of transformers, each having a center tap at a primary thereof via which the DC voltage is extracted from each wire of a twisted pair connected thereto.

Additionally or alternatively the communications cabling interface includes a separator including at least one transformer, which is characterized in that it includes a primary which is split into two separate windings and a capacitor which is connected between the two separate windings and which effectively connects the two windings in series for high frequency signals, but effectively isolates,the two windings for DC.

Furthermore the communications cabling interface includes a separator comprising a pair of capacitors which effectively block DC from reaching a data input of a node connected thereto.

Additionally in accordance with a preferred embodiment of the present invention the communications cabling interface includes a separator comprising two pairs of capacitors which effectively block DC from reaching a data input of a node connected thereto.

Additionally or alternatively the communications cabling interface includes a separator includes a self-balancing capacitor-less and transformer-less common mode coupling circuit.

Further in accordance with a preferred embodiment of the present invention the node is operative in both full-functionality and sleep mode functionality.

Still further in accordance with a preferred embodiment of the present invention the node includes a controller, a switch, monitoring circuitry, at least one power supply and node circuitry and wherein the switch receives a control input from the controller which receives a control input from the sensor as well as a control input from the monitoring circuitry, which is continually powered by the at least one power supply.

Additionally in accordance with a preferred embodiment of the present invention the node also includes a power supply and wherein the power supply includes at least one rechargeable energy storage element.

There is further provided in accordance with a preferred embodiment of the present invention a local area network including a hub, a plurality of nodes, a communication cabling connecting said plurality of nodes to the hub for providing data communication, and a power supply distributor operative to provide at least some operating power to at least some of the plurality of nodes via the communication cabling, the power supply distributor including power management functionality.

Further in accordance with a preferred embodiment of the present invention the power management functionality governs the supply of power to at least some of the plurality of nodes via the communications cabling. Preferably the power management functionality monitors and manages the power consumption of the nodes. Furthermore, the power management functionality senses overcurrent situations and effects power cutoffs as appropriate.

Still further in accordance with a preferred embodiment of the present invention the power management functionality operates in at least one of an involuntary power management mode and a voluntary power management mode. Preferably, in the involuntary power management mode of operation, if the power supply distributor senses a situation of insufficient power availability for power transmission over the communications cabling to the nodes, it supplies a reduced amount of power to at least some of the nodes. Furthermore, the power supply distributor also provides control inputs to the nodes to cause them to operate in a reduced power mode.

Additionally in accordance with a preferred embodiment of the present invention the voluntary power management mode of operation, reduced power availability is mandated at certain times of reduced activity.

Moreover in accordance with a preferred embodiment of the present invention the power management functionality includes at least one of the following functional elements: interrogating the communications cabling connection to nodes, to which it is intended to transmit power over the communications cabling; setting individual voltage and current limits for nodes based at least on results of interrogating the communications cabling connection to nodes and pre-defined parameters; sending suitable signaling messages to the remote node; and reporting status of a line connected to the node to a management work station.

Still further in accordance with a preferred embodiment of the present invention the power management functionality may also include at least one of the following functional elements: voltage is measured at an output of the power supply distributor, corresponding to a line to which it is intended to transmit power over the communications cabling in the absence of power transmission therealong. If the absolute value of the voltage is higher than a predetermined programmable threshold, the line is classified as having a voltage present thereon from an external source. If the absolute value of the voltage is not higher than the predetermined programmable threshold, a current limit is set to a predetermined programmable value and power is transmitted along the line. Thereafter, the voltage and the current are measured at the output of the power supply distributor for the line at at least one predetermined programmable time, based on the foregoing measurements the status of the node and the line to which it is connected are determined. Preferably, the determination of the status of the node and the line includes at least one of the following determinations:

| | |
|---|---|
| NO LOAD | WHEN Vout > V2 AND THE ABSOLUTE VALUE OF IO < I2, FOR ALL T1, T2, T3 |
| SHORT CIRCUIT | WHEN Vout < V3 AND THE ABSOLUTE VALUE OF IO > 13, FOR ALL T1, T2, T3 |
| NIC LOAD | WHEN VoutT3 < V4 AND THE ABSOLUTE VALUE OF IOT1<IOT2<IOT3 |
| POL LOAD | WHEN VoutT1>V5 AND VoutT2>V5 AND VoutT3>V5 AND THE ABSOLUTE VALUE OF IOT1>I5 OR THE ABSOLUTE VALUE OF IOT2>I5 OR THE ABSOLUTE VALUE OF IOT3>I5. |

where
A NO LOAD condition is one in which a node is not connected to the line.
A SHORT CIRCUIT condition is one in which a short circuit exists across positive and negative conductors of the line upstream of the node or in the node.
A NIC LOAD condition is one in which a Network Interface Card line transformer is connected across the line at the node.
A POL LOAD condition is one in which a Power Over LAN separator is connected across the line at the node.
V0 is the voltage at the output of the power supply distributor for the line.
V1 is a predetermined programmable value which is arrived at by measuring the highest peak value of voltage Vout for a period of a few minutes when power is not transmitted along the line;
V2 is a predetermined programmable value which is arrived at by measuring the lowest value of voltage Vout for a period of a few minutes when power is not transmitted along the line and when no load is connected between +Vout and -Vout at the output of said power supply distributor for the line;
V3 is a predetermined programmable value which is arrived at by measuring the highest peak value of voltage Vout for a period of a few minutes when power is not transmitted along the line and when a resistance is connected between +Vout and -Vout at the output of said power supply distributor for the line;
V4 is a predetermined programmable value which is preferably arrived at by measuring the highest peak value of voltage Vout for a period of a few minutes when power is not transmitted along the line and when a resistance is connected between +Vout and -Vout at the output of said power supply distributor for the line;
V5 is a predetermined programmable value, which represents a typical threshold value of Vin at which a node power supply commences operation;
VoutT1 is Vout measured at a first time T1;
VoutT2 is Vout measured at a second time T2;
VoutT3 is Vout measured at a third time T3;
IO is the current flowing at the output of the power supply distributor for the line;
IL1 is the predetermined programmable value of the output of the power supply distributor for the line;
12 is a predetermined programmable value which is arrived at by measuring the maximum peak value of the current IO for a period of a few minutes when power is not transmitted along the line and when no load is connected at the output of the power supply distributor for the line;
13 is a predetermined programmable value which is arrived at by measuring the minimum value of the current IO for a period of a few minutes when power is not transmitted along the line and when a resistance is connected between +Vout and -Vout at the output of said power supply distributor for the line;
15 is a predetermined programmable value which is arrived at by measuring the maximum peak value of the current IO for a period of a few minutes when power is not transmitted along the line and when no load is connected at the output of the power supply distributor for the line;
IOT1 is IO measured at time T1;
IOT2 is IO measured at time T2; and
IOT3 is IO measured at time T3.

Further in accordance with a preferred embodiment of the present invention the power management functionality includes functionality for monitoring and managing power consumption during normal operation comprises sensing current for each node. Preferably the functionality for monitoring and managing power consumption during normal operation comprises sensing current for each node in a generally cyclic manner. Furthermore the functionality for monitoring and managing power consumption during normal operation may also include sensing current for each node and comparing sensed current with programmably predetermined reference values for each line.

Additionally in accordance with a preferred embodiment of the present invention each node may be classified as being over-current, under-current or normal. The over-current classification includes programmably adjustable thresholds.

Moreover in accordance with a preferred embodiment of the present invention the normal classification includes at least one of the following sub-classifications: active mode, sleep mode, and low-power mode.

Furthermore in accordance with a preferred embodiment of the present invention the functionality for monitoring and managing power consumption during normal operation is operative to control the operation of nodes classified as being over-current on the basis of at least one of the following functionalities: if current at a node exceeds a regular over-current threshold for at least a predetermined time, power to that node is cut off after the predetermined time, current supplied to a node is not permitted to exceed a high over-current threshold, and at least one intermediate threshold is defined between a regular over-current threshold and said high over-current threshold and a predetermined time to cut-off is determined as a function of which of such intermediate thresholds is exceeded.

Further in accordance with a preferred embodiment of the present invention the functionality for monitoring and managing power consumption during normal operation is operative to control the operation of nodes classified as being under-current on the basis of at least one of the following functionalities: within a relatively short predetermined time following detection of an under-current node, which predetermined time is selected to avoid undesired response to noise, supply of current to such node is terminated.

Still further in accordance with a preferred embodiment of the present invention, the local area network includes functionality for monitoring overall current flow as follows: in parallel, overall current flow to all of the nodes over all of the lines is monitored, wherein the overall current flow is compared with a programmably predetermined reference value, and on the basis of this comparison, the power supply distributor and the nodes connected thereto are together classified as being over-current or normal.

Additionally in accordance with a preferred embodiment of the present invention the over-current classification includes programmably adjustable thresholds.

Still further in accordance with a preferred embodiment of the present invention the functionality for monitoring and managing power consumption during normal operation is operative to control the operation of power supply distributors classified as being over-current on the basis of at least one of the following functionalities: if the overall current exceeds a regular overall over-current threshold for at least a predetermined time, power to at least some nodes is either reduced or cut off after the predetermined time, and in any event, the overall current is not permitted to exceed a high overall over-current threshold, which exceeds said regular overall over-current threshold.

Moreover in accordance with a preferred embodiment of the present invention the power supply distributor forms part of said hub. Alternatively power supply distributor does not form part of said hub.

Additionally in accordance with a preferred embodiment of the present invention the intermediate thresholds are defined between the regular overall over-current threshold and the high overall over-current threshold and a predetermined time to cut-off is determined as a function of which of such intermediate thresholds is exceeded.

Still further in accordance with a preferred embodiment of the present invention the power supply distributor is operative to report a current level classification of each node and of the power supply distributor to an external monitoring system. Preferably the distributor is operative to notify nodes of an impending change in the current supply thereto. Additionally or alternatively the power supply distributor is operative to provide at least one of full and no functionality operation to individual nodes in involuntary power management operation.

Furthermore the power supply distributor is operative in accordance with at least some of the following functionality: initially determining the total power available to it as well as the total power that it is currently supplying to the nodes, determining the relationship between the current total power consumption (TPC) to the current total power availability (TPA). If TPC/TPA is less than a first threshold, supplying full power to additional nodes one-by-one on a prioritized basis; and if TPC/TPA is greater than a second threshold, higher than said first threshold, disconnecting power to individual nodes one-by-one on a prioritized basis. However, if TPC/TPA is between said first and second thresholds, inquiring as to whether a new node requires power, and if a new node requires power and a node having a lower priority than the new node is currently receiving power, disconnecting the lower priority node from power and connecting the higher priority node to power.

Further in accordance with a preferred embodiment of the present invention the power supply distributor is operative to provide at least one of full or no functionality operation with emergency override to individual nodes in involuntary power management operation. Preferably the power supply distributor is operative in accordance with the following functionality in involuntary power management operation: sensing an emergency need for power at a given node, and thereafter assigning a highest priority to the given node.

Additionally in accordance with a preferred embodiment of the present invention the power supply distributor is operative to provide at least one of full or no functionality operation queue-controlled priority in involuntary power management. Preferably the power supply distributor is operative in accordance with the following functionality in involuntary power management operation: initially determining the total power available to it as well as the total power that it is currently supplying to all nodes, determining the relationship between the current total power consumption (TPC) to the current total power availability (TPA). If TPC/TPA is less than a first threshold, supplying full power to additional nodes one-by-one on a queue-controlled, prioritized basis; if TPC/TPA is greater than a second threshold, higher than said first threshold, disconnecting power to individual nodes one-by-one on a prioritized basis. However, if TPC/TPA is between said first and second thresholds, inquiring as to whether a new node requires power, and if a new node requires power, adding the new node to the bottom of the queue.

Further in accordance with a preferred embodiment of the present invention the power supply distributor is operative to provide at least one of full or no functionality operation on a time-sharing, prioritized basis in involuntary power management. Additionally or alternatively the power supply distributor is operative in accordance with the following functionality in involuntary power management operation: initially determining the total power available to it as well as the total power that it is currently supplying to all nodes; determining the relationship between the current total power consumption (TPC) to the current total power availability (TPA). If TPC/TPA is less than a first threshold, supplying full power to additional nodes one-by-one on a time-sharing, prioritized basis; if TPC/TPA is greater than a second threshold, greater than said first threshold, disconnecting power from individual nodes one-by-one on a prioritized basis. However, if TPC/TPA is between the first and second thresholds, inquiring as to whether a new node requires power; if a node having a lower priority, in the sense that it has been receiving power for a longer time, which is above a predetermined minimum time, is currently receiving power, disconnecting power from the lower priority node and connecting the higher priority node to power.

Additionally in accordance with a preferred embodiment of the present invention the power supply distributor is operative to provide advance notice to a node of a change in the power to be supplied thereto. Furthermore, the power supply distributor is operative to provide at least one of full and reduced functionality operation to individual nodes in involuntary power management operation. Preferably the power supply distributor is operative in accordance with at least some of the following functionality: initially determining the total power available to it as well as the total power that it is currently supplying to said nodes; determining the relationship between the current total power consumption (TPC) to the current total power availability (TPA). If TPC/TPA is less than a first threshold, supplying full power to additional nodes one-by-one on a prioritized basis; if TPC/TPA is greater than a second threshold, higher than said first threshold, reducing power to individual nodes one-by-one on a prioritized basis. However, if TPC/TPA is between the first and second thresholds, inquiring as to whether a new node requires power or a node requires additional power; and if a new node requires power or a node requires additional power and a node having a lower priority than the new node is currently receiving power, reducing power to the lower priority node and supplying power to the new node or increased power to a node requiring additional power.

Still further in accordance with a preferred embodiment of the present invention the power supply distributor is operative to provide at least one of full or reduced functionality operation with emergency override to individual nodes in involuntary power management operation. Additionally or alternatively the power supply distributor is operative in accordance with the following functionality in involuntary power management operation: sensing an emergency need for power at a given node; and thereafter assigning a highest priority to the given node.

Moreover in accordance with a preferred embodiment of the present invention the power supply distributor is operative to provide at least one of full or reduced functionality operation queue-controlled priority in involuntary power management. Preferably the power supply distributor is operative in accordance with the following functionality in involuntary power management operation: initially determining the total power available to it as well as the total power that it is currently supplying to all nodes; determining the relationship between the current total power consumption (TPC) to the current total power availability (TPA). If TPC/TPA is less than a first threshold, supplying power to additional nodes or additional power to nodes which currently receive power one-by-one on a queue-controlled, prioritized basis; if TPC/TPA is greater than a second threshold, higher than said first threshold, reducing power to individual nodes one-by-one on a prioritized basis. However, if TPC/TPA is between the first and second thresholds, inquiring as to whether a new node requires power or a node requires additional power; and if a new node requires power or a node requires additional power, adding the node to the bottom of the queue.

Further in accordance with a preferred embodiment of the present invention the power supply distributor is operative to provide at least one of full or reduced functionality operation on a time-sharing, prioritized basis in involuntary power management. Preferably the power supply distributor is operative in accordance with the following functionality in involuntary power management operation: initially determining the total power available to it as well as the total power that it is currently supplying to all nodes; determining the relationship between the current total power consumption (TPC) to the current total power availability (TPA). If TPC/TPA is less than a first threshold, supplying additional power to nodes or power to additional nodes one-by-one on a time-sharing, prioritized basis; if TPC/TPA is greater than a second threshold, greater than said first threshold, reducing power to individual nodes one-by-one on a prioritized basis. However, if TPC/TPA is between the first and second thresholds, inquiring as to whether a node requires additional power or a new node requires power; if a node having a lower priority, in the sense that it has been receiving power for a longer time, which is above a predetermined minimum time, is currently receiving power, reducing power to the lower priority node and supplying power to a higher priority node.

Additionally in accordance with a preferred embodiment of the present invention power supply distributor is operative to provide at least one of full and no functionality operation to individual nodes in voluntary power management operation. Preferably the power supply distributor is operative in accordance with at least some of the following functionality: initially determining the total power available to it in accordance with a power conservation program as well as the total power that it is currently supplying to said nodes; determining the relationship between the current total power consumption (TPC) to the current total power availability (TPA). If TPC/TPA is less than a first threshold, supplying full power to additional nodes one-by-one on a prioritized basis; if TPC/TPA is greater than a second threshold, higher than said first threshold, disconnecting power to individual nodes one-by-one on a prioritized basis. However, if TPC/TPA is between said first and second thresholds, inquiring as to whether a new node requires power, and if a new node requires power and a node having a lower priority than the new node is currently receiving power, disconnecting the lower priority node from power and connecting the higher priority node to power.

Further in accordance with a preferred embodiment of the present invention the power supply distributor is operative to provide at least one of full or no functionality operation with emergency override to individual nodes in voluntary power management operation. Preferably the power supply distributor is operative in accordance with the following functionality in voluntary power management operation: sensing an emergency need for power at a given node, and thereafter assigning a highest priority to the given node.

Moreover in accordance with a preferred embodiment of the present invention the power supply distributor is operative to provide at least one of full or no functionality operation queue-controlled priority in voluntary power management. Preferably the power supply distributor is operative in accordance with the following functionality in voluntary power management operation: initially determining the total power available to it in accordance with a power conservation program as well as the total power that it is currently supplying to all nodes; determining the relationship between the current total power consumption (TPC) to the current total power availability (TPA). If TPC/TPA is less than a first threshold, supplying full power to additional nodes one-by-one on a queue-controlled, prioritized basis; if TPC/TPA is greater than a second threshold, higher than said first threshold, disconnecting power to individual nodes one-by-one on a prioritized basis. However, if TPC/TPA is between the first and second thresholds, inquiring as to whether a new node requires power, and if a new node requires power, adding the new node to the bottom of the queue.

Additionally in accordance with a preferred embodiment of the present invention the power supply distributor is operative to provide at least one of full or no functionality operation on a time-sharing, prioritized basis in voluntary power management. Additionally or alternatively the power supply distributor is operative in accordance with the following functionality in voluntary power management operation: initially determining the total power available to it in accordance with a power conservation program as well as the total power that it is currently supplying to all nodes; determining the relationship between the current total power consumption (TPC) to the current total power availability (TPA). If TPC/TPA is less than a first threshold, supplying full power to additional nodes one-by-one on a time-sharing, prioritized basis, if TPC/TPA is greater than a second threshold, greater than said first threshold, disconnecting power from individual nodes one-by-one on a prioritized basis. However, if TPC/TPA is between said first and second thresholds, inquiring as to whether a new node requires power, if a node having a lower priority, in the sense that it has been receiving power for a longer time, which is above a predetermined minimum time, is currently receiving power, disconnecting power from the lower priority node and connecting the higher priority node to power.

Still further in accordance with a preferred embodiment of the present invention the power supply distributor is operative to provide at least one of full and reduced functionality operation to individual nodes in voluntary power management operation. Additionally or alternatively the power supply distributor is operative in accordance with at least some of the following functionality: initially determining the total power available to it in accordance with a power conservation program as well as the total power that it is currently supplying to said nodes; determining the relationship between the current total power consumption (TPC) to the current total power availability (TPA). If TPC/TPA is less than a first threshold, supplying full power to additional nodes one-by-one on a prioritized basis; if TPC/TPA is greater than a second threshold, higher than said first threshold, reducing power to individual nodes one-by-one on a prioritized basis. However, if TPC/TPA is between said first and second thresholds, inquiring as to whether a new node requires power or a node requires additional power, and if a new node requires power or a node requires additional power and a node having a lower priority than the new node is currently receiving power, reducing power to the lower priority node and supplying power to the new node or increased power to a node requiring additional power.

Moreover in accordance with a preferred embodiment of the present invention the power supply distributor is operative to provide at least one of full or reduced functionality operation with emergency override to individual nodes in voluntary power management operation. Preferably the power supply distributor is operative in accordance with the following functionality in voluntary power management operation: sensing an emergency need for power at a given node, and thereafter assigning a highest priority to the given node.

Still further in accordance with a preferred embodiment of the present invention the power supply distributor is operative to provide at least one of full or reduced functionality operation queue-controlled priority in voluntary power management. Preferably the power supply distributor is operative in accordance with the following functionality in voluntary power management operation: initially determining the total power available to it in accordance with a power conservation program as well as the total power that it is currently supplying to all nodes, determining the relationship between the current total power consumption (TPC) to the current total power availability (TPA). If TPC/TPA is less than a first threshold, supplying power to additional nodes or additional power to nodes which currently receive power one-by-one on a queue-controlled, prioritized basis; if TPC/TPA is greater than a second threshold, higher than said first threshold, reducing power to individual nodes one-by-one on a prioritized basis. However, if TPC/TPA is between said first and second thresholds, inquiring as to whether a new node requires power or a node requires additional power, and if a new node requires power or a node requires additional power, adding the node to the bottom of the queue.

Further in accordance with a preferred embodiment of the present invention the power supply distributor is operative to provide at least one of full or reduced functionality operation on a time-sharing, prioritized basis in voluntary power management. Preferably the power supply distributor is operative in accordance with the following functionality in voluntary power management operation: initially determining the total power available to it in accordance with a power conservation program as well as the total power that it is currently supplying to all nodes, determining the relationship between the current total power consumption (TPC) to the current total power availability (TPA). If TPC/TPA is less than a first threshold, supplying additional power to nodes or power to additional nodes one-by-one on a time-sharing, prioritized basis; if TPC/TPA is greater than a second threshold, greater than said first threshold, reducing power to individual nodes one-by-one on a prioritized basis. However, if TPC/TPA is between said first and second thresholds, inquiring as to whether a node requires additional power or a new node requires power, if a node having a lower priority, in the sense that it has been receiving power for a longer time, which is above a predetermined minimum time, is currently receiving power, reducing power to the lower priority node and supplying power to a higher priority node.

Preferably the power supply distributor includes a power management & control unit which monitors and controls the power supplied to various nodes via the communications cabling.

Additionally in accordance with a preferred embodiment of the present invention the power supply distributor includes a management workstation which is operative to govern the operation of the power management & control unit.

Preferably the management workstation governs the operation of multiple power management & control units.

Moreover in accordance with a preferred embodiment of the present invention the power management & control unit communicates with various nodes via a data communication concentrator thereby to govern their current mode of power usage.

Further in accordance with a preferred embodiment of the present invention the power management & control unit communicates with various nodes via control messages which are decoded at the nodes and are employed for controlling whether full or partial functionality is provided thereat.

Still further in accordance with a preferred embodiment of the present invention the power management & control unit senses that mains power to said power supply distributor is not available and sends a control message to cause nodes to operate in a backup or reduced power mode.

Preferably the node includes essential circuitry, which is required for both full functionality and reduced functionality operation, and non-essential circuitry, which is not required for reduced functionality operation.

Further in accordance with a preferred embodiment of the present invention the node includes a switch and a controller, controlling the operation of the switch which selectably operates the non-essential circuitry. Preferably the node also includes a power supply and wherein the controller is operative in response to an output from the power supply. Additionally or alternatively the node may also include a sensor and wherein said controller is operative in response to an input received from said sensor.

Further in accordance with a preferred embodiment of the present invention the sensor senses a voltage level of electrical power being supplied to the power supply. Furthermore the sensor also sensor senses a control signal transmitted thereto, via the communication cabling from the power supply distributor.

Still further in accordance with a preferred embodiment of the present invention the controller receives a control input from the power supply indicating that mains power is available, it operates the switch such that power is supplied to both the essential circuitry and the non-essential circuitry and when the controller receives a control input from the power supply indicating that mains power is not available, and the sensor indicates that sufficient power is available via the communications cabling, the controller operates the switch such that power is supplied to both the essential circuitry and the non-essential circuitry. Preferably the controller receives a control input from the power supply indicating that mains power is not available via the power supply, and the sensor indicates that sufficient power is not available, the controller operates the switch such that adequate power is supplied with highest priority to the essential circuitry and if additional power beyond that required by the essential circuitry is also available, it is supplied to the non-essential circuitry via the switch.

Additionally or alternatively the monitoring circuitry receives a user input indicating an intention to use the node or a control message via the communications cabling, indicating a need to operate in a full-functionality mode and is responsive thereto for causing the switch to cause said node circuitry to operate in a full-functionality mode.

Moreover in accordance with a preferred embodiment of the present invention the sensor senses a voltage level of electrical power being supplied to the at least one power supply.

Still further in accordance with a preferred embodiment of the present invention the sensor senses a control signal transmitted thereto via the communication cabling from the power supply distributor.

Additionally in accordance with a preferred embodiment of the present invention the node circuitry includes essential node circuitry and non-essential node circuitry. The switch also includes an essential node circuitry switch and a non-essential node circuitry switch. Preferably the controller receives a control input from the at least one power supply indicating that mains power is available, said controller operates the essential node circuitry switch and the non-essential node circuitry switch such that power is supplied to both the essential node circuitry and said non-essential node circuitry and when mains power is not available via the at least one power supply, but the sensor indicates that sufficient power is available via the communications cabling, the controller operates the essential node circuitry switch and the non-essential node circuitry switch such that power is supplied to both the essential node circuitry and the non-essential node circuitry.

Furthermore in accordance with a preferred embodiment of the present invention the controller receives a control input from the at least one power supply indicating that mains power is not available via the at least one power supply and the sensor indicates that sufficient power is not available, the controller operates the essential node circuitry switch such that adequate power is supplied with highest priority to the essential node circuitry and if additional power beyond that required by said essential node circuitry is also available, it is supplied to the non-essential node circuitry via said non-essential node circuitry switch.

Moreover in accordance with a preferred embodiment of the present invention the node is operative in one of three modes, a full-functionality mode when both the essential and non-essential node circuitry are operative, an essential functionality mode when the essential node circuitry is operative and a sleep functionality mode wherein at least part of the essential node circuitry is not operative.

Further in accordance with a preferred embodiment of the present invention the power supply provides limited back-up power. Additionally or alternatively the power supply enables intermittent operation of the node in situations where only very limited power may be transmitted over the communication cabling.

There is also provided with yet another preferred embodiment of the present invention a local area network power supply distributor for use in a local area network including a hub, a plurality of nodes and communication cabling connecting the plurality of nodes to a hub for providing digital communication therebetween, the power supply distributor being operative to provide at least some operating power to at least some of said plurality of nodes via the communication cabling.

Further in accordance with a preferred embodiment of the present invention the supply distributor is located within the hub.

Still further in accordance with a preferred embodiment of the present invention the power supply distributor is located outside the hub. Alternatively the power supply distributor is located partially within the hub and partially outside the hub.

Additionally in accordance with a preferred embodiment of the present invention the operating power supplied by the power supply distributor to at least some of the plurality nodes via the communication cabling includes backup power.

Still further in accordance with a preferred embodiment of the present invention the hub includes a data communication concentrator, the power supply distributor includes a combiner, and the communication cabling connects the data communication concentrator via the combiner to the nodes.

Moreover in accordance with a preferred embodiment of the present invention the hub includes a data communication concentrator and wherein the power supply distributor is also located within the hub.

Still further in accordance with a preferred embodiment of the present invention the hub includes a data communication concentrator and wherein said power supply distributor is also located within the hub and includes a power supply and a combiner, the combiner coupling power from the power supply to the communication cabling which also carries data from the data communication concentrator.

Preferably the combiner includes a plurality of couplers, each of which is connected to an output of the power supply.

Additionally in accordance with a preferred embodiment of the present invention the combiner includes a plurality of couplers and a plurality of filters, each coupler being connected via a filter to an output of the power supply.

Furthermore the combiner may also include a plurality of couplers and a plurality of filters and a plurality of smart power allocation and reporting circuits (SPEARs), each coupler being connected via a filter and a SPEAR to an output of the power supply.

Additionally in accordance with a preferred embodiment of the present invention the power supply distributor includes a power supply, and the power supply includes a power failure backup facility.

Still further in accordance with a preferred embodiment of the present invention the combiner includes a plurality of couplers and a plurality of filters, each coupler being connected via a filter to an output of the power supply.

Preferably the combiner includes a plurality of couplers and a plurality of filters and a plurality of smart power allocation and reporting circuits (SPEARs), each coupler being connected via a filter and a SPEAR to an output of the power supply.

Moreover in accordance with a preferred embodiment of the present invention the combiner includes a plurality of couplers and a plurality of filters, each coupler being connected via a filter to an output of a power supply.

Additionally the combiner may also include a plurality of couplers and a plurality of filters and a plurality of smart power allocation and reporting circuits (SPEARs), each coupler being connected via a filter and a SPEAR to an output of the power supply.

Furthermore the combiner may also include a plurality of couplers and a plurality of filters, each coupler being connected via a filter to an output of a power supply.

Moreover in accordance with a preferred embodiment of the present invention the power supply distributor is operative to provide electrical power along the communication cabling without unacceptable degradation of the digital communication.

Further in accordance with a preferred embodiment of the present invention the communication cabling includes at least one twisted wire pair connected to each node and wherein power is transmitted over a twisted wire pair along which data is also transmitted.

Preferably the power supply distributor includes a power supply interface and a power supply, the communication cabling connects the data communication concentrator via the power supply interface to the nodes, and the power supply interface includes a plurality of filters and a plurality of smart power allocation and reporting circuits (SPEARs), each filter being connected via a SPEAR to an output of the power supply.

Additionally in accordance with a preferred embodiment of the present invention the communication cabling includes at least two twisted wire pairs connected to each node and wherein power is transmitted over a twisted wire pair different from that along which data is transmitted.

Moreover in accordance with a preferred embodiment of the present invention the hub includes a data communication concentrator, the power supply distributor includes a power supply interface and a power supply, the communication cabling connects the data communication concentrator via the power supply interface to said nodes, and the power supply interface includes a plurality of filters and a plurality of smart power allocation and reporting circuits (SPEARs), each filter being connected via a SPEAR to an output of the power supply.

Still further in accordance with a preferred embodiment of the present invention the hub includes a data communication concentrator, the power supply distributor includes a combiner and a power supply, the communication cabling connects the data communication concentrator via the combiner to the nodes, the combiner includes a plurality of couplers and a plurality of filters and a plurality of smart power allocation and reporting circuits (SPEARs), each coupler being connected via a filter and a SPEAR to an output of the power supply, and each coupler has at least two ports, one of which is connected to a port of the data communication concentrator and the other of which is connected, via communication cabling, to one of the plurality of nodes.

Additionally in accordance with a preferred embodiment of the present invention the hub includes a data communication concentrator, the power supply distributor includes a combiner, a management and control unit and a power supply, the communication cabling connects said data communication concentrator via the combiner to the nodes, the combiner includes a plurality of couplers and a plurality of filters and a plurality of smart power allocation and reporting circuits (SPEARs), each coupler being connected via a filter and a SPEAR to an output of the power supply, and the SPEAR is operative to report to the management and control unit the current consumption of a node connected thereto.

Still further in accordance with a preferred embodiment of the present invention the hub includes a data communication concentrator, the power supply distributor includes a combiner and a power supply, the communication cabling connects the data communication concentrator via the combiner to the nodes, the combiner includes a plurality of couplers and a plurality of filters and a plurality of smart power allocation and reporting circuits (SPEARs), each coupler being connected via a filter and a SPEAR to an output of the power supply, and the SPEAR is operative to limit the maximum current supplied to a node connected thereto.

Still further in accordance with a preferred embodiment of the present invention the hub includes a data communication concentrator, the power supply distributor includes a combiner and a power supply, the communication cabling connects the data communication concentrator via the combiner to the nodes, the combiner includes a plurality of couplers and a plurality of filters and a plurality of smart power allocation and reporting circuits (SPEARs), each coupler being connected via a filter and a SPEAR to an output of the power supply, and the SPEAR is operative to automatically disconnect a node connected thereto displaying an overcurrent condition following elapse of a programmably predetermined period of time.

Additionally in accordance with a preferred embodiment of the present invention the hub includes a data communication concentrator, the power supply distributor includes a combiner and a power supply, the communication cabling connects the data communication concentrator via the combiner to the nodes, the combiner includes a plurality of couplers and a plurality of filters and a plurality of smart power allocation and reporting circuits (SPEARs), each coupler being connected via a filter and a SPEAR to an output of the power supply, and the SPEAR is operative to automatically disconnect power from a node connected thereto displaying an overcurrent condition following elapse of a programmably predetermined period of time and to automatically reconnect the node to power thereafter when it no longer displays the overcurrent condition.

Still further in accordance with a preferred embodiment of the present invention the hub includes a data communication concentrator, the power supply distributor includes a combiner and a power supply, the communication cabling connects the data communication concentrator via the combiner to the nodes, the combiner includes a plurality of couplers and a plurality of filters and a plurality of smart power allocation and reporting circuits (SPEARs), each coupler being connected via a filter and a SPEAR to an output of the power supply, and the SPEAR includes a current sensor which receives a voltage input Vin from a power supply and generates a signal which is proportional to the current passing therethrough, and a multiplicity of comparators receiving the signal from the current sensor and also receiving a reference voltage Vref from respective reference voltage sources.

Preferably the reference voltage sources are programmable reference voltage sources and receive control inputs from management & control circuits.

Additionally the outputs of the multiplicity of comparators may be supplied to a current limiter and switch which receives input voltage Vin via the current sensor and provides a current-limited voltage output Vout.

Furthermore the outputs of the comparators may be supplied to management & control circuits to serve as monitoring inputs providing information regarding the DC current flowing through the SPEAR.

Still further in accordance with a preferred embodiment of the present invention the hub includes a data communication concentrator, the power supply distributor includes a combiner and a power supply, the communication cabling connects the data communication concentrator via the combiner to the nodes, and the combiner includes plurality of couplers each of which includes at least a pair of transformers, each having a center tap at a secondary thereof via which the DC voltage is fed to each wire of a twisted pair connected thereto.

Additionally in accordance with a preferred embodiment of the present invention the hub includes a data communication concentrator, the power supply distributor includes a combiner and a power supply, the communication cabling connects the data communication concentrator via the combiner to the nodes, and the combiner includes a plurality of couplers each of which includes at least one transformer, which is characterized in that it includes a secondary which is split into two separate windings and a capacitor which is connected between the two separate windings and which effectively connects the two windings in series for high frequency signals, but effectively isolates the two windings for DC.

Further in accordance with a preferred embodiment of the present invention the hub includes a data communication concentrator, the power supply distributor includes a combiner and a power supply, the communication cabling connects the data communication concentrator via the combiner to the nodes, and the combiner includes a pair of capacitors which effectively block DC from reaching the data communication concentrator.

Still further in accordance with a preferred embodiment of the present invention the hub includes a data communication concentrator, the power supply distributor includes a combiner and a power supply, the communication cabling connects the data communication concentrator via the combiner to the nodes, and the combiner comprises two pairs of capacitors which effectively block DC from reaching the data communication concentrator.

Additionally in accordance with a preferred embodiment of the present invention the hub includes a data communication concentrator, the power supply distributor includes a combiner and a power supply, the communication cabling connects the data communication concentrator via the combiner to the nodes, and the combiner comprises a self-balancing capacitor-less and transformer-less common mode coupling circuit.

Preferably the power supply distributor includes power management functionality.

Additionally the power supply distributor may include a power management & control unit which monitors and controls the power supplied to various nodes via the communications cabling.

Furthermore the power supply distributor may include a management workstation which is operative to govern the operation of said power management & control unit.

Furthermore in accordance with a preferred embodiment of the present invention the management workstation governs the operation of multiple power management & control units.

Preferably the power management & control unit communicates with various nodes via a data communication concentrator thereby to govern their current mode of power usage.

Additionally in accordance with a preferred embodiment of the present invention the power management & control unit communicates with various nodes via control messages which are decoded at the nodes and are employed for controlling whether full or partial functionality is provided thereat.

Additionally the power management & control unit senses that mains power to the power supply distributor is not available and sends a control message to cause nodes to operate in a backup or reduced power mode.

Furthermore the node includes essential circuitry, which is required for both full functionality and reduced functionality operation, and non-essential circuitry, which is not required for reduced functionality operation.

There is further provided in accordance with a preferred embodiment of the present invention a method for setting-up a local area network including the steps of providing a hub, providing a plurality of nodes, connecting the plurality of nodes to the hub for providing data communication by using a communication cable, and operating a power supply distributor to provide at least some operating power to at least some of the plurality of nodes via said communication cable.

There is also provided in accordance with a preferred embodiment of the present invention a method for setting-up a local area network node in a local area network including the steps of providing a hub, providing a plurality of nodes, connecting the plurality of nodes to the hub for providing digital communication by using communication cabling, and operating a power supply distributor to provide at least some operating power to at least some of the plurality of nodes via said hub and said communication cabling, the local area network node including a communications cabling interface receiving both power and data and separately providing power to a node power input and data to a node data input.

There is also provided in accordance with yet another preferred embodiment of the present invention a method for setting-up a local area network including the steps of providing a hub, providing a plurality of nodes, connecting the plurality of nodes to the hub for providing data communication via communication cabling, and operating a power supply distributor to provide at least some operating power to at least some of the plurality of nodes via the communication cabling, the power supply distributor including power management functionality.

There is provided in accordance with another preferred embodiment of the present invention a method for setting-up a local area network power supply distributor for use in a local area network comprising the steps of providing including a hub, providing a plurality of nodes and communication cabling connecting the plurality of nodes to a hub for providing digital communication therebetween, the power supply distributor being operative to provide at least some operating power to at least some of the plurality of nodes via the communication cabling.

There is provided in accordance with the present invention a system for distributing electrical power over a data communication cabling infrastructure to one or more electrical power consuming network devices comprising a data communications cabling network, a source of electrical power, at least one power/data combiner coupled to the source of electrical power and to the data communications cabling network, the at least one power/data combiner operative to generate and inject a low frequency power signal onto a data communications signal received from the data communications cabling network so as to yield a combined power/data signal which is subsequently output onto the data communications cabling network and at least one power/data splitter adapted to receive the combined power/data signal and to extract and separate therefrom the original data communication signal and the low frequency power signal.

The data communications network may comprise an Ethernet based Local Area Network (LAN). The power/data combiner can be implemented as a standalone unit, integrated into a Local Area Network (LAN) hub or into a Local Area Network (LAN) switch.

The power/data combiner may comprise a plurality of data only input ports and a plurality of data plus power output ports, each data in port and data plus power output port forming a separate channel. In addition, the power/data combiner is adapted to receive electrical from an AC mains power receptacle, an uninterruptable Power Supply (UPS) or an another power/data combiner.

The power/data combiner comprises means for filtering high frequency noise and ripple, for sensing the current in the low frequency power signal, for connecting and disconnecting the low frequency power signal to and from the combined output power/data signal and for detecting no-load and overload conditions on the combined output power/data signal.

The system further comprises a management unit for monitoring and provisioning, via the data communications cabling network, the power/data combiners and power/data splitters located in the data communications cabling network.

The power/data splitter can be implemented as a standalone unit or integrated into a network device. The power/data combiner may comprise an AC/DC or DC/DC power converter for converting the extracted low frequency power signal into one or more output voltages.

There is also provided in accordance with the present invention a method for distributing electrical power over a data communication cabling infrastructure to one or more electrical power consuming network devices, the method comprising the steps of generating a low frequency power signal from a source of electrical power, injecting the low frequency power signal into a data communications signal being carried over the data communications cabling network so as to generate a combined power/data signal, transmitting the combined power/data signal onto the data communications cabling network, receiving the combined power/data signal carried over the data communication cabling network and splitting the combined power/data signal so as to yield the data communication signal separated from the low frequency power signal.

Further in accordance with a preferred embodiment of the present invention, the data communications network includes an Ethernet based Local Area Network (LAN).

Still further in accordance with a preferred embodiment of the present invention, the source of electrical power includes an AC mains power receptacle. The source of electrical power may also include an uninterruptable Power Supply (UPS).

Additionally in accordance with a preferred embodiment of the present invention, the method, further includes the steps of: filtering high frequency noise and ripple from said low frequency power signal, sensing the current in said low frequency power signal, connecting and disconnecting the low frequency power signal to and from the combined output power/data signal, detecting no-load and overload conditions on said combined output power/data signal, and converting the extracted low frequency power signal into one or more output voltages.

There is further provided in accordance with the present invention a system for distributing electrical power over a data communication cabling infrastructure to one or more electrical power consuming network devices including a data communications cabling network, a source of electrical power, power supply means for generating a low frequency power signal from the source of electrical power, combiner means coupled to the data communications cabling network, the combiner means for injecting the low frequency power signal onto a data communications signal being carried over the data communications cabling network so as to yield a combined power/data signal, regulator means for regulating the injection of the low frequency power signal onto the data communications signal, the regulation including, but not limited to, ceasing the injection of the low frequency power signal and limiting its current, extraction means for extracting the low frequency power signal from the combined power/data signal and for outputting the original data communication signal and the low frequency power signal.

Further in accordance with a preferred embodiment of the present invention the data communications network includes an Ethernet based Local Area Network (LAN).

Still further in accordance with a preferred embodiment of the present invention the power supply device is adapted to receive electrical from an AC mains power receptacle. The power supply device may also be adapted to receive electrical from an uninterruptable Power Supply (UPS).

Additionally in accordance with a preferred embodiment of the present invention combiner device includes means for filtering high frequency noise and ripple.

Moreover in accordance with a preferred embodiment of the present invention the regulator device includes means for sensing the current in the low frequency power signal.

Additionally in accordance with a preferred embodiment of the present invention the regulator device includes means for detecting no-load and overload conditions on the combined output power/data signal.

Still further in accordance with a preferred embodiment of the present invention, the system also includes a management unit for monitoring and provisioning, via the data communications cabling network, the power/data combiners and power/data splitters located in the data communications cabling network.

Further in accordance with a preferred embodiment of the present invention the extraction device includes an AC/DC power converter for converting the extracted low frequency power signal into one or more output voltages.

Moreover in accordance with a preferred embodiment of the present invention the extraction device includes an DC/DC power converter for converting the extracted low frequency power signal into one or more output voltages.

### BRIEF DESCRIPTION OF THE DRAWINGS

The present invention will be understood and appreciated more fully from the following detailed description, taken in conjunction with the drawings in which:
Figs. 1A and 1B are simplified block diagram illustrations of two alternative embodiments of a local area network including a power supply operative to provide electrical power to local area network nodes over communication cabling constructed and operative in accordance with one preferred embodiment of the present invention;
Figs. 2A and 2B are simplified block diagram illustrations of two alternative embodiments of a local area network including a power supply operative to provide electrical power to local area network nodes over communication cabling constructed and operative in accordance with another preferred embodiment of the present invention;
Figs. 3A & 3B are simplified block diagrams of hubs useful in the embodiments of Figs. 1A and 1B respectively;
Figs. 4A & 4B are simplified block diagrams of hubs and power supply subsystems useful in the embodiments of Figs. 2A & 2B respectively;
Fig. 5 is a simplified block diagram illustration of a smart power allocation and reporting circuit useful in the embodiments of Figs. 3A, 3B, 4A and 4B;
Fig. 6 is a simplified schematic illustration of the embodiment of Fig. 5;
Figs. 7A & 7B are simplified block diagram illustrations of LAN node interface circuits useful in the embodiments of Figs. 1A & 2A and Figs. 1B & 2B respectively;
Figs. 8A - 8G are simplified block diagram and schematic illustrations of various embodiments of a combiner useful in the embodiments of Figs. 3A and 4A;
Figs. 9A - 9G are simplified block diagram and schematic illustrations of various embodiments of a separator useful in the embodiments of Figs. 1A, 2A & 7A in combination with combiners of Figs. 8A - 8G;
Figs. 10A & 10B are simplified block diagram illustrations of two alternative embodiments of a communications network including power supply and management over communications cabling constructed and operative in accordance with a preferred embodiment of the present invention;
Figs. 11A & 11B are simplified block diagram illustrations of two alternative embodiments of a local area network including power supply and management unit operative to provide electrical power to local area network nodes over communication cabling;
Figs. 12A & 12B are simplified block diagram illustrations of a hub useful in the embodiments of Figs. 10A & 10B respectively;
Figs. 13A & 13B are simplified block diagram illustrations of a hub and a power supply and management subsystem useful in the embodiments of Fig. 11A & 11B respectively;
Figs. 14A & 14B are simplified block diagrams of two different node configurations useful in the embodiments of Figs. 10A, 10B, 11A & 11B;
Fig. 15 is a simplified block diagram of a node configuration which combines the features shown in Figs. 14A & 14B;
Fig. 16 is a generalized flowchart illustrating power management in both normal operation and reduced power modes of the networks of Figs. 10A, 10B, 11A & 11B;
Fig. 17 is a generalized flowchart illustrating one step in the flowchart of Fig. 16;
Figs. 18A and 18B together are a generalized flowchart illustrating a preferred embodiment of the interrogation and initial power supply functionality which appears in Fig. 17;
Figs. 19A, 19B, 19C and 19D are generalized flowcharts each illustrating one possible mechanism for full or no functionality operation in an involuntary power management step in the flowchart of Fig. 16;
Figs. 20A, 20B, 20C and 20D are generalized flowcharts each illustrating one possible mechanism for full or reduced functionality operation in an involuntary power management step in the flowchart of Fig. 16;
Figs. 21A, 21B, 21C and 21D are generalized flowcharts each illustrating one possible mechanism for node initiated sleep mode operation in a voluntary power management step in the flowchart of Fig. 16;
Figs. 22A, 22B, 22C and 22D are generalized flowcharts each illustrating one possible mechanism for hub initiated sleep mode operation in a voluntary power management step in the flowchart of Fig. 16;
Figs. 23A, 23B, 23C and 23D are generalized flowcharts each illustrating one possible mechanism for full or no functionality prioritized operation in a voluntary power management step in the flowchart of Fig. 16;
Figs. 24A, 24B, 24C and 24D are generalized flowcharts each illustrating one possible mechanism for full or reduced functionality prioritized operation in a voluntary power management step in the flowchart of Fig. 16.
Fig. 25 is a block diagram illustrating an example prior art data communications network wherein network devices are coupled to the AC main utility power;
Figs. 26A and 26B are a block diagram illustrating an example data communications system constructed in accordance with the present invention wherein network devices receive electrical and network connectivity over the same cable;
Fig. 27 is a block diagram illustrating a power/data combiner unit for placing electrical power onto the data communications infrastructure; and
Fig. 28 is a block diagram illustrating a power/data splitter unit for separating electrical power form the data communications infrastructure.

### DETAILED DESCRIPTION OF PREFERRED EMBODIMENTS

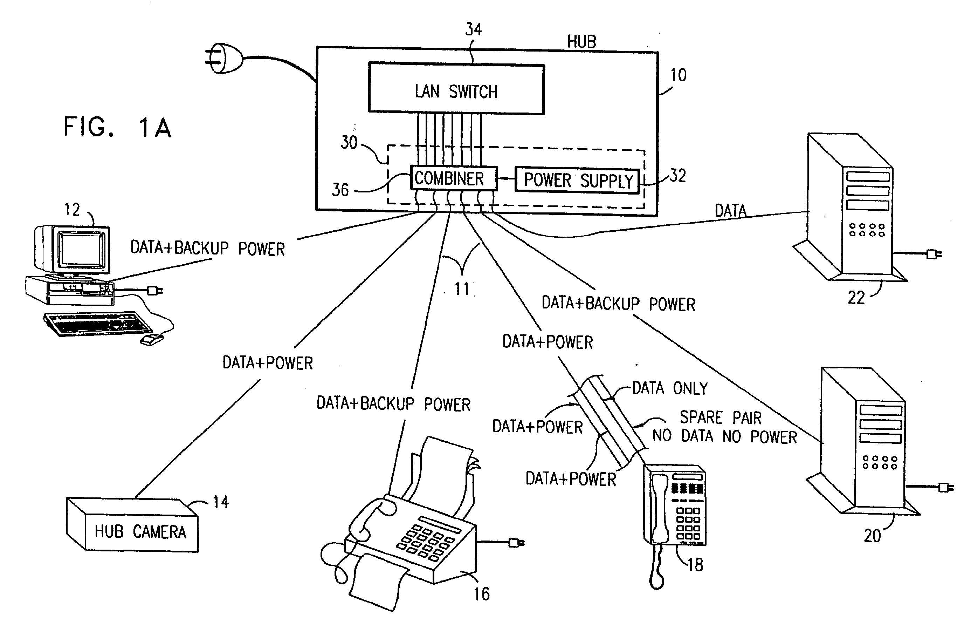

Reference is now made to Fig. 1A, which is a simplified block diagram illustration of a local area network constructed and operative in accordance with a preferred embodiment of the present invention. As seen in Fig. 1A, there is provided a local area network (LAN) comprising a hub 10 which is coupled, by cabling 11, preferably a structured cabling system, to a plurality of LAN nodes, such as a desktop computer 12, a web camera 14, a facsimile machine 16, a LAN telephone, also known as an IP telephone 18, a computer 20 and a server 22.

Cabling 11 is preferably conventional LAN cabling having four pairs of twisted copper wires cabled together under a common jacket. In the embodiment of Fig. 1A, as will be described hereinbelow, at least one of the pairs of twisted copper wires is employed for transmitting both data and electrical power to nodes of the network. Typically two such pairs are employed for transmitting both data and electrical power along each line connecting a hub to each node, while one such pair carries data only and a fourth pair is maintained as a spare and carries neither data nor power.

In accordance with a preferred embodiment of the present invention there is provided a power supply subsystem 30 which is operative to provide at least some operating or backup power to at least some of said plurality of nodes via the hub 10 and the communication cabling connecting the hub to various LAN nodes.

In the illustrated embodiment of Fig. 1A, subsystem 30 is located within the hub 10 and includes a power supply 32 which supplies operating power and/or backup power to various LAN nodes via the communication cabling. The communication cabling connects a LAN switch 34 via a combiner 36 to the various LAN nodes. The combiner couples electrical power from the power supply 32 along the communication cabling to at least some of the LAN nodes. Bidirectional data communications from LAN switch 34 pass through the combiner 36, substantially without interference.

It is seen that the communication cabling 11 from the hub 10 to the desktop computer 12, facsimile machine 16 and computer 20 carries both data and backup power, while the communication cabling from the hub 10 to the hub camera 14 and LAN telephone 18 carries both data and operating power and the communication cabling from the hub to the server 22 carries only data, in a typically LAN arrangement constructed and operative in accordance with a preferred embodiment of the present invention.

It is a particular feature of the embodiment of Fig. 1A that both data and power are carried on the same twisted copper pair.

It is appreciated that each of the LAN nodes 12 - 20 which receives power over the communication cabling includes a separator for separating the electrical power from the data. In the illustrated embodiment of Fig. 1A, the separators are typically internal to the respective nodes and are not separately designated, it being appreciated that alternatively discrete separators may be employed.

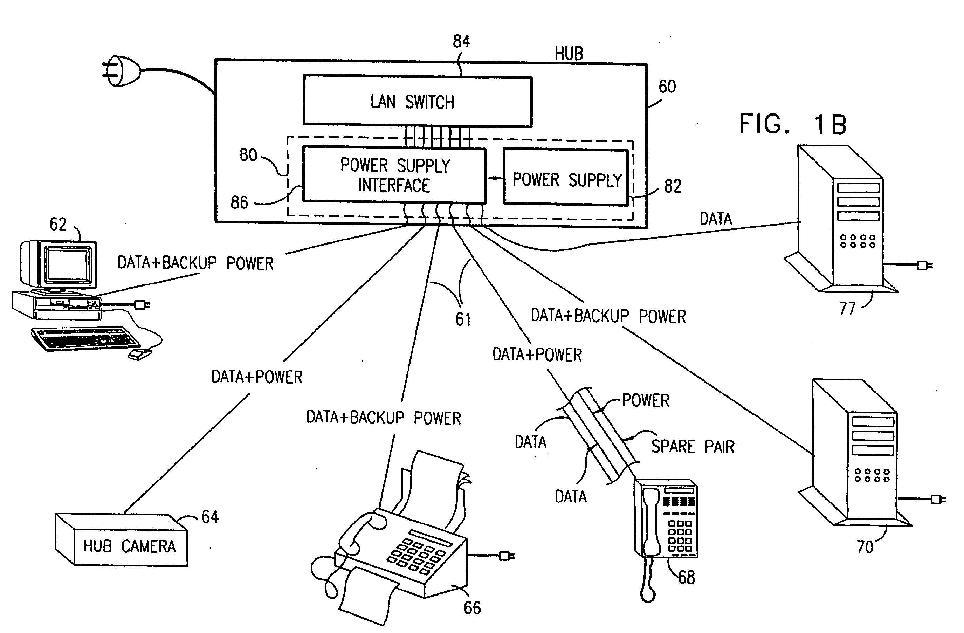

Reference is now made to Fig. 1B, which is a simplified block diagram illustration of a local area network constructed and operative in accordance with another preferred embodiment of the present invention. As seen in Fig. 1B, there is provided a local area network (LAN) comprising a hub 60 which is coupled, by cabling 61, preferably a structured cabling system, to a plurality of LAN nodes, such as a desktop computer 62, a web camera 64, a facsimile machine 66, a LAN telephone, also known as an IP telephone 68, a computer 70 and a server 72.

Cabling 61 is preferably conventional LAN cabling having four pairs of twisted copper wires cabled together under a common jacket. In the embodiment of Fig. 1B, in contrast to the arrangement described above with respect to Fig. 1A and as will be described hereinbelow, at least one of the pairs of twisted copper wires is employed only for transmitting electrical power to nodes of the network and at least one of the pairs of twisted copper wires is employed only for transmitting data. Typically two such pairs are employed for transmitting data only and two such pairs are employed only for supplying electrical power along each line connecting a hub to each node.

In accordance with a preferred embodiment of the present invention there is provided a power supply subsystem 80 which is operative to provide at least some operating or backup power to at least some of said plurality of nodes via the hub 60 and the communication cabling 61 connecting the hub to various LAN nodes.

In the illustrated embodiment of Fig. 1B, subsystem 80 is located within the hub 60 and includes a power supply 82 which supplies operating power and/or backup power to various LAN nodes via the communication cabling. The communication cabling connects a LAN switch 84 via a power supply interface 86 to the various LAN nodes. The power supply interface 86 distributes electrical power from the power supply 82, along twisted pairs of the communication cabling 61 which are not used for carrying data, to at least some of the LAN nodes. Bidirectional data communications from LAN switch 84 pass through the power supply interface 86, substantially without interference.

It is seen that the communication cabling 61 from the hub 60 to the desktop computer 62, facsimile machine 66 and computer 70 carries both data and backup power along separate twisted pairs, while the communication cabling 61 from the hub 60 to the hub camera 64 and LAN telephone 68 carries both data and operating power along separate twisted pairs and the communication cabling 61 from the hub 60 to the server 72 carries only data, in a typically LAN arrangement constructed and operative in accordance with a preferred embodiment of the present invention.

It is a particular feature of the embodiment of Fig. 1B that data and power are carried on separate twisted copper pairs of each communication cabling line.

It is appreciated that each of the LAN nodes 62 - 70 which receives power over the communication cabling 61 includes a connector for connecting the twisted pairs carrying electrical power to a node power supply and separately connecting the twisted pairs carrying data to a data input of the node. In the illustrated embodiment of Fig. 1B, the connectors are typically internal to the respective nodes and are not separately designated, it being appreciated that alternatively discrete connectors may be employed.

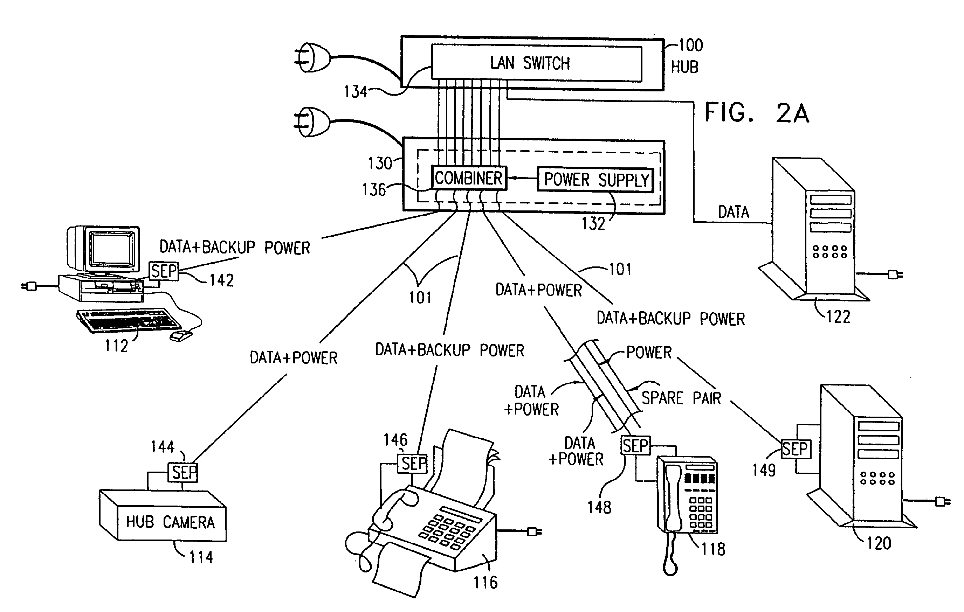

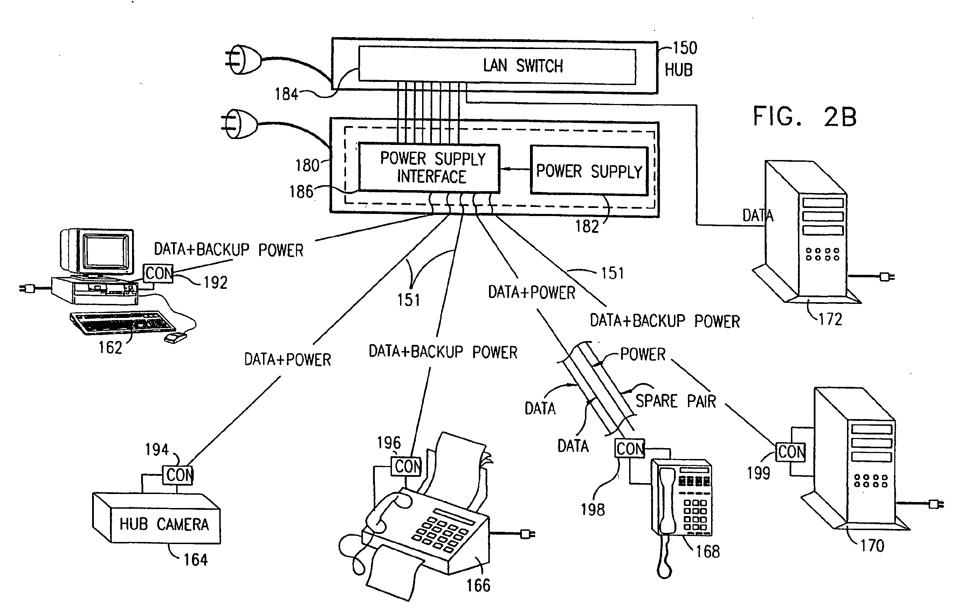

It is appreciated that Figs. 1A and 1 B illustrates two embodiments of a system providing electric power to plural LAN nodes via a hub and communication cabling connecting the hub to various LAN nodes. Another two embodiments of a system providing electric power to plural LAN nodes via a hub and communication cabling connecting the hub to various LAN nodes are illustrated in Figs. 2A & 2B. Figs. 2A & 2B illustrate a local area network including a power supply operative to provide electrical power to local area network nodes over communication cabling.

In the illustrated embodiment of Fig. 2A, a conventional hub 100 does not provide electrical power over the communication cabling 101 and a power supply subsystem 130 is located externally of hub 100 and includes a power supply 132 which supplies operating power and/or backup power to various LAN nodes via the communication cabling 101. The communication cabling connects a LAN switch 134 of conventional hub 100 to a combiner 136 in power supply subsystem 130 and connects the combiner to the various LAN nodes. The combiner 136 provides electrical power from the power supply 132 along the communication cabling to at least some of the LAN nodes. Bidirectional data communications from LAN switch 134 pass through the combiner 136, substantially without interference.

Cabling 101 is preferably conventional LAN cabling having four pairs of twisted copper wires cabled together under a common jacket. In the embodiment of Fig. 2A, as will be described hereinbelow, at least one of the pairs of twisted copper wires is employed for transmitting both data and electrical power to nodes of the network. Typically two such pairs are employed for transmitting both data and electrical power along each line connecting the power supply sub-system 130 to each node, while one such pair carries data only and a fourth pair is maintained as a spare and carries neither data nor power.

It is seen that the communication cabling 101 from the power supply sub-system 130 to the desktop computer 112, facsimile machine 116 and computer 120 carries both data and backup power, while the communication cabling from the power supply sub-system 130 to the hub camera 114 and LAN telephone 118 carries both data and operating power and the communication cabling from the hub 100 to the server 122 carries only data and may, but need not pass through subsystem 130, in a typically LAN arrangement constructed and operative in accordance with a preferred embodiment of the present invention.

It is a particular feature of the embodiment of Fig. 2A that both data and power are carried on the same twisted copper pair.

In the illustrated embodiment of Fig. 2A, each of the LAN nodes 112 - 120 which receives power is provided with an external separator for separating the data from the electrical power coupled to the communication cabling. The external separators associated with respective nodes 112 - 120 are designated by respective reference numbers 142 - 149. Each such separator has a communication cabling input and separate data and power outputs. It is appreciated that some or all of the nodes 112 - 120 may alternatively be provided with internal separators and that some or all of the nodes 112 - 120 may be provided with external separators.

It is appreciated that in addition to the LAN nodes described hereinabove, the present invention is useful with any other suitable nodes such as, for example, wireless LAN access points, emergency lighting system elements, paging loudspeakers, CCTV cameras, alarm sensors, door entry sensors, access control units, laptop computers, network elements such as hubs, switches and routers, monitors and memory backup units for PCs and workstations.

In the illustrated embodiment of Fig. 2B, a conventional hub 150 does not provide electrical power over the communication cabling 151 and a power supply subsystem 180 is located externally of hub 150 and includes a power supply 182 which supplies operating power and/or backup power to various LAN nodes via the communication cabling 151. The communication cabling connects a LAN switch 184 of conventional hub 150 to a power supply interface 186 in power supply subsystem 180 and connects the power supply interface 186 to the various LAN nodes. The power supply interface distributes electrical power from the power supply 182 along the communication cabling to at least some of the LAN nodes. Bidirectional data communications from LAN switch 184 pass through the power supply interface 186, substantially without interference.

Cabling 151 is preferably conventional LAN cabling having four pairs of twisted copper wires cabled together under a common jacket. In the embodiment of Fig. 2B, in contrast to the arrangement described above with respect to Fig. 2A and as will be described hereinbelow, at least one of the pairs of twisted copper wires is employed only for transmitting electrical power to nodes of the network and at least one of the pairs of twisted copper wires is employed only for transmitting data. Typically two such pairs are employed for transmitting data only and two such pairs are employed only for supplying electrical power along each line connecting a hub to each node.

It is seen that the communication cabling 151 from the hub 150 to the desktop computer 162, facsimile machine 166 and computer 170 carries both data and backup power, while the communication cabling from the hub 150 to the hub camera 164 and LAN telephone 168 carries both data and operating power and the communication cabling from the hub 150 to the server 172 carries only data and may, but need not pass through subsystem 180, in a typically LAN arrangement constructed and operative in accordance with a preferred embodiment of the present invention.

It is a particular feature of the embodiment of Fig. 2B that data and power are carried on separate twisted copper pairs of each communication cabling line.

In the illustrated embodiment of Fig. 2B, each of the LAN nodes 162 - 170 which receives power is provided with an external connector for separately providing data and electrical power from the communication cabling. The external connector associated with respective nodes 162 - 170 are designated by respective reference numbers 192 - 199. Each such connector has a communication cabling input and separate data and power outputs. It is appreciated that some or all of the nodes 162 - 170 may alternatively be provided with internal connectors and that some or all of the nodes 162 - 170 may be provided with external connectors.

It is appreciated that in addition to the LAN nodes described hereinabove, the present invention is useful with any other suitable nodes such as, for example, wireless LAN access points, emergency lighting system elements, paging loudspeakers, CCTV cameras, alarm sensors, door entry sensors, access control units, laptop computers, network elements, such as hubs, switches and routers, monitors and memory backup units for PCs and workstations.

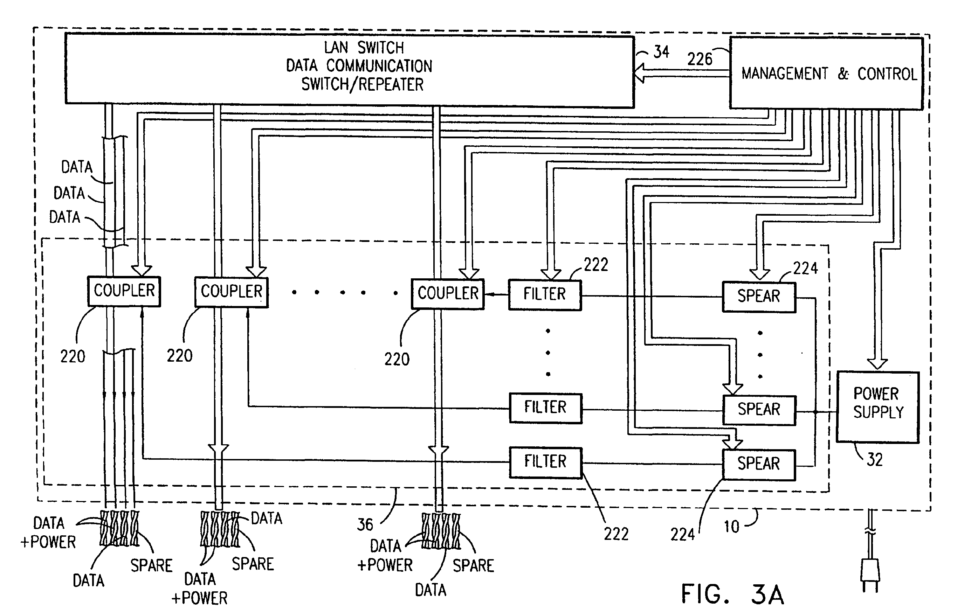

Reference is now made to Fig. 3A, which is a simplified block diagram of a hub, such as hub 10, useful in the embodiment of Fig. 1A. Hub 10 preferably comprises a conventional, commercially available, LAN switch 34 which functions as a data communication switch/repeater and is coupled to combiner 36. Combiner 36 typically comprises a plurality of couplers 220, each of which is connected via a filter 222 to a smart power allocation and reporting circuit (SPEAR) 224. Each SPEAR 224 is connected to power supply 32 for receiving electrical power therefrom. It is appreciated that power supply 32 may be physically located externally of the hub 10. Power supply 32 may be provided with a power failure backup facility, such as a battery connection.

Each coupler 220 has two ports, one of which is preferably connected to a port of LAN switch 34 and the other of which is preferably connected, via communication cabling, to a LAN node.

Couplers 220 are preferably operative to couple electrical power to the communication cabling substantially without interfering with the data communication therealong.

Filters 222 are preferably operative to avoid unwanted interport and interpair coupling, commonly known as "crosstalk" and to block noise from the power supply 32 from reaching the communication cabling. Alternatively filters 222 need not be provided.

A central management and control subsystem 226, typically embodied in a microcontroller, preferably controls the operation of the power supply 32, the LAN switch 34, the couplers 220, the filters 222 and the SPEARs 224.

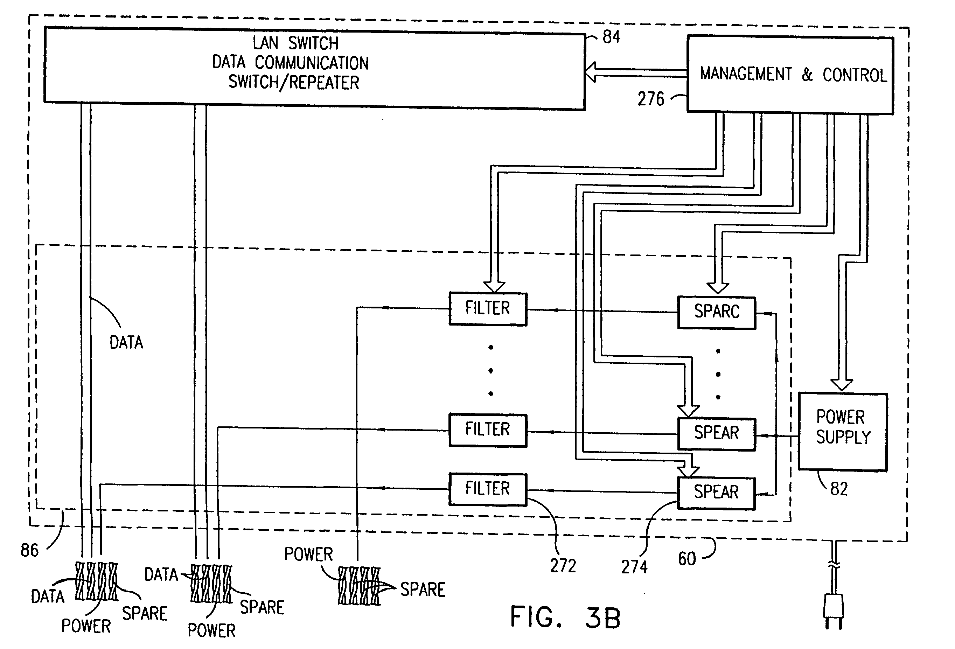

Reference is now made to Fig. 3B, which is a simplified block diagram of a hub, such as hub 60, useful in the embodiment of Fig. 1B. Hub 60 preferably comprises a conventional, commercially available, LAN switch 84 which functions as a data communication switch/repeater and is coupled to power supply interface 86. Power supply interface 86 typically comprises a plurality of filters 272, each connected to a smart power allocation and reporting circuit (SPEAR) 274. Each SPEAR 274 is connected to power supply 82 for receiving electrical power therefrom. It is appreciated that power supply 82 may be physically located externally of the hub 60. Power supply 82 may be provided with a power failure backup facility, such as a battery connection.

Filters 272 are preferably operative to avoid unwanted interport coupling, commonly known as "crosstalk" and to block noise from the power supply 82 from reaching the communication cabling.

A central management and control subsystem 276, typically embodied in a microcontroller, preferably controls the operation of the power supply 82, the LAN switch 84, the filters 272 and the SPEARs 274.

It is seen that in the embodiment of Fig. 3B, couplers are not provided inasmuch as power and data are transmitted over separate twisted pairs. The data carried on conductors via the power supply interface is substantially unaffected by the operation of the power supply interface.

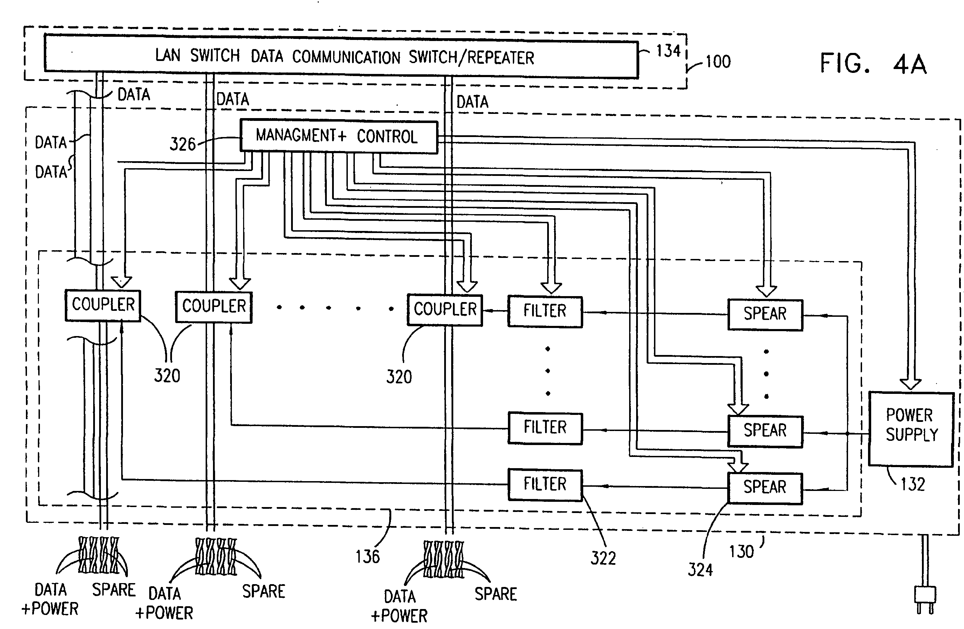

Reference is now made to Fig. 4A, which is a simplified block diagram of hub 100 and the power supply subsystem 130 employed in the embodiment of Fig. 2A. Hub 100 preferably comprises a conventional, commercially available, LAN switch 134 which functions as a data communication switch/repeater and is coupled to combiner 136 forming part of power supply subsystem 130. Combiner 136 typically comprises a plurality of couplers 320, each of which is connected via a filter 322 to a smart power allocation and reporting circuit (SPEAR) 324. Each SPEAR 324 is connected to power supply 132 (Fig. 2A) for receiving electrical power therefrom. It is appreciated that power supply 132 may be physically located externally of the power supply subsystem 130. Power supply 132 may be provided with a power failure backup facility, such as a battery connection.

Each coupler 320 has two ports, one of which is preferably connected to a port of LAN switch 134 and the other of which is preferably connected, via communication cabling, to a LAN node.

Couplers 320 are preferably operative to couple electrical power to the communication cabling substantially without interfering with the data communication therealong.

Filters 322 are preferably operative to avoid unwanted interport and interpair coupling, commonly known as "crosstalk" and to block noise from the power supply 132 from reaching the communication cabling.

A central management and control subsystem 326, typically embodied in a microcontroller, preferably controls the operation of the power supply 132, the couplers 320, the filters 322 and the SPEARs 324.

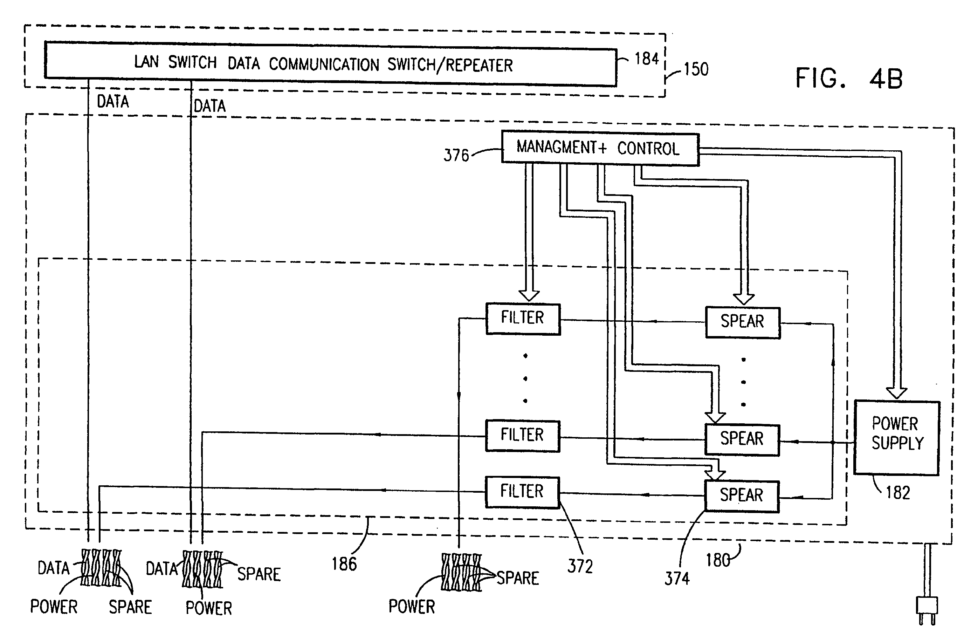

Reference is now made to Fig. 4B, which is a simplified block diagram of hub 150 and the power supply subsystem 180 employed in the embodiment of Fig. 2B. Hub 150 preferably comprises a conventional, commercially available, LAN switch 184 which functions as a data communication switch/repeater and is coupled to power supply interface 186 forming part of power supply subsystem 180. Power supply interface 186 typically comprises a plurality of filters 372 each coupled to a smart power allocation and reporting circuit (SPEAR) 374. Each SPEAR 374 is connected to power supply 182 (Fig. 2B) for receiving electrical power therefrom. It is appreciated that power supply 182 may be physically located externally of the power supply subsystem 180. Power supply 182 may be provided with a power failure backup facility, such as a battery connection.

Filters 372 are preferably operative to avoid unwanted interport and interpair coupling, commonly known as "crosstalk" and to block noise from the power supply 182 from reaching the communication cabling.

A central management and control subsystem 376, typically embodied in a microcontroller, preferably controls the operation of the power supply 182, filters 372 and the SPEARs 374.

It is seen that in the embodiment of Fig. 4B, couplers are not provided inasmuch as power and data are transmitted over separate twisted pairs. The data carried on conductors via the power supply interface is substantially unaffected by the operation of the power supply interface.

It is appreciated that power supply 32 (Fig. 3A), power supply 82 (Fig. 3B), power supply 132 (Fig. 4A) and power supply 182 (Fig. 4B) provide output power to SPEARs 224 (Fig. 3A), SPEARs 274 (Fig. 3B), 324 (Fig. 4A) and 374 (Fig. 4B) respectively along a pair of conductors, one of which is designated as a positive conductor and indicated by (+) and the other of which is designated as a negative conductor and indicated by (-). The voltages supplied to the respective positive and negative conductors are designated respectively as +Vin and -Vin. The difference therebetween is designated as Vin.

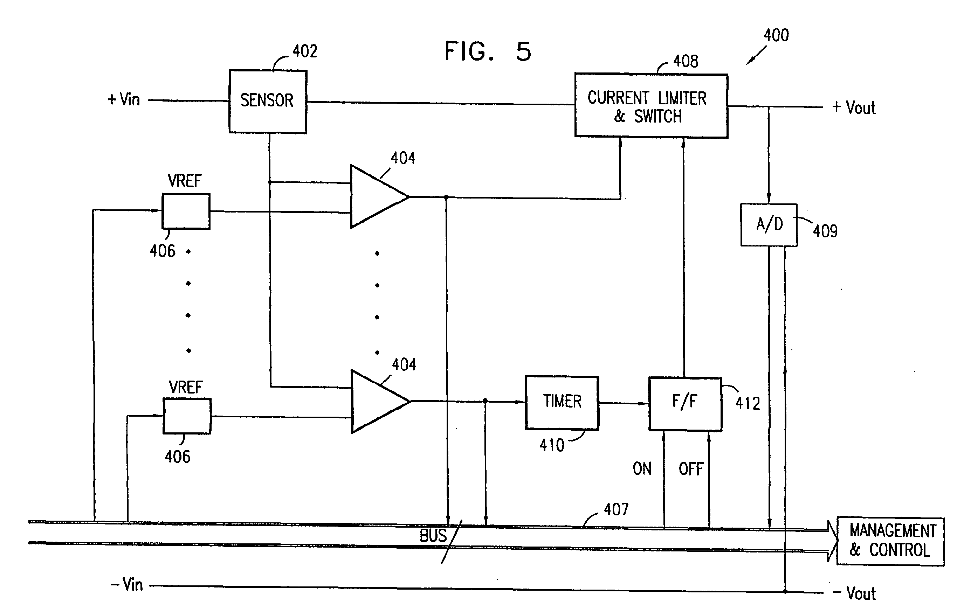

Reference is now made to Fig. 5, which is a simplified block diagram illustration of a smart power allocation and reporting circuit (SPEAR) 400 useful in the embodiments of Figs. 3A, 3B and Figs. 4A, 4B particularly when DC current is coupled to the communication cabling.

SPEAR 400 preferably comprises a current sensor 402 which receives a voltage input +Vin from a power supply and generates a signal which is proportional to the current passing therethrough. A voltage input -Vin received from the power supply 32 (Fig. 3A), 82 (Fig. 3B), 132 (Fig. 4A) or 182 (Fig. 4B) provides a voltage output -Vout which is typically unchanged from voltage input -Vin.

The output of current sensor 402 is supplied to a multiplicity of comparators 404 which also receive respective reference voltages Vref from respective programmable reference voltage sources 406, typically implemented in A/D converters. Programmable reference voltage sources 406 receive control inputs from management & control circuits 226 (Fig. 3A), 276 (Fig. 3B), 326 (Fig. 4A) and 376 (Fig. 4B) preferably via a bus 407. Alternatively, voltage sources 406 need not be programmable.

The outputs of comparators 404 are supplied to a current limiter and switch 408 which receives input voltage Vin via the current sensor 402 and provides a current-limited voltage output Vout. Output voltages +Vout and -Vout are applied as inputs to an A/D converter 409 which outputs a digital indication of Vout, which is the difference between +Vout and -Vout, to the management & control circuits 226 (Fig. 3A), 276 (Fig. 3B), 326 (Fig. 4A) and 376 (Fig. 4B) preferably via bus 407. The outputs of comparators 404 are supplied to management & control circuits 226 (Fig. 3A), 276 (Fig. 3B), 326 (Fig. 4A) and 376 (Fig. 4B) preferably via bus 407 to serve as monitoring inputs providing information regarding the DC current flowing through the SPEAR.

The outputs of some of comparators 404 are supplied directly to current limiter and switch 408, while the outputs of others of comparators 404 are supplied thereto via a timer 410 and a flip/flop 412. The comparators whose outputs are supplied directly to current limiter and switch 408 provide immediate current limiting at a relatively high threshold, while the comparators whose outputs are supplied to current limiter and switch 408 via timer 410 and flip/flop 412 provide delayed action current cut-off at a relatively low threshold.

Flip-flop 412 is responsive to external inputs which enable remote control of the operation of the current limiter and switch 408 by the management & control circuits 226 (Fig. 3A), 276 (Fig. 3B), 326 (Fig. 4A) and 376 (Fig. 4B) via bus 407.

It is appreciated that the above described SPEAR circuitry may also be operated on the negative lead. In such a case a short-lead would be connected between the Vin and the Vout.

It is further appreciated that the components of the SPEAR may also be organize in an alternative sequence.

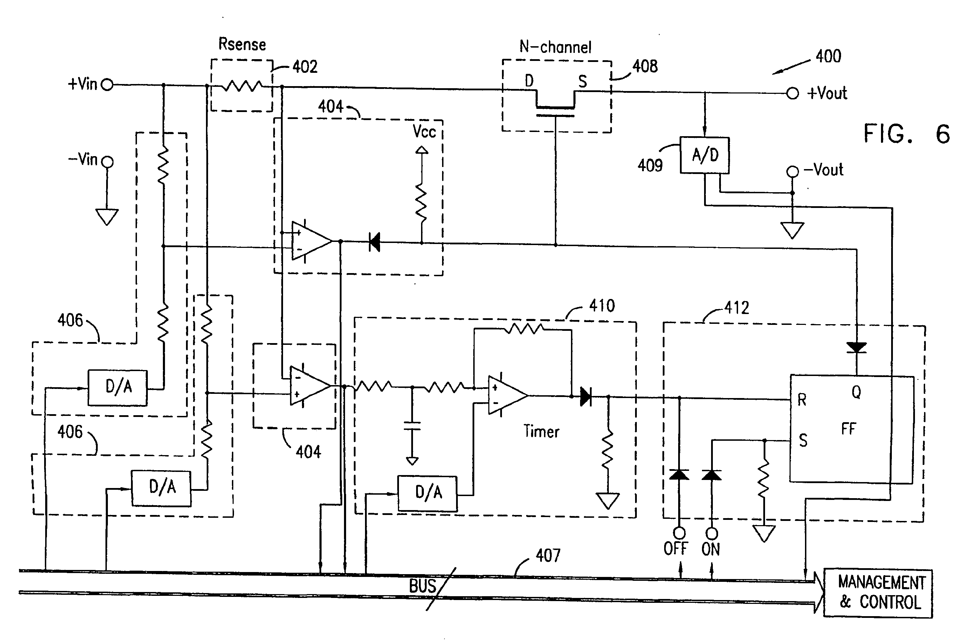

Reference is now made Fig. 6, which is a simplified schematic illustration of a preferred implementation of the embodiment of Fig. 5. Inasmuch as identical reference numerals are employed in both Figs. 5 and 6, the schematic illustration of Fig. 6 is believed to be self-explanatory and therefore, for the sake of conciseness, no additional textual description thereof is provided herein.

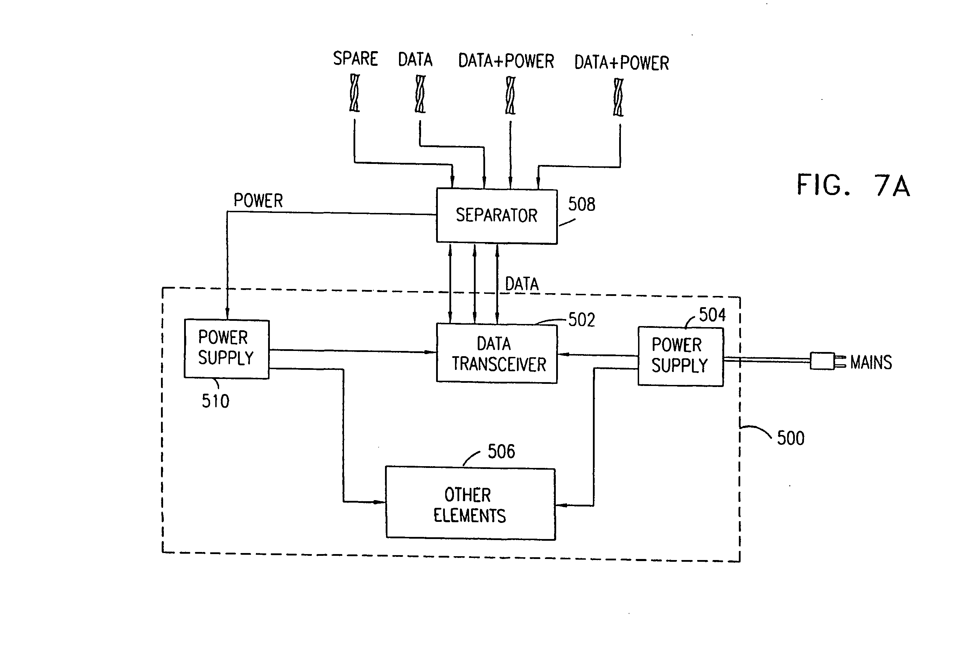

Reference is now made to Fig. 7A, which is a simplified block diagram illustration of a LAN node interface circuit useful in the embodiments of Figs. 1A and 2A for example as external separators 142 - 149. It is appreciated that the circuitry of Fig. 7A alternatively may be built-in to LAN nodes, as shown, for example in Fig. 1A.

Fig. 7A shows typical constituent elements of a network node 500, including a data transceiver 502, a mains-fed power supply 504 and various other elements 506 depending on the functionality of the node. The interface circuitry typically comprises a separator 508 which is operative to receive data and electrical power over communication cabling and to provide a data output to the data transceiver 502 and a separate power output to a communications cabling-fed power supply 510, preferably forming part of network node 500, which preferably powers the data transceiver 502 and possibly any other suitable circuitry.

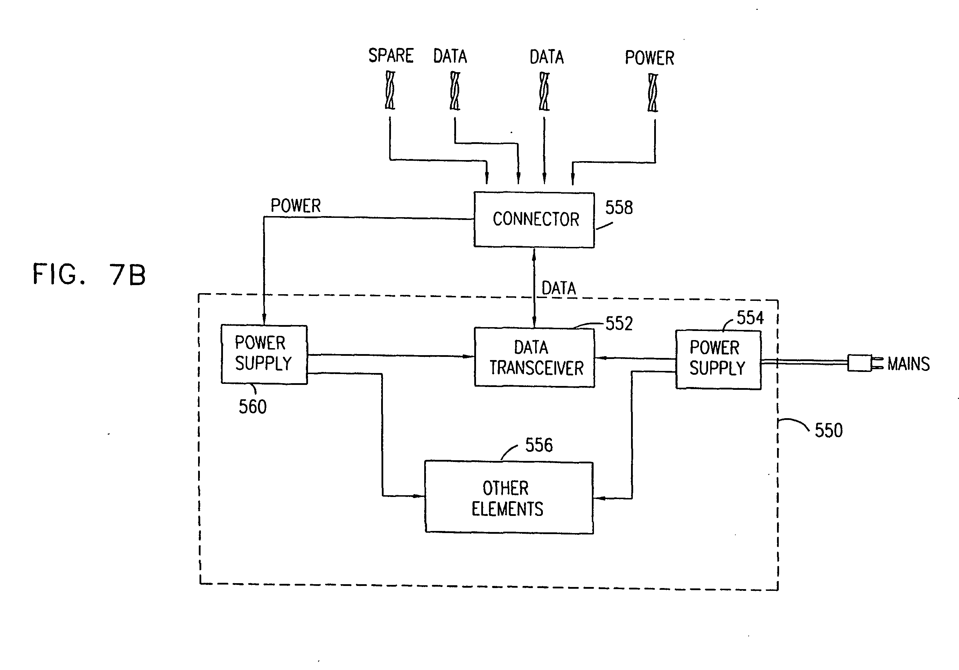

Reference is now made to Fig. 7B, which is a simplified block diagram illustration of a LAN node interface circuit useful in the embodiments of Figs. 1B and 2B for example as external connectors 192 - 199. It is appreciated that the circuitry of Fig. 7B alternatively may be built-in to LAN nodes, as shown, for example in Fig. 1B.

Fig. 7B shows typical constituent elements of a network node 550, including a data transceiver 552, a mains-fed power supply 554 and various other elements 556 depending on the functionality of the node. The interface circuitry typically comprises a connector 558 which is operative to receive data and electrical power over communication cabling and to provide a data output to the data transceiver 552 and a separate power output to a communications cabling-fed power supply 560, preferably forming part of network node 550, which preferably powers the data transceiver 552 and possibly any other suitable circuitry.

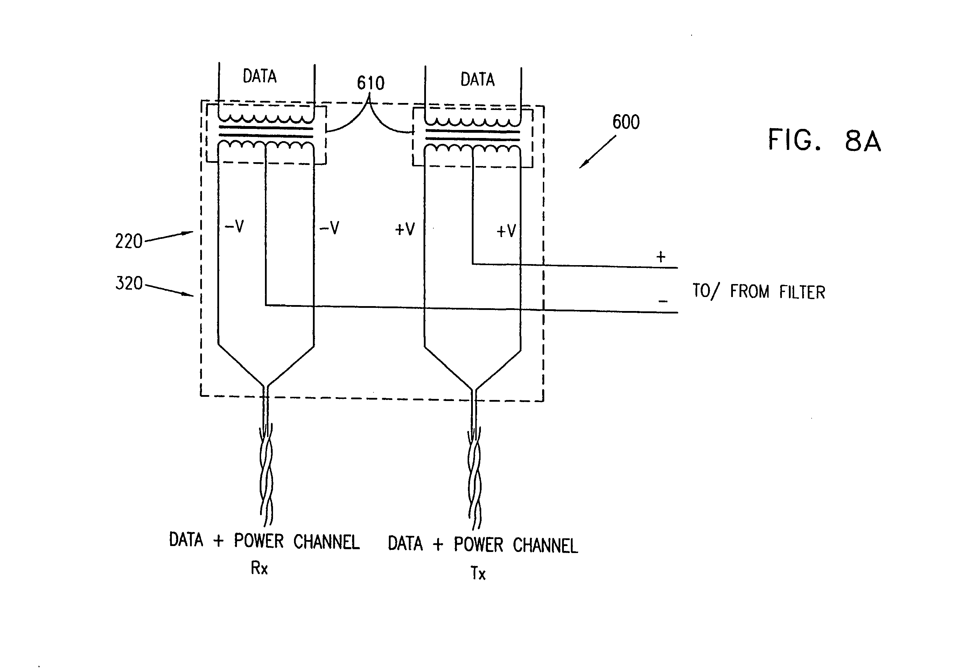

Reference is Figs. 8A - 8E, which are simplified block diagram illustrations of various embodiments of a coupler useful in the embodiments of Figs. 3A and 4A. The various embodiments have the common purpose of coupling DC power to the communication cabling without upsetting the balance therealong, while producing a minimal change in the line impedance thereof and preventing saturation or burnout of line transformers coupled thereto.

Fig. 8A describes a coupler 600, such as coupler 220 (Fig. 3A) or coupler 320 (Fig. 4A) suitable for use with a LAN in accordance with a preferred embodiment of the present invention and which includes a pair of additional transformers 610 for each channel. Transformers 610 are typically 1:1 transformers which are characterized in that they include a center tap at the secondary via which the DC voltage is fed to both wires of a twisted pair.

This structure maintains the balance of the line and prevents core saturation. This structure also has the advantage that due to the fact that the same voltage is carried on both wires of the twisted pair simultaneously, the occurrence of a short circuit therealong will not cause a power overload. An additional advantage of this structure is that it will not cause burnout of a LAN node which is not specially adapted for receive power over the twisted pair.

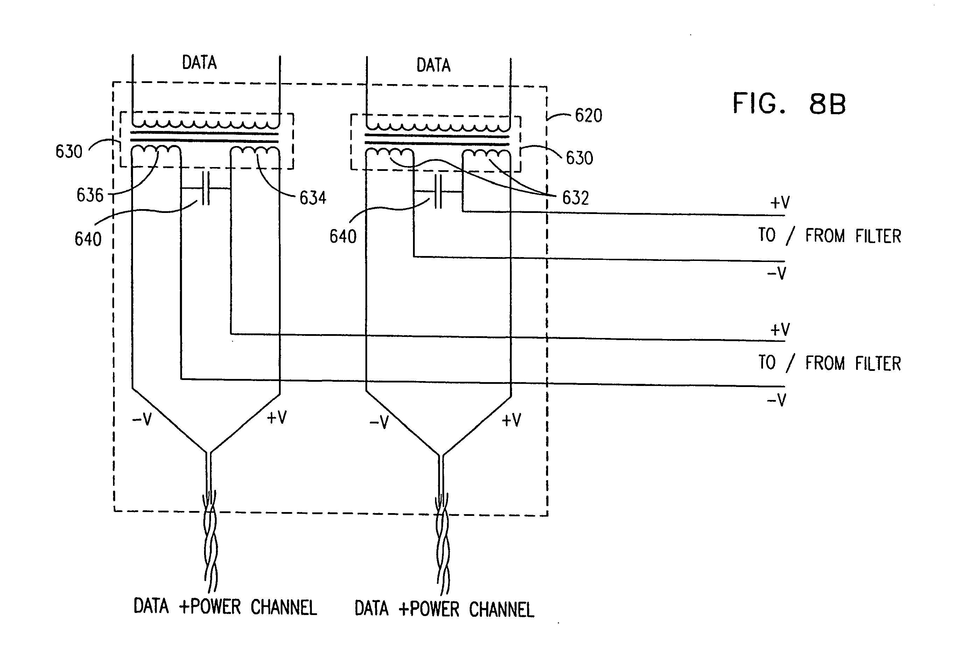

Fig. 8B describes a coupler 620, such as coupler 220 (Fig. 3A) or coupler 320 (Fig. 4A) suitable for use with a LAN in accordance with a preferred embodiment of the present invention and which includes a pair of additional transformers 630 for each channel. Transformers 630 are typically 1:1 transformers which are characterized in that they include a secondary 632 which is split into two separate windings 634 and 636. A capacitor 640 is connected between windings 634 and 636. The capacitor effectively connects the two windings in series for high frequency signals, such as data signals, but effectively isolates the two windings for DC.

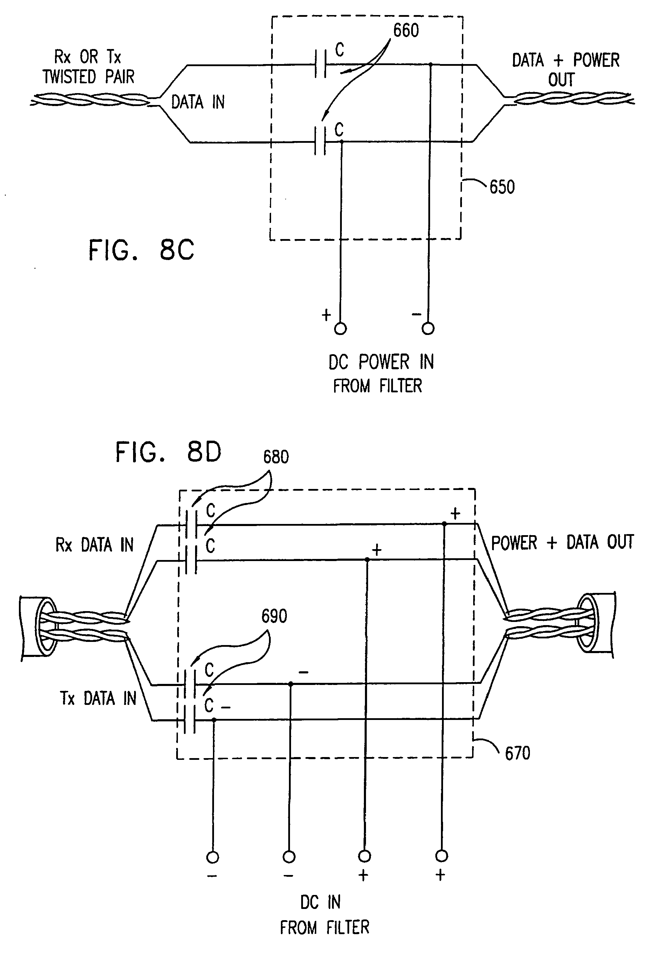

This structure enables the two windings to carry respective positive and negative voltages via the same twisted pair. An advantage of this structure is that it applies a net zero DC current via the twisted pair and thus eliminates the magnetic field that would otherwise have existed had the twisted pair carried DC current in the same directions. Fig. 8C describes a coupler 650, such as coupler 220 (Fig. 3A) or coupler 320 (Fig. 4A) suitable for use with a LAN in accordance with a preferred embodiment of the present invention and which includes a pair of capacitors 660 which effectively block DC from reaching the LAN switch. This structure is relatively simple and does not require an additional transformer.

Fig. 8D describes a coupler 670, such as coupler 220 (Fig. 3A) or coupler 320 (Fig. 4A) suitable for use with a LAN in accordance with a preferred embodiment of the present invention and which includes two pairs of capacitors 680 and 690 which effectively block DC from reaching the LAN switch. This structure is also relatively simple and does not require an additional transformer.

This structure also has the advantage that due to the fact that the same voltage is carried on both wires of the twisted pair simultaneously, the occurrence of a short circuit therealong will not cause a power overload. An additional advantage of this structure is that it will not cause burnout of a LAN node which is not specially adapted for receive power over the twisted pair.

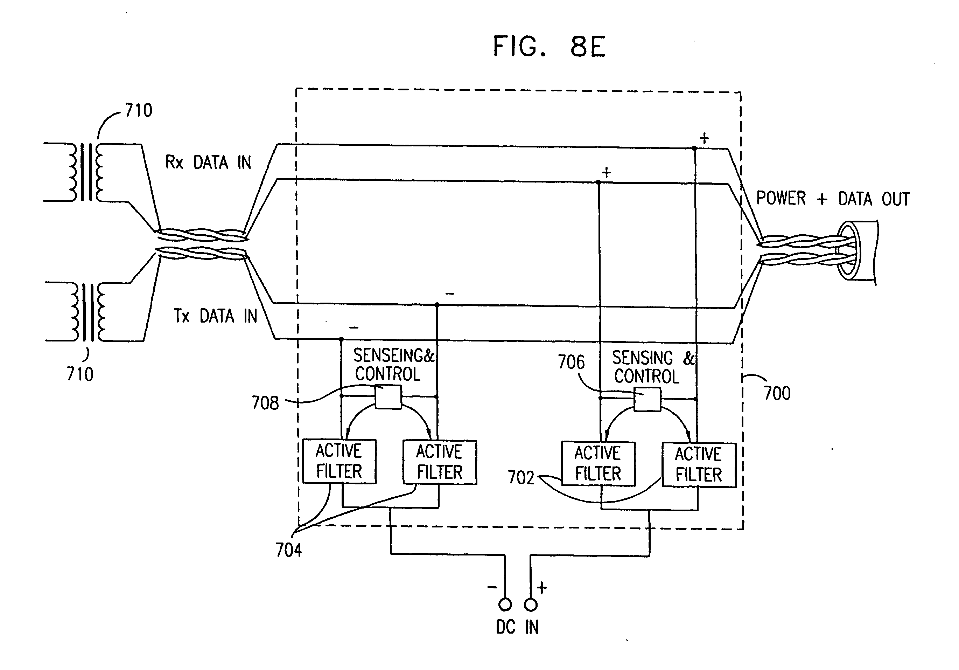

Fig. 8E describes a coupler 700, such as coupler 220 (Fig. 3A) or coupler 320 (Fig. 4A) suitable for use with a LAN in accordance with a preferred embodiment of the present invention and which is a self-balancing common mode coupling circuit. Combiner 700 comprises two pairs of adjustable active balancing circuits 702 and 704, which are operative in conjunction with respective sensing and control circuits 706 and 708.

It is a particular feature of the embodiment of Fig. 8E that the two pairs of adjustable active balancing circuits 702 and 704, which are operative in conjunction with respective sensing and control circuits 706 and 708 are operative to maintain precisely identical voltages on each of the two wires comprising a twisted pair coupled thereto.

Normally the output of a LAN switch is coupled to communication cabling via an isolation transformer 710, which is not part of the coupler 700. When precisely identical voltages, as aforesaid, are applied to each of the two wires comprising the twisted pair, there is no DC voltage across the secondary windings of the isolation transformer 710 and thus no DC current flows therethrough. This obviates the need for DC isolating capacitors and thus improves the balancing and impedance matching behavior of the combiner.

It is appreciated that whereas in a theoretically ideal system there would not be any need for active balancing as provided in the embodiment of Fig. 8E, in reality due to variations in the DC resistance along the entire communication cabling system, the DC voltages on each of the two wires of the twisted pair would not be identical in the absence of active balancing, thus creating a DC voltage drop across the secondary of transformer 710 which could cause either saturation or burnout of transformer 710.

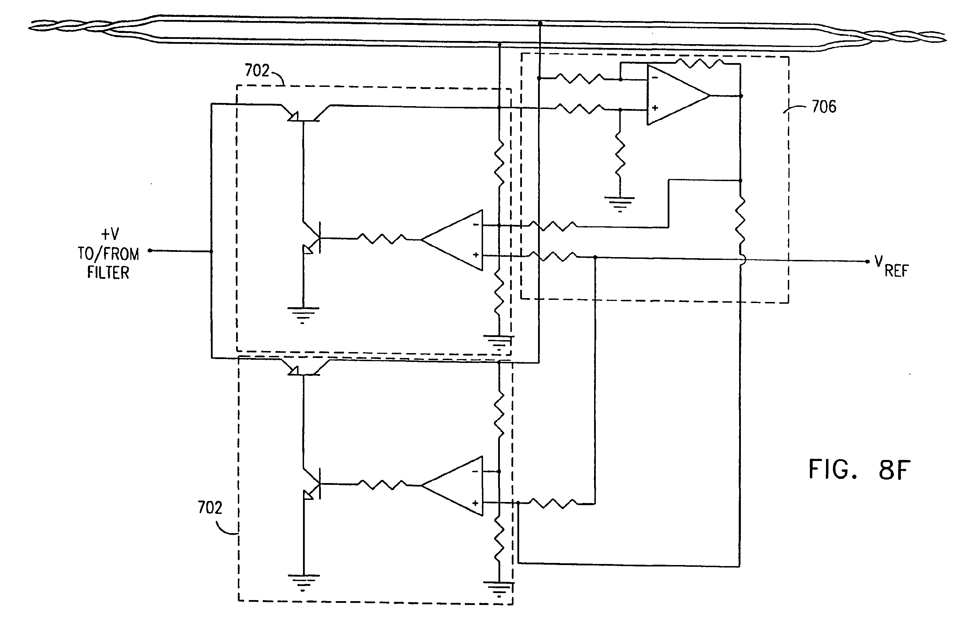

Reference is now made Fig. 8F, which is a simplified schematic illustration of a preferred implementation of the embodiment of Fig. 8E. Inasmuch as identical reference numerals are employed in both Figs. 8E and 8F, the schematic illustration of Fig. 8F is believed to be self-explanatory and therefore, for the sake of conciseness, no additional textual description thereof is provided herein.

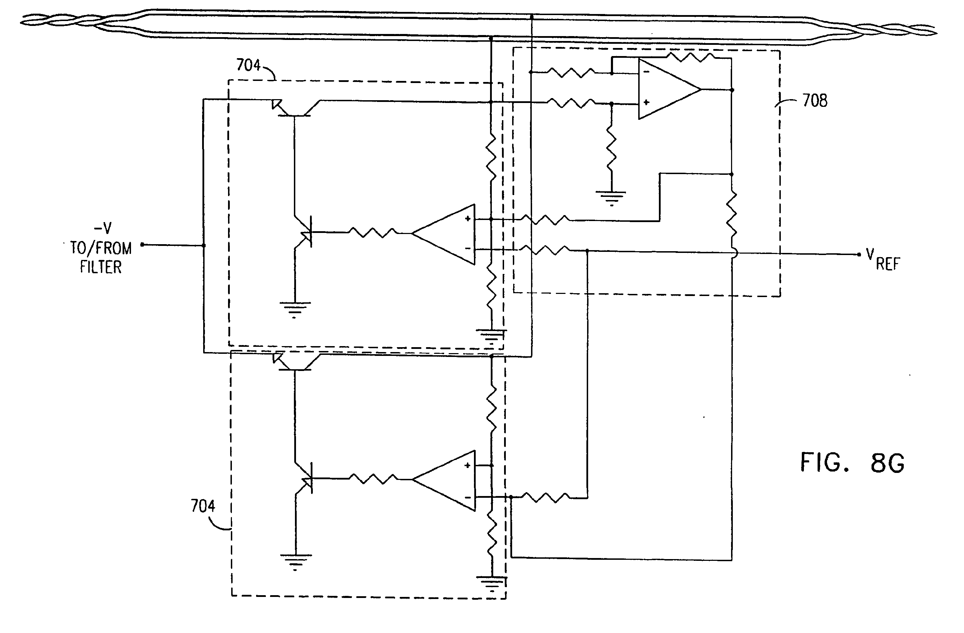

Reference is now made Fig. 8G, which is a simplified schematic illustration of a preferred implementation of the embodiment of Fig. 8E. Inasmuch as identical reference numerals are employed in both Figs. 8E and 8G, the schematic illustration of Fig. 8G is believed to be self-explanatory and therefore, for the sake of conciseness, no additional textual description thereof is provided herein.

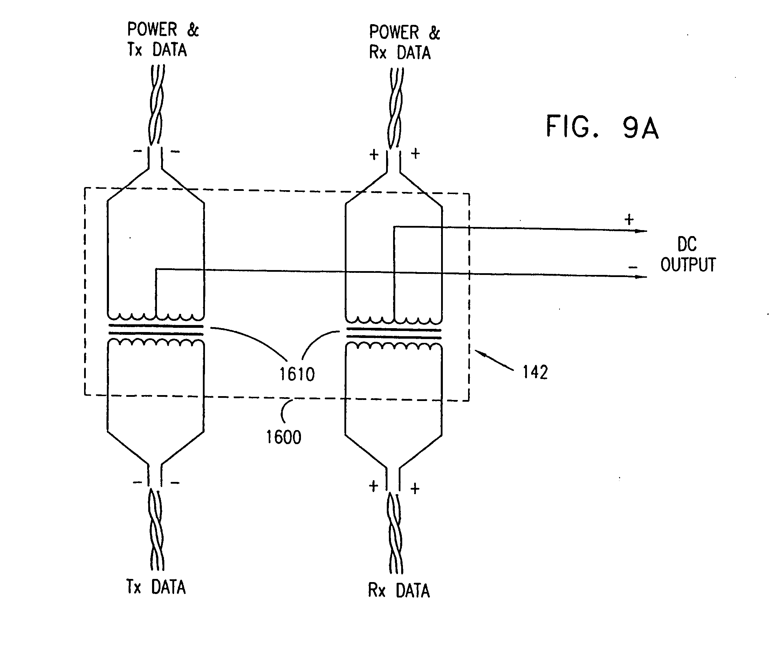

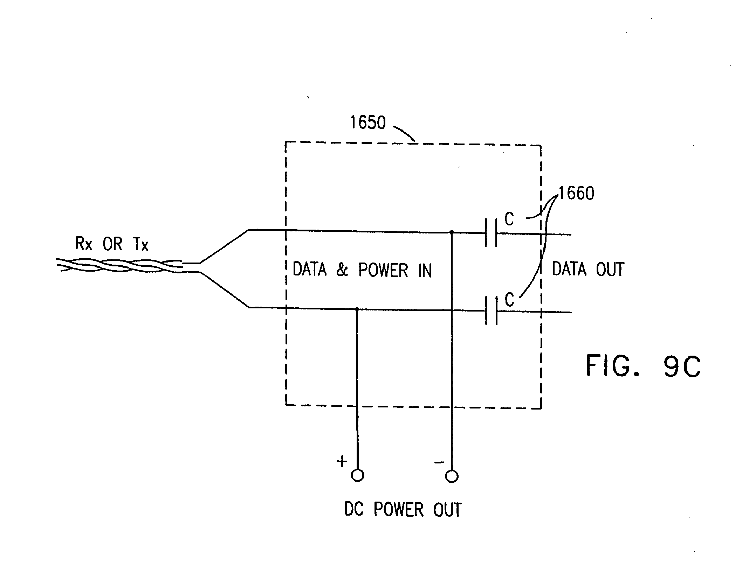

Reference is now made to Figs. 9A - 9G which are simplified block diagram and schematic illustrations of various embodiments of a separator useful in the embodiments of Figs. 1A, 2A & 7A preferably in combination with the respective combiners of Figs. 8A - 8G.

In addition to the components included in Figs. 9A to 9G, these separators may also include appropriate filters to avoid interpair and interport crosstalk.

The various embodiments have the common purpose of decoupling DC power from the communication cabling without upsetting the balance therealong, while producing a minimal change in the line impedance thereof and preventing saturation or burnout of line transformers coupled thereto.

Fig. 9A describes a separator 1600, such as separator 142 (Fig. 2A), suitable for use with a LAN in accordance with a preferred embodiment of the present invention and which includes a pair of additional transformers 1610 for each channel. Transformers 1610 are typically 1:1 transformers which are characterized in that they include a center tap at the primary via which the DC voltage is extracted from both wires of a twisted pair.

This structure maintains the balance of the line and prevents core saturation. This structure also has the advantage that due to the fact that the same voltage is carried on both wires of the twisted pair simultaneously, the occurrence of a short circuit therealong will not cause a power overload. An additional advantage of this structure is that it will not cause burnout of a LAN node which is not specially adapted for receive power over the twisted pair.

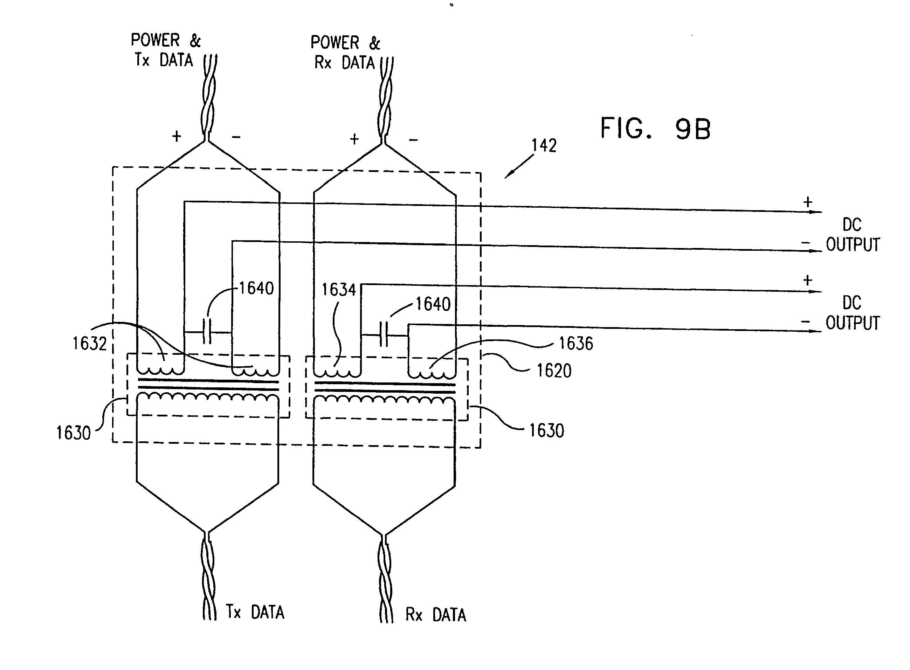

Fig. 9B describes a separator 1620, such as separator 142 (Fig. 2A) suitable for use with a LAN in accordance with a preferred embodiment of the present invention and which includes a pair of additional transformers 1630 for each channel. Transformers 1630 are typically 1:1 transformers which are characterized in that they include a primary 1632 which is split into two separate windings 1634 and 1636. A capacitor 1640 is connected between windings 1634 and 1636. The capacitor effectively connects the two windings in series for high frequency signals, such as data signals, but effectively isolates the two windings for DC.

This structure enables the two windings to carry respective positive and negative voltages via the same twisted pair. An advantage of this structure is that it applies a net zero DC current via the twisted pair and thus eliminates the magnetic field that would otherwise have existed had the twisted pair carried DC current in the same directions.

Fig, 9C describes a separator 1650, such as separator 142 (Fig. 2A), suitable for use with a LAN in accordance with a preferred embodiment of the present invention and which includes a pair of capacitors 1660 which effectively block DC from reaching the node circuits. This structure is relatively simple and does not require an additional transformer.

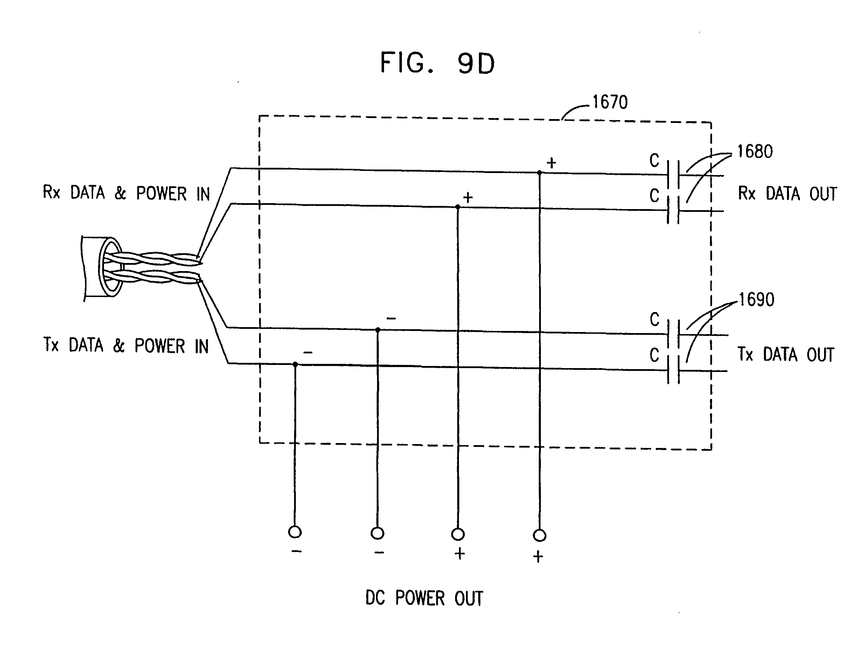

Fig. 9D describes a separator 1670, such as separator 142 (Fig. 2A), suitable for use with a LAN in accordance with a preferred embodiment of the present invention and which includes two pairs of capacitors 1680 and 1690 which effectively block DC from reaching the node circuits. This structure is also relatively simple and does not require an additional transformer.

This structure also has the advantage that due to the fact that the same voltage is carried on both wires of the twisted pair simultaneously, the occurrence of a short circuit therealong will not cause a power overload. An additional advantage of this structure is that it will not cause burnout of a LAN node which is not specially adapted for receive power over the twisted pair.

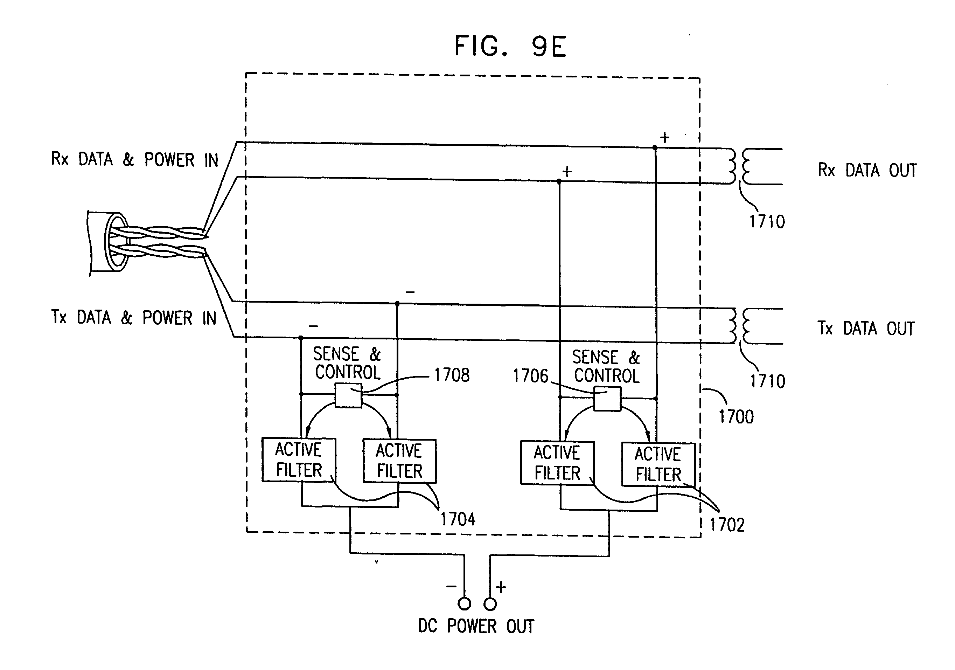

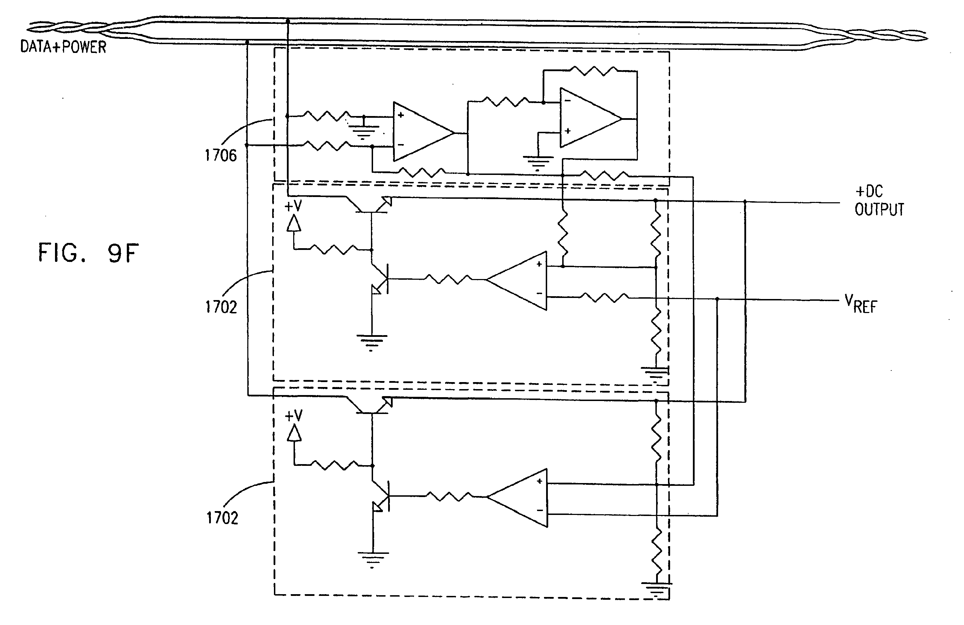

Fig. 9E describes a separator 1700, such as separator 142 (Fig. 2A), suitable for use with a LAN in accordance with a preferred embodiment of the present invention and which is a self-balancing common mode coupling circuit. Separator 1700 comprises two pairs of adjustable active balancing circuits 1702 and 1704, which are operative in conjunction with respective sensing and control circuits 1706 and 1708.

It is a particular feature of the embodiment of Fig. 9E that the two pairs of adjustable active balancing circuits 1702 and 1704, which are operative in conjunction with respective sensing and control circuits 1706 and 1708 are operative to maintain precisely identical voltages on each of the two wires comprising a twisted pair coupled thereto.

Normally the input of a LAN node is coupled to communication cabling via an isolation transformer 1710, which is not part of the separator 1700. When precisely identical voltages, as aforesaid, are maintained on each of the two wires comprising the twisted pair, there is no DC voltage across the primary windings of the isolation transformer 1710 and thus no DC current flows therethrough. This obviates the need for DC isolating capacitors and thus improves the balancing and impedance matching behavior of the separator.

It is appreciated that whereas in a theoretically ideal system there would not be any need for active balancing as provided in the embodiment of Fig. 9E, in reality due to variations in the DC resistance along the entire communication cabling system, the DC voltages on each of the two wires of the twisted pair would not be identical in the absence of active balancing, thus creating a DC voltage drop across the primary of transformer 1710 which could cause either saturation or burnout of transformer 1710.

Reference is now made Fig. 9F, which is a simplified schematic illustration of part of a preferred implementation of the embodiment of Fig. 9E, including elements 1702 and 1706 thereof. Inasmuch as identical reference numerals are employed in both Figs. 9E and 9F, the schematic illustration of Fig. 9F is believed to be self-explanatory and therefore, for the sake of conciseness, no additional textual description thereof is provided herein.

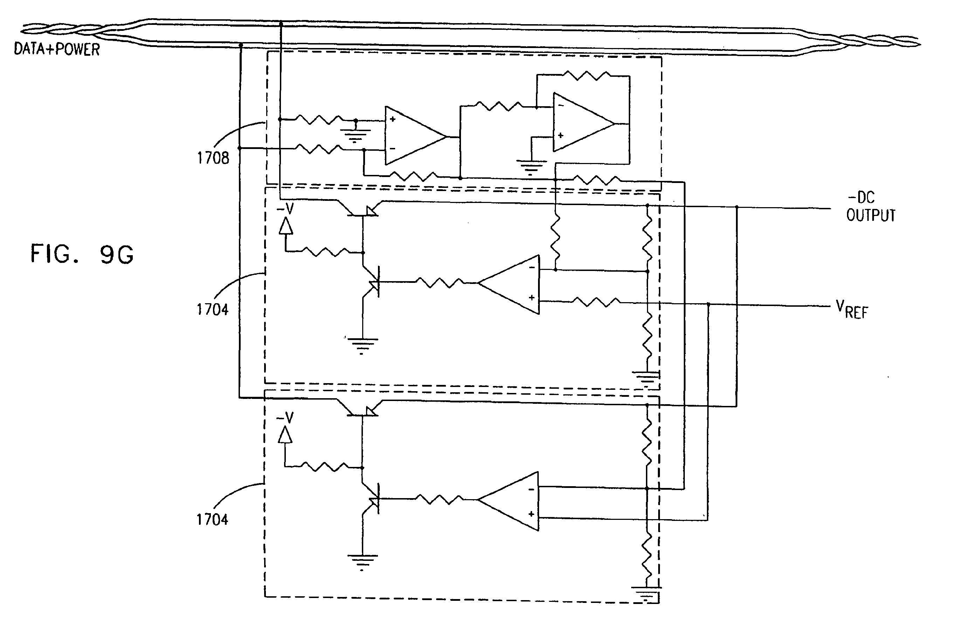

Reference is now made Fig. 9G, which is a simplified schematic illustration of part of a preferred implementation of the embodiment of Fig. 9E, including elements 1704 and 1708 thereof. Inasmuch as identical reference numerals are employed in both Figs. 9E and 9G, the schematic illustration of Fig. 9G is believed to be self-explanatory and therefore, for the sake of conciseness, no additional textual description thereof is provided herein.

The circuits of Figs. 9F and 9G is provided to ensure that the voltage is identical on both leads of the twisted pair to which they are coupled in order to prevent current flow through transformers 1710 (Fig. 9E). This is accomplished by the circuits of 9F and 9G by changing the current flowing through the active filters 1702 and 1704 under the control of elements 1706 and 1708 respectively.

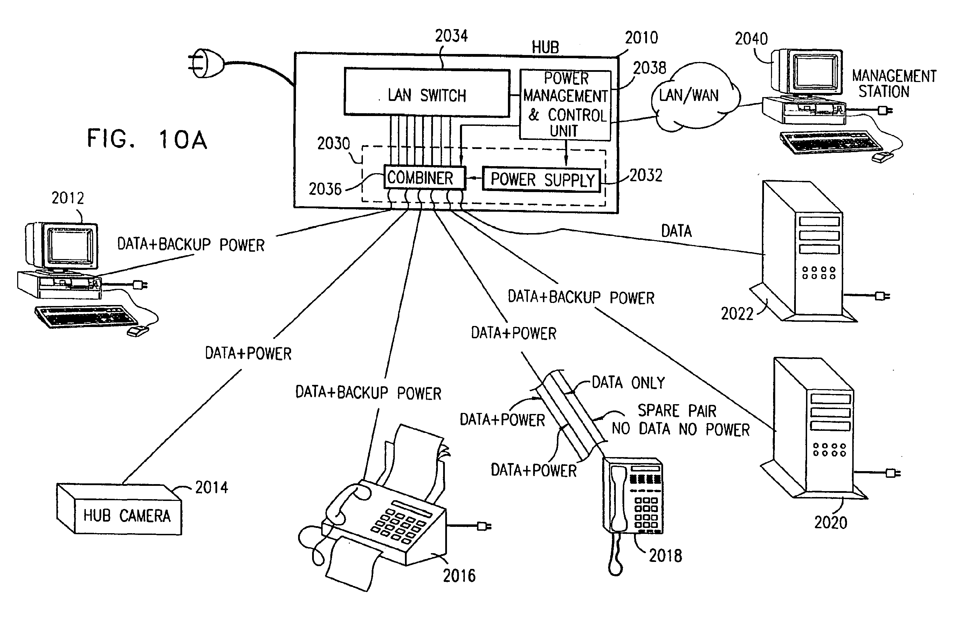

Reference is now made to Fig. 10A, which is a simplified block diagram illustration of a communications network including power supply and management over communications cabling constructed and operative in accordance with a preferred embodiment of the present invention.

As seen in Fig. 10A, there is provided a local area network (LAN) comprising a hub 2010 which is coupled, by cabling, preferably a structured cabling system, to a plurality of LAN nodes, such as a desktop computer 2012, a web camera 2014, a facsimile machine 2016, a LAN telephone, also known as an IP telephone 2018, a computer 2020 and a server 2022.

In accordance with a preferred embodiment of the present invention there is provided a power supply subsystem 2030 which is operative to provide at least some operating or backup power to at least some of said plurality of nodes via the hub 2010 and the communication cabling connecting the hub to various LAN nodes.

In the illustrated embodiment of Fig. 10A, subsystem 2030 is located within the hub 2010 and includes a power supply 2032 which supplies operating power and/or backup power to various LAN nodes via the communication cabling. The communication cabling connects a LAN switch 2034 via a combiner 2036 to the various LAN nodes. The combiner couples electrical power from the power supply 2032 along the communication cabling to at least some of the LAN nodes. Bidirectional data communications from LAN switch 2034 pass through the combiner 2036, substantially without interference.

In accordance with a preferred embodiment of the present invention, there is provided in hub 2010 a power management & control unit 2038 which monitors and controls the power supplied by subsystem 2030 to the various LAN nodes via the communications cabling. The power management & control unit 2038 preferably communicates with a management workstation 2040, preferably via a LAN or a WAN. Management workstation 2040 is operative, preferably under the control of an operator, to govern the operation of power management & control unit 2038.

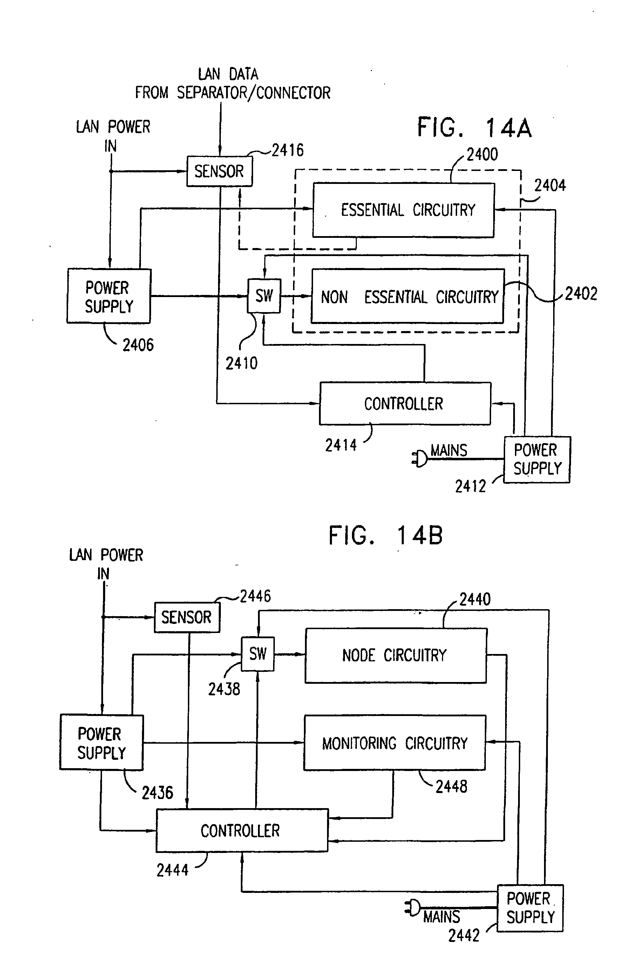

It is appreciated that a management workstation 2040 may govern the operation of multiple power management & control units 2038. The power management & control unit 2038 may also communicate with various LAN nodes via LAN switch 2034 by providing standard LAN messages to the nodes thereby to govern their current mode of power usage. For example, power management & control unit 2038 may send control messages which are decoded at the LAN nodes and are employed by controllers in the circuitry of Figs. 14A & 14B for controlling whether full or partial functionality is provided thereat.

In one specific case, when the power management & control unit 2038 senses that mains power to power supply 2032 is not available, it may send a control message via LAN switch 2034 to cause the various LAN nodes to operate in a backup or reduced power mode.

It is seen that the communication cabling from the hub 2010 to the desktop computer 2012, facsimile machine 2016 and computer 2020 carries both data and backup power, while the communication cabling from the hub 2010 to the hub camera 2014 and LAN telephone 2018 carries both data and operating power and the communication cabling from the hub to the server 2022 carries only data, in a typically LAN arrangement constructed and operative in accordance with a preferred embodiment of the present invention.

It is appreciated that each of the LAN nodes 2012 - 2020, which receives power over the communication cabling, includes a separator for separating the electrical power from the data In the illustrated embodiment of Fig. 10A, the separators are typically internal to the respective nodes and are not separately designated, it being appreciated that alternatively discrete separators may be employed.

It is a particular feature of the embodiment of Fig. 10A that both data and power are carried on the same twisted copper pair.

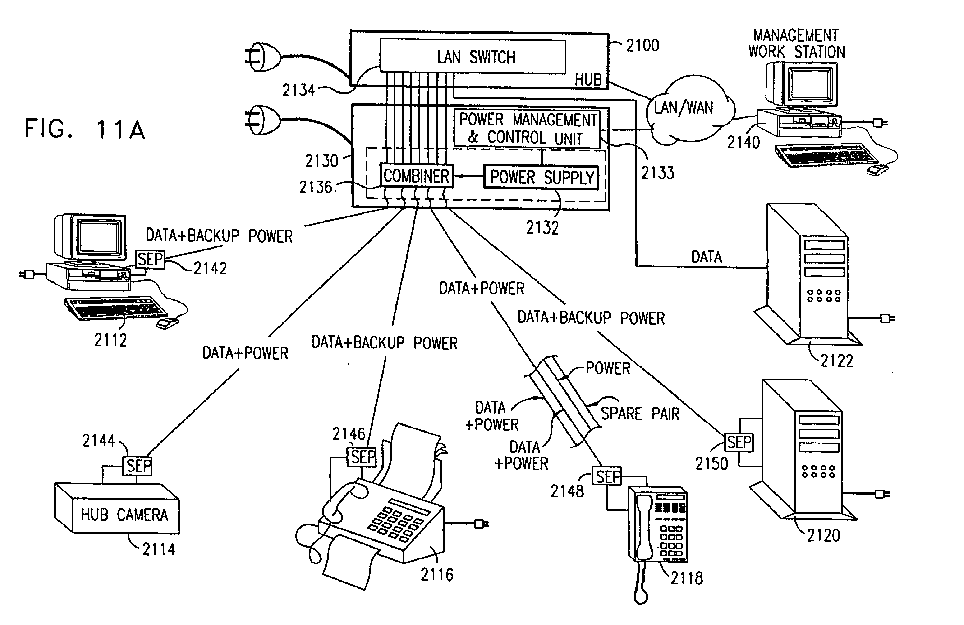

It is appreciated that Fig. 10A illustrates one embodiment of a system providing electric power to plural LAN nodes via a hub and communication cabling connecting the hub to various LAN nodes. Another embodiment of a system providing electric power to plural LAN nodes via a hub and communication cabling connecting the hub to various LAN nodes is illustrated in Fig. 11A. Fig. 11A illustrates a local area network including a power supply and management unit operative to provide electrical power to local area network nodes over communication cabling.

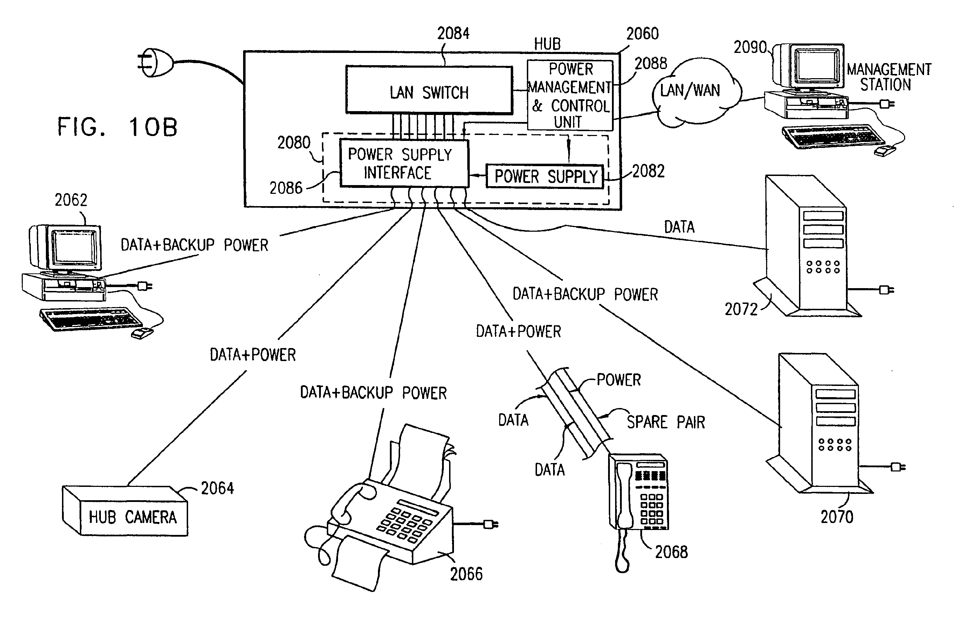

Reference is now made to Fig. 10B, which is a simplified block diagram illustration of a communications network including power supply and management over communications cabling constructed and operative in accordance with a preferred embodiment of the present invention.

As seen in Fig. 10B, there is provided a local area network (LAN) comprising a hub 2060 which is coupled, by cabling, preferably a structured cabling system, to a plurality of LAN nodes, such as a desktop computer 2062, a web camera 2064, a facsimile machine 2066, a LAN telephone, also known as an IP telephone 2068, a computer 2070 and a server 2072.

In accordance with a preferred embodiment of the present invention there is provided a power supply subsystem 2080 which is operative to provide at least some operating or backup power to at least some of said plurality of nodes via the hub 2060 and the communication cabling connecting the hub to various LAN nodes.

In the illustrated embodiment of Fig. 10B, subsystem 2080 is located within the hub 2060 and includes a power supply 2082 which supplies operating power and/or backup power to various LAN nodes via the communication cabling. The communication cabling connects a LAN switch 2084 via a power supply interface 2086 to the various LAN nodes. The power supply interface provides electrical power from the power supply 2082 along the communication cabling to at least some of the LAN nodes. Bidirectional data communications from LAN switch 2084 pass through the power supply interface 2086, substantially without interference.

In accordance with a preferred embodiment of the present invention, there is provided in hub 2060 a power management & control unit 2088 which monitors and controls the power supplied by subsystem 2080 to the various LAN nodes via the communications cabling. The power management & control unit 2088 preferably communicates with a management workstation 2090, preferably via a LAN or a WAN. Management workstation 2090 is operative, preferably under the control of an operator, to govern the operation of power management & control unit 2088.

It is appreciated that a management workstation 2090 may govern the operation of multiple power management & control units 2088. The power management & control unit 2088 may also communicate with various LAN nodes via LAN switch 2084 by providing standard LAN messages to the nodes thereby to govern their current mode of power usage. For example, power management & control unit 2088 may send control messages which are decoded at the LAN nodes and are employed by controllers in the circuitry of Figs. 14A & 14B for controlling whether full or partial functionality is provided thereat.

In one specific case, when the power management & control unit 2088 senses that mains power to power supply 2082 is not available, it may send a control message via LAN switch 2084 to cause the various LAN nodes to operate in a backup or reduced power mode.

It is seen that the communication zabling from the hub 2060 to the desktop computer 2062, facsimile machine 2066 and computer 2070 carries both data and backup power, while the communication cabling from the hub 2060 to the hub camera 2064 and LAN telephone 2068 carries both data and operating power and the communication cabling from the hub to the server 2072 carries only data, in a typically LAN arrangement constructed and operative in accordance with a preferred embodiment of the present invention.

It is appreciated that each of the LAN nodes 2062 - 2070, which receives power over the communication cabling, includes a connector for separately providing electrical power and data. In the illustrated embodiment of Fig. 10B, the connectors are typically internal to the respective nodes and are not separately designated, it being appreciated that alternatively discrete connector may be employed.

It is a particular feature of the embodiment of Fig. 10B that data and power are carried on separate twisted copper pairs of each communication cabling line.

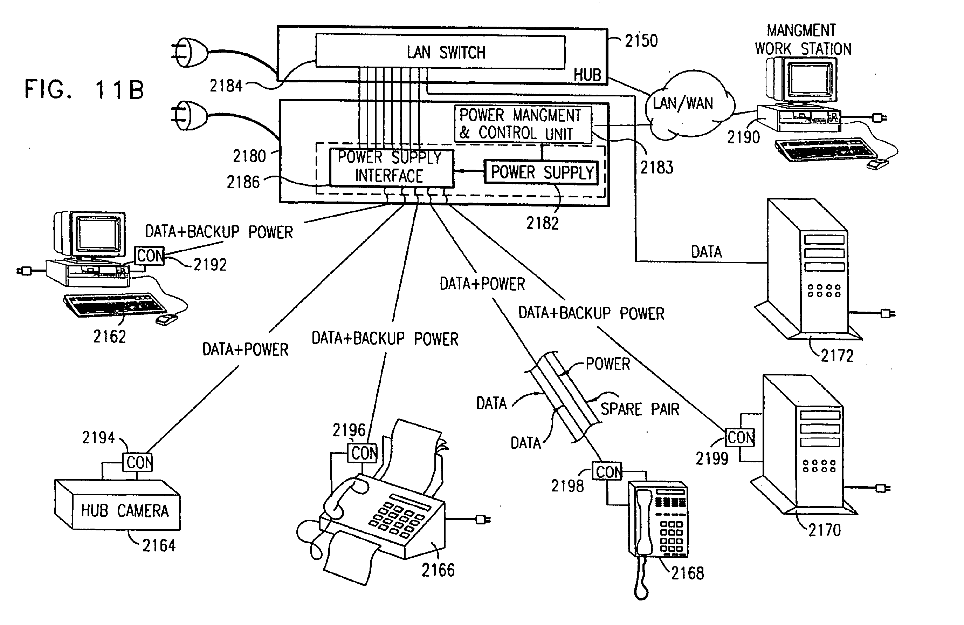

It is appreciated that Fig. 10B illustrates one embodiment of a system providing electric power to plural LAN nodes via a hub and communication cabling connecting the hub to various LAN nodes. Another embodiment of a system providing electric power to plural LAN nodes via a hub and communication cabling connecting the hub to various LAN nodes is illustrated in Fig. 11B. Fig. 11B illustrates a local area network including a power supply and management unit operative to provide electrical power to local area network nodes over communication cabling.

In the illustrated embodiment of Fig. 11A, a conventional hub 2100 does not provide electrical power over the communication cabling and a power supply and management subsystem 2130 is located externally of hub 2100 and includes a power supply 2132 which supplies operating power and/or backup power to various LAN nodes via the communication cabling as well as a power management & control unit 2133.

The communication cabling connects a LAN switch 2134 of conventional hub 2100 to a combiner 2136 in power supply and management subsystem 2130 and connects the combiner to the various LAN nodes. The combiner 2136 couples electrical power from the power supply 2132 along the communication cabling to at least some of the LAN nodes. Bidirectional data communications from LAN switch 2134 pass through the combiner 2136, substantially without interference.

In accordance with a preferred embodiment of the present invention, there is provided in power supply and management subsystem 2130 power management & control unit 2133 which monitors and controls the power supplied by subsystem 2130 to the various LAN nodes via the communications cabling. The power management & control unit 2133 preferably communicates with a management workstation 2140, preferably via a LAN or a WAN.

Management workstation 2140 is operative, preferably under the control of an operator, to govern the operation of power management & control unit 2133. It is appreciated that a management workstation 2140 may govern the operation of multiple power management & control units 2133 and may also govern the operation of multiple hubs 2100.

It is seen that the communication cabling from the hub 2100 to the desktop computer 2112, facsimile machine 2116 and computer 2120 carries both data and backup power, while the communication cabling from the hub 2100 to the hub camera 2114 and LAN telephone 2118 carries both data and operating power and the communication cabling from the hub 2100 to the server 2122 carries only data and may, but need not pass through subsystem 2130, in a typically LAN arrangement constructed and operative in accordance with a preferred embodiment of the present invention.

In the illustrated embodiment of Fig. 11A, each of the LAN nodes 2112 - 2120 which receives power is provided with an external separator for separating the data from the electrical power coupled to the communication cabling. The external separators associated with respective nodes 2112 - 2120 are designated by respective reference numbers 2142 - 2150. Each such separator has a communication cabling input and separate data and power outputs. It is appreciated that some or all of the nodes 2112 - 2120 may alternatively be provided with internal separators and that some or all of the nodes 2112 - 2120 may be provided with external separators.

It is appreciated that in addition to the LAN nodes described hereinabove, the present invention is useful with any other suitable nodes such as, for example, wireless LAN access points, emergency lighting system elements, paging loudspeakers, CCTV cameras, alarm sensors, door entry sensors, access control units, laptop computers, network elements, such as hubs, switches and routers, monitors and memory backup units for PCs and workstations.

In the illustrated embodiment of Fig. 11B, a conventional hub 2150 does not provide electrical power over the communication cabling and a power supply and management subsystem 2180 is located externally of hub 2150 and includes a power supply 2182 which supplies operating power and/or backup power to various LAN nodes via the communication cabling as well as a power management & control unit 2183.

The communication cabling connects a LAN switch 2184 of conventional hub 2150 to a power supply interface 2186 in power supply and management subsystem 2180 and connects the combiner to the various LAN nodes. The power supply interface 2186 provides electrical power from the power supply 2182 along the communication cabling to at least some of the LAN nodes. Bidirectional data communications from LAN switch 2184 pass through the power supply interface 2186, substantially without interference.

In accordance with a preferred embodiment of the present invention, there is provided in power supply and management subsystem 2180 power management & control unit 2183 which monitors and controls the power supplied by subsystem 2180 to the various LAN nodes via the communications cabling. The power management & control unit 2183 preferably communicates with a management workstation 2190, preferably via a LAN or a WAN.

Management workstation 2190 is operative, preferably under the control of an operator, to govern the operation of power management & control unit 2183. It is appreciated that a management workstation 2190 may govern the operation of multiple power management & control units 2183 and may also govern the operation of multiple hubs 2150.

It is seen that the communication cabling from the hub 2150 to the desktop computer 2162, facsimile machine 2166 and computer 2170 carries both data and backup power, while the communication cabling from the hub 2150 to the hub camera 2164 and LAN telephone 2168 carries both data and operating power and the communication cabling from the hub 2150 to the server 2172 carries only data and may, but need not pass through subsystem 2180, in a typically LAN arrangement constructed and operative in accordance with a preferred embodiment of the present invention.

In the illustrated embodiment of Fig. 11B, each of the LAN nodes 2162-2170 which receives power is provided with an external connector for separately providing data and electrical power from the communication cabling. The external connectors associated with respective nodes 2162 - 2170 are designated by respective reference numbers 2192 - 2199. Each such connector has a communication cabling input and separate data and power outputs. It is appreciated that some or all of the nodes 2162-2170 may alternatively be provided with internal connectors and that some or all of the nodes 2162 - 2170 may be provided with external connectors.

It is appreciated that in addition to the LAN nodes described hereinabove, the present invention is useful with any other suitable nodes such as, for example, wireless LAN access points, emergency lighting system elements, paging loudspeakers, CCTV cameras, alarm sensors, door entry sensors, access control units, laptop computers, network elements, such as hubs, switches and routers, monitors and memory backup units for PCs and workstations.

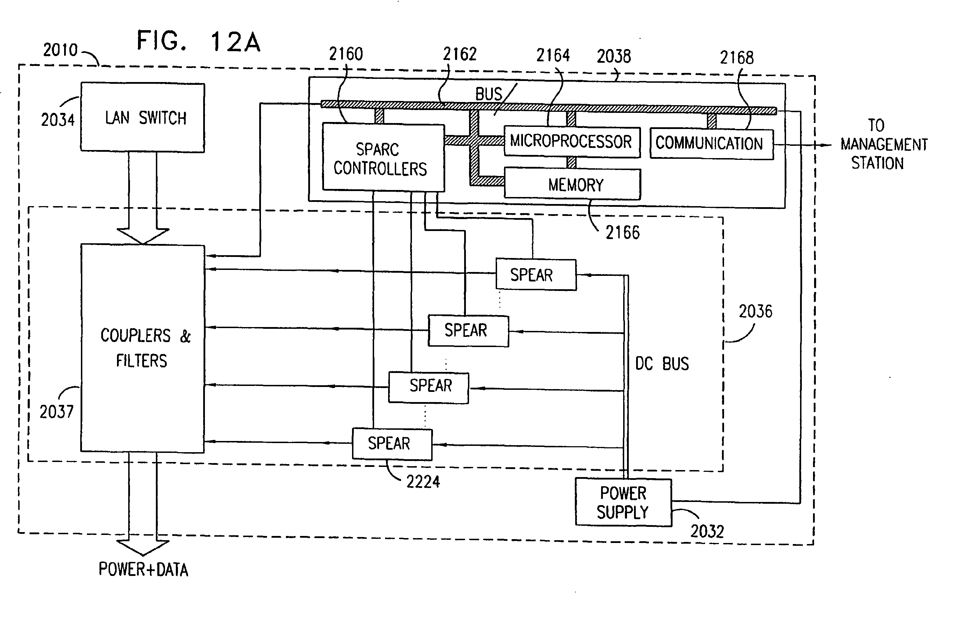

Reference is now made to Fig. 12A, which is a simplified block diagram illustration of a hub, such as hub 2010, useful in the embodiment of Fig. 10A. Hub 2010 preferably comprises a conventional, commercially available, LAN switch, such as LAN switch 2034 (Fig. 10A), which functions as a data communication switch/repeater and is coupled to a coupler and filter unit 2037 which includes couplers 220 and filters 222 as shown in Fig. 3A and forms part of combiner 2036 (Fig. 10A).

The coupler and filter unit 2037 is connected to a plurality of smart power allocation and reporting circuits (SPEARs) 2224. Each SPEAR 2224 is connected to power supply 2032 (Fig. 10A) for receiving electrical power therefrom. It is appreciated that power supply 2032 may be physically located externally of the hub 2010. Power supply 2032 may be provided with a power failure backup facility, such as a battery connection.

Power management & control unit 2038 (Fig. 10A), preferably includes SPEAR controllers 2160 which are preferably connected via a bus 2162 to a microprocessor 2164, a memory 2166 and communication circuitry 2168, which typically includes a modem. The power management & control subsystem 2038 is preferably operative to control the operation of all of the couplers, filters and SPEARs in combiner 2036 as well as to control the operation of the power supply 2032. Power management & control subsystem 2038 preferably communicates with management work station 2040 (Fig. 10A) in order to enable operator control and monitoring of the power allocated to the various LAN nodes in various operational modes of the system.

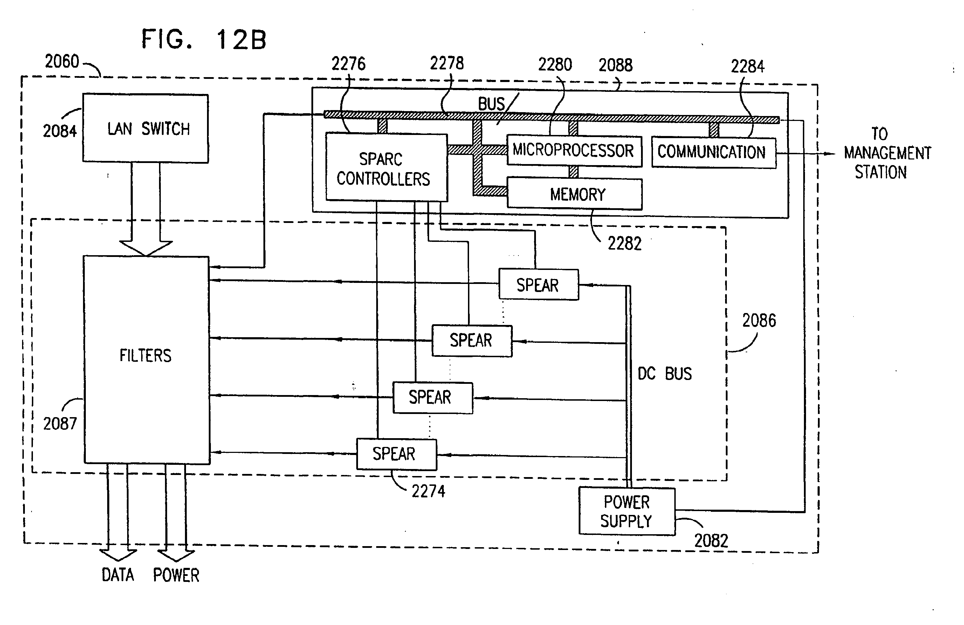

Reference is now made to Fig. 12B, which is a simplified block diagram illustration of a hub, such as hub 2060, useful in the embodiment of Fig. 10B. Hub 2060 preferably comprises a conventional, commercially available, LAN switch, such as LAN switch 2084 (Fig. 10B), which functions as a data communication switch/repeater and is coupled to a filter unit 2087 which includes filters 222 as shown in Fig. 3B and forms part of power supply interface 2086 (Fig. 10B).

The filter unit 2087 is connected to a plurality of smart power allocation and reporting circuits (SPEARs) 2274. Each SPEAR 2274 is connected to power supply 2082 (Fig. 10B) for receiving electrical power therefrom. It is appreciated that power supply 2082 may be physically located externally of the hub 2060. Power supply 2082 may be provided with a power failure backup facility, such as a battery connection.

Power management & control unit 2088 (Fig. 10B), preferably includes SPEAR controllers 2276 which are preferably connected via a bus 2278 to a microprocessor 2280, a memory 2282 and communication circuitry 2284, which typically includes a modem. The power management & control subsystem 2088 is preferably operative to control the operation of all of the filters and SPEARs in power supply interface 2086 as well as to control the operation of the power supply 2082. Power management & control unit 2088 preferably communicates with management work station 2090 (Fig. 10B) in order to enable operator control and monitoring of the power allocated to the various LAN nodes in various operational modes of the system.

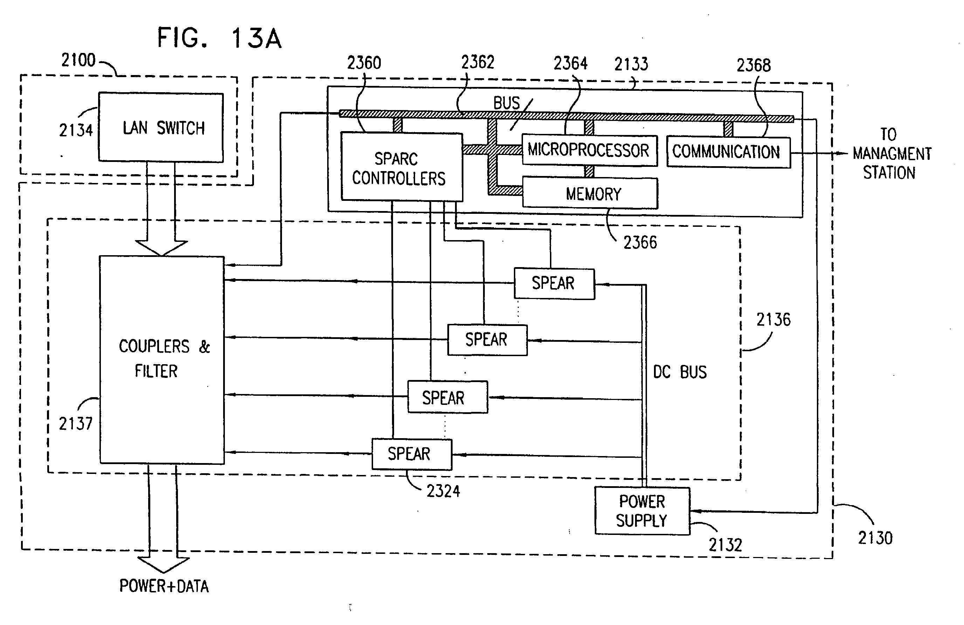

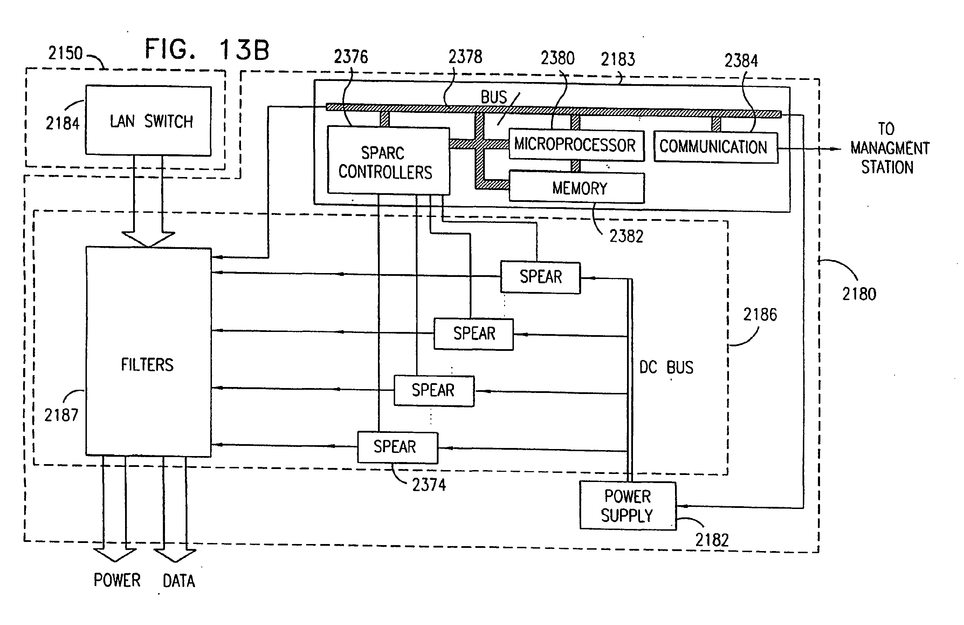

Reference is now made to Fig. 13A, which is a simplified block diagram illustration of a hub and a power supply and management subsystem useful in the embodiment of Fig. 11A. Hub 2100 (Fig. 11A) preferably comprises a conventional, commercially available, LAN switch 2134 which functions as a data communication switch/repeater and is coupled to combiner 2136 forming part of power supply subsystem 2130.

Combiner 2136 includes a coupler and filter unit 2137 which include couplers 320 and filters 322 as shown in Fig. 4A.

The coupler and filter unit 2137 is connected to a plurality of smart power allocation and reporting circuits (SPEARs) 2324. Each SPEAR 2324 is connected to power supply 2132 (Fig. 11A) for receiving electrical power therefrom. It is appreciated that power supply 2132 may be physically located externally of the power supply and management subsystem 2130. Power supply 2132 may be provided with a power failure backup facility, such as a battery connection.

Power management & control unit 2133 (Fig. 11A), preferably includes SPEAR controllers 2360 which are preferably connected via a bus 2362 to a microprocessor 2364, a memory 2366 and communication circuitry 2368, which typically includes a modem. The power management & control unit 2133 is preferably operative to control the operation of all of the couplers, filters and SPEARs in combiner 2136 as well as to control the operation of the power supply 2132.

Power management & control subsystem 2133 preferably communicates with management work station 2140 (Fig. 11A) in order to enable operator control and monitoring of the power allocated to the various LAN nodes in various operational modes of the system.

Reference is now made to Fig. 13B, which is a simplified block diagram illustration of a hub and a power supply and management subsystem useful in the embodiment of Fig. 11B. Hub 2150 (Fig. 11B) preferably comprises a conventional, commercially available, LAN switch 2184 which functions as a data communication switch/repeater and is coupled to power supply interface 2186 forming part of power supply subsystem 2180.

Power supply interface 2186 includes a filter unit 2187 which includes filters 372 as shown in Fig. 4B.

The filter unit 2187 is connected to a plurality of smart power allocation and reporting circuits (SPEARs) 2374. Each SPEAR 2374 is connected to power supply 2182 (Fig. 11B) for receiving electrical power therefrom. It is appreciated that power supply 2182 may be physically located externally of the power supply and management subsystem 2180. Power supply 2182 may be provided with a power failure backup facility, such as a battery connection.

Power management & control unit 2183 (Fig. 11B), preferably includes SPEAR controllers 2376 which are preferably connected via a bus 2378 to a microprocessor 2380, a memory 2382 and communication circuitry 2384, which typically includes a modem. The power management & control unit 2183 is preferably operative to control the operation of all of the filters and SPEARs in power supply interface 2186 as well as to control the operation of the power supply 2182.

Power management & control unit 2183 preferably communicates with management work station 2190 (Fig. 11B) in order to enable operator control and monitoring of the power allocated to the various LAN nodes in various operational modes of the system.

Reference is now made to Figs. 14A & 14B, which are simplified block diagrams of two different node configurations useful in the embodiments of Figs. 10A, 10B, 11A and 11B.

The circuitry seen in Fig. 14A includes circuitry which is preferably embodied in a node, parts of which circuitry may alternatively be embodied in a separator or connector associated with that node.

The node, whatever its nature, for example any of nodes 2012 - 2020 in Fig. 10A, 2062 - 2070 in Fig. 10B, 2112 - 2120 in Fig. 11A or 2162 - 2170 in Fig. 11B, typically includes circuitry which is required for both full functionality and reduced functionality operation, here termed "essential circuitry" and designated by reference numeral 2400, and circuitry which is not required for reduced functionality operation, here termed "non-essential circuitry" and designated by reference numeral 2402. For example, if the node comprises an IP telephone, the essential circuitry 2400 includes that circuitry enabling a user to speak and hear over the telephone, while the non-essential circuitry 2402 provides ancillary functions, such as automatic redial, telephone directory and speakerphone functionality.

The circuitry 2400 and 2402 which is typically part of the node is indicated by reference numeral 2404. Other circuitry, which may or may not be incorporated within the node will now be described. A power supply 2406, such as power supply 510 (Fig. 7A) or 560 (Fig. 7B) receives electrical power via communication cabling from a separator, such as separator 508 shown in Fig. 7A or from a connector, such as connector 558 shown in Fig. 7B. The power supply 2406 supplies electrical power separately to the essential circuitry 2400 and via a switch 2410 to the non-essential circuitry 2402. Switch 2410 may also receive and control the transfer of electrical power from a power supply 2412 which is connected to mains power.

Switch 2410 receives a control input from a controller 2414 which is typically a conventional microcontroller providing a binary output. Controller 2414 receives a control input from a sensor 2416. Preferably controller 2414 also receives a control input from power supply 2412.

Sensor 2416 may be implemented in a number of possible ways. It may, for example, sense the voltage level of the electrical power being supplied to power supply 2406. Additionally or alternatively, it may sense a control signal transmitted thereto, such as a signal transmitted via the communication cabling from the power management & control unit 2038 via the combiner 2036 (Fig. 10A) or from similar circuitry in the embodiment of Fig. 11A. Alternatively, it may sense a control signal transmitted thereto, such as a signal transmitted via the communication cabling from the power management & control unit 2088 via the power supply interface 2086 (Fig. 10B) or from similar circuitry in the embodiment of Fig. 11B.

The sensor 2416 may receive inputs from either or both the power and data outputs of separator 508 (Fig. 7A) or connector 558 (Fig. 7B). The input that it receives from the data output of separator 508 or connector 558 may be tapped from an input to the essential circuitry which may include control signal decoding functionality, but preferably may be derived from an output of the essential circuitry which provides a decoded control signal.

The functionality of controller 2414 may be summarized as follows: When the controller 2414 receives a control input from power supply 2412 indicating that mains power is available, it operates switch 2410 such that power is supplied to both essential circuitry 2400 and non-essential circuitry 2402.

When mains power is not available via power supply 2412, but sensor 2416 indicates that sufficient power is available via the communications cabling, controller 2414 operates switch 2410 such that power is supplied to both essential circuitry 2400 and non-essential circuitry 2402.

When, however, mains power is not available via power supply 2412 and sensor 2416 indicates that sufficient power is not available, controller operates switch 2410 such that adequate power is supplied with highest priority to the essential circuitry 2400. If additional power beyond that required by essential circuitry 2400 is also available, it may be supplied to the non-essential circuitry 2402 via switch 2410.

Alternatively, the operation of switch 2410 by the controller 2414 may not be determined solely.or at all by the power available, but rather solely by control signals sensed by sensor 2416, wholly or partially independently of the available power.

Reference is now made to Fig. 14B. The circuitry seen in Fig. 14B includes circuitry which is preferably embodied in a node, parts of which circuitry may alternatively be embodied in a separator or connector associated with that node. A power supply 2436, such as power supply 510 (Fig. 7A) or 560 (Fig. 7B) receives electrical power via communication cabling from a separator, such as separator 508 shown in Fig. 7A or from a connector, such as connector 558 shown in Fig. 7B. The power supply 2436 supplies electrical power via a switch 2438 to the circuitry 2440 of the node. Switch 2438 may also receive electrical power from a power supply 2442 which is connected to mains power.

Switch 2438 receives a control input from a controller 2444 which is typically a conventional microcontroller providing a binary output. Controller 2444 receives a control input from a sensor 2446 as well as a control input from monitoring circuitry 2448. Monitoring circuitry 2448, which is continually powered by power supply 2436 or power supply 2442, senses a need of the LAN node to shift to full-functionality from sleep mode functionality. It may sense this need, for example, by receiving a user input indicating an intention to use the node or by receiving a control message via the communications cabling. Controller 2444 may also receive a control input from power supply 2442.

Sensor 2446 may be implemented in a number of possible ways. It may, for example, sense the voltage level of the electrical power being supplied to power supply 2446. Additionally or alternatively, it may sense a control signal transmitted thereto, such as a signal transmitted via the communication cabling from the power management & control unit 2038 via the combiner 2036 (Fig. 10A) or from similar circuitry in the embodiment of Fig. 11A. Alternatively, it may sense a control signal transmitted thereto, such as a signal transmitted via the communication cabling from the power management & control unit 2088 via the power supply interface 2086 (Fig. 10B) or from similar circuitry in the embodiment of Fig. 11B.

The functionality of controller 2444 may be summarized as follows: In the absence of an indication to the contrary from the monitoring circuitry 2448 or from sensor 2446, the controller operates switch 2438 so that circuitry 2440 does not operate. When a suitable input is received either from the monitoring circuitry 2448 or from sensor 2446, indicating a need for operation of circuitry 2440, the controller 2444 operates switch 2438 to cause operation of circuitry 2444.

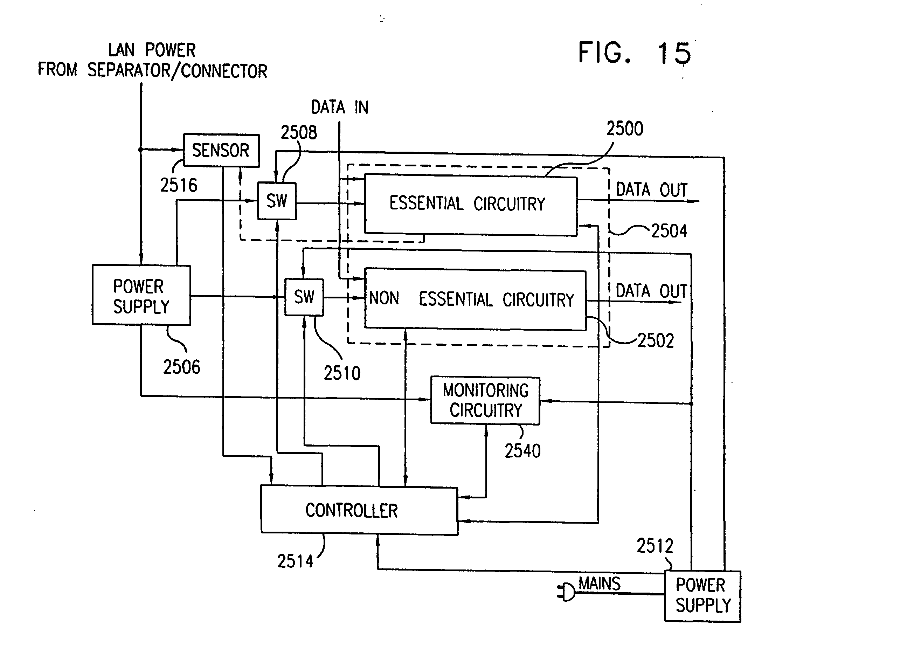

Reference is now made to Fig. 15. The circuitry seen in Fig. 15 includes circuitry which is preferably embodied in a node, parts of which circuitry may alternatively be embodied in a separator associated with that node.

The node, whatever its nature, for example any of nodes 2012 - 2020 in Fig. 10A, 2062 - 2070 in Fig. 10B, 2112 - 2120 in Fig. 11A or 2162 - 2170 in Fig. 11B, typically includes circuitry which is required for both full functionality and reduced functionality operation, here termed "essential circuitry" and designated by reference numeral 2500, and circuitry which is not required for reduced functionality operation, here termed "non-essential circuitry" and designated by reference numeral 2502. For example, if the node comprises an IP telephone, the essential circuitry 2500 includes that circuitry enabling a user to speak and hear over the telephone, while the non-essential circuitry 2502 provides ancillary functions, such as automatic redial, telephone directory and speakerphone functionality.

The circuitry 2500 and 2502 which is typically part of the node is indicated by reference numeral 2504. Other circuitry, which may or may not be incorporated within the node will now be described.

A power supply 2506, such as power supply 510 (Fig. 7A) or 560 (Fig. 7B) receives electrical power via communication cabling from a separator, such as separator 508 shown in Fig. 7A or connector 558 shown in Fig. 7B. The power supply 2506 supplies electrical power separately via a switch 2508 to the essential circuitry 2500 and via a switch 2510 to the non-essential circuitry 2502. Switches 2508 and 2510 may also receive and control the transfer of electrical power from a power supply 2512 which is connected to mains power.

Switches 2508 and 2510 each receive a control input from a controller 2514 which is typically a conventional microcontroller providing a binary output. Controller 2514 receives a control input from a sensor 2516. Preferably controller 2514 also receives a control input from power supply 2512.

Sensor 2516 may be implemented in a number of possible ways. It may, for example, sense the voltage level of the electrical power being supplied to power supply 2506. Additionally or alternatively, it may sense a control signal transmitted thereto, such as a signal transmitted via the communication cabling from the power management & control unit 2038 via the combiner 2036 (Fig. 10A) or from similar circuitry in the embodiment of Fig. 11A. Alternatively, it may sense a control signal transmitted thereto, such as a signal transmitted via the communication cabling from the power management & control unit 2088 via the power supply interface 2086 (Fig. 10B) or from similar circuitry in the embodiment of Fig. 11B.

The sensor 2516 may receive inputs from either or both the power and data outputs of separator 508 (Fig. 7A) or connector 558 (Fig. 7B). The input that it receives from the data output of separator 508 or from connector 558 may be tapped from an input to the essential circuitry which may include control signal decoding functionality, but preferably may be derived from an output of the essential circuitry which provides a decoded control signal.

Monitoring circuitry 2540, which is continually powered by power supply 2506 or power supply 2512, senses a need of the LAN node to shift to full-functionality from sleep mode functionality. It may sense this need, for example, by receiving a user input indicating an intention to use the node or by receiving a control message via the communications cabling.

The functionality of controller 2514 may be summarized as follows: When the controller 2514 receives a control input from power supply 2512 indicating that mains power is available, it operates switches 2508 and 2510 such that power is supplied to both essential circuitry 2500 and non-essential circuitry 2502.

When mains power is not available via power supply 2512, but sensor 2516 indicates that sufficient power is available via the communications cabling, controller 2514 operates switches 2508 and 2510 such that power is supplied to both essential circuitry 2500 and non-essential circuitry 2502.

When, however, mains power is not available via power supply 2512 and sensor 2516 indicates that sufficient power is not available, controller operates switch 2508 such that adequate power is supplied with highest priority to the essential circuitry 2500. If additional power beyond that required by essential circuitry 2500 is also available, it may be supplied to the non-essential circuitry 2502 via switch 2510.

Alternatively, the operation of switch 2510 by the controller 2514 may not be determined solely or at all by the power available, but rather solely by control signals sensed by sensor 2516, wholly or partially independently of the available power.

In the absence of an indication to the contrary from the monitoring circuitry 2540 or from sensor 2516, the controller operates switch 2508 so that circuitry 2500 does not operate. When a suitable input is received either from the monitoring circuitry 2540 or from sensor 2516, indicating a need for operation of circuitry 2500, the controller 2514 operates switch 2508 to cause operation of circuitry 2500.

In accordance with a preferred embodiment of the present invention, the power supply 2406 in the embodiment of Fig. 14A, the power supply 2436 in the embodiment of Fig. 14B and the power supply 2506 in the embodiment of Fig. 15 may be constructed to include rechargeable energy storage elements. In such an arrangement, these power supplies provide limited back-up power for use in the case of a power failure or any other suitable circumstance. They may also enable intermittent operation of LAN nodes in situations where only very limited power may be transmitted over the communication cabling.

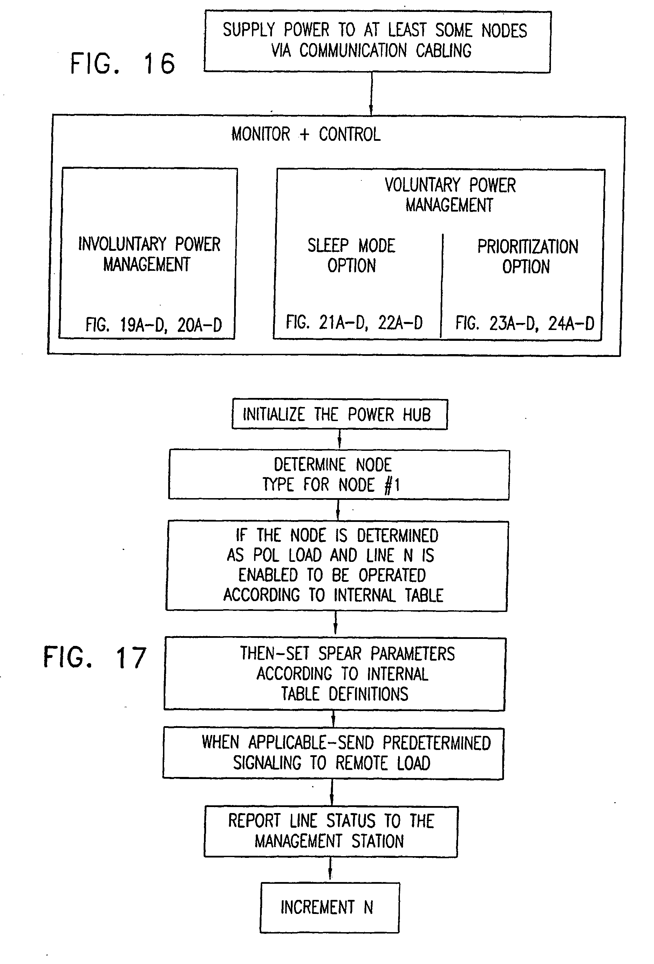

Reference is now made to Fig. 16, which is a generalized flowchart illustrating power management in both normal operation and reduced power modes of the networks of Figs. 10A, 10B, 11A and 11B. As seen in Fig. 16, the power management & control unit 2038 (Fig. 10A), 2088 (Fig. 10B), 2133 (Fig. 11 A) or 2138 (Fig. 11B) governs the supply of power to at least some LAN nodes via the communications cabling, preferably in accordance with a predetermined functionality which is described hereinbelow with reference to Fig. 17.

The power management & control unit 2038 (Fig. 10A), 2088 (Fig. 10B), 2133 (Fig. 11A) or 2138 (Fig. 11B) monitors and manages the power consumption of those LAN nodes. It senses overcurrent situations and effects power cutoffs as appropriate. The power management & control unit 2038 (Fig. 10A), 2088 (Fig. 10B), 2133 (Fig. 11A) or 2138 (Fig. 11B) may operate in either an involuntary power management mode or a voluntary power management mode. Normally the mode of operation is selected at the time that the LAN is configured, however, it is possible for mode selection to take place thereafter.

In an involuntary power management mode of operation, if the power management & control unit senses a situation of insufficient power availability for power transmission over the communications cabling to the LAN nodes, it supplies a reduced amount of power to at least some of the LAN nodes and may also provide control messages or other control inputs to the LAN nodes to cause them to operate in a reduced power mode. In a voluntary power management mode of operation, reduced power availability is mandated by management at certain times of reduced activity, such as nights and weekends, in order to save energy costs.

In one embodiment of a voluntary power management mode of operation, management determines which nodes receive what level of power at what time. This is a non-dynamic, not condition responsive embodiment and is not dealt with in detail in the description which follows.

In another embodiment of a voluntary power management mode of operation, the management determines a level of available power at a given time and the functionality of the present invention treats the management-mandated power level as the available power. The operation of the present invention may be similar to that for involuntary power management, however, the thresholds and responses may differ.

Reference is now made to Fig. 17, which illustrates a preferred methodology for supply of electrical power to at least some of the LAN nodes in accordance with the present invention.

Following initialization of hub 2010 (Fig. 10A), 2060 (Fig. 10B) or power supply and management subsystem 2130 (Fig. 11A), 2180 (Fig. 11B) the communications cabling connection to nodes, to which it is intended to transmit power over the communications cabling, is interrogated.

Initialization of hub 2010 (Fig. 10A), 2060 (Fig. 10B) or subsystem 2130 (Fig. 11A), 2180 (Fig. 11B) preferably includes automatically actuated test procedures which ensure proper operation of the elements of the hub 2010 (Fig. 10A), 2060 (Fig. 10B) or subsystem 2130 (Fig. 11A), 2180 (Fig. 11B) communication with management work station 2040 (Fig. 10A), 2090 (Fig. 10B), 2140 (Fig. 11A) or 2190 (Fig. 11B) if present to determine desired operational parameters of the hub or subsystem for each node and setting up an internal data base including desired operational parameters for each node. During normal operation of the system, the various operational parameters for each node may be modified by an operator employing the management work station 2040 (Fig. 10A), 2090 (Fig. 10B), 2140 (Fig. 11A), 2190 (Fig. 11B).

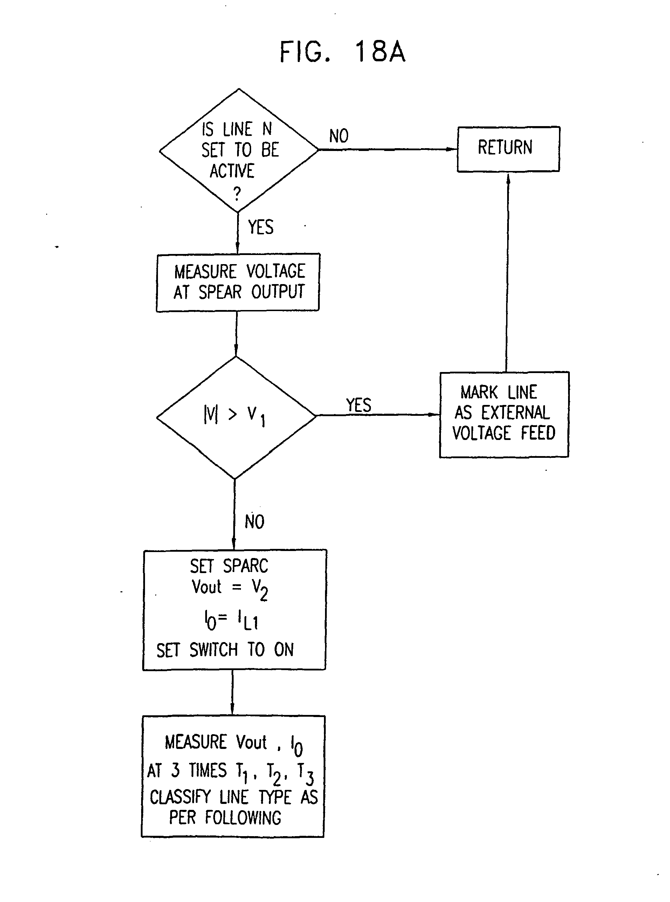

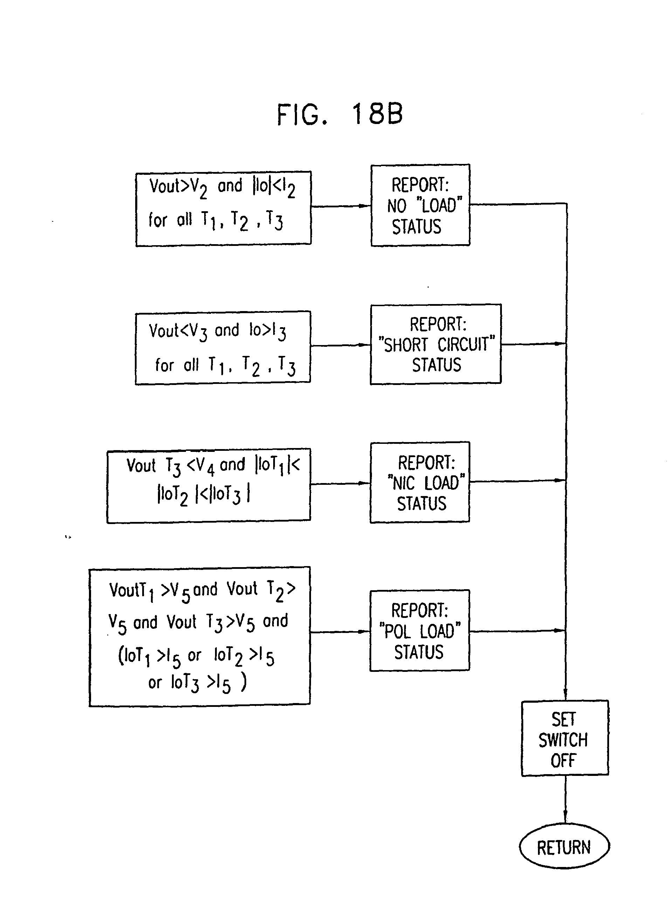

The interrogation is described hereinbelow in greater detail with reference to Figs. 18A and 18B.

If the node being interrogated is determined to have power-over-LAN type characteristics and is classified in the internal data base as a node to which it is intended to transmit power over the communications cabling, the SPEAR parameters are set based on the contents of the internal data base and power is transmitted to the node via the communications cabling. Where appropriate, suitable signaling messages are sent to the remote node and the status of the line connected to the node is reported to the management work station 2040.

The foregoing procedure is then repeated sequentially for each line of the hub 2110 or subsystem 2130, to which it is intended to transmit power over the communications cabling.

Reference is now made to Figs. 18A and 18B, which together are a flowchart illustrating a preferred embodiment of the interrogation and initial power supply functionality which appears in Fig. 17.

As seen in Figs. 18A & 18B, initially the voltage is measured at the output of the SPEAR 224 (Fig. 3A), 274 (Fig. 3B), 324 (Fig. 4A) or 374 (Fig 4B) corresponding to a line to which it is intended to transmit power over the communications cabling. If the absolute value of the voltage is higher than a predetermined programmable threshold V1, the line is classified as having a voltage present thereon from an external source. In such a case power is not supplied thereto over the communications cabling.

If the absolute value of the voltage is not higher than the predetermined programmable threshold V1, the SPEAR current limit IO is set to a predetermined programmable value IL1. SPEAR switch 408 (Fig. 5) is turned ON.

The voltage and the current at the output of the SPEAR are measured, typically at three predetermined programmable times T1, T2 and T3. Times T1, T2 and T3 are typically determined by a time constant determined by the inductance of typical NIC transformers and the maximum roundtrip DC resistance of a maximum allowed length of communications cabling between the hub or subsystem and a node. Typically, T1, T2 and T3 are equal to 1, 2 and 10 times the above time constant.

Typical values for T1, T2 and T3 are 4 msec, 8 msec and 40 msec, respectively.

Based on these measurements the status of the node and the line to which it is connected are determined. A typical set of determinations is set forth hereinbelow:

| | |
|---|---|
| NO LOAD | WHEN Vout > V2 AND THE ABSOLUTE VALUE OF IO < I2, FOR ALL T1, T2, T3 |
| SHORT CIRCUIT | WHEN Vout < V3 AND THE ABSOLUTE VALUE OF IO > I3, FOR ALL T1, T2, T3 |
| NIC LOAD | WHEN VoutT3 < V4 AND THE ABSOLUTE VALUE OF IOT1<IOT2<IOT3 |
| POL LOAD | WHEN VoutT1>V5 AND VoutT2>V5 AND VoutT3>V5 AND THE ABSOLUTE VALUE OF IOT1>I5 OR THE ABSOLUTE VALUE OF IOT2>I5 OR THE ABSOLUTE VALUE OF IOT3>I5. |

where
A NO LOAD condition is one in which a node is not connected to the line.
A SHORT CIRCUIT condition is one in which a short circuit exists across positive and negative conductors of the line upstream of the node or in the node.
A NIC LOAD condition is one in which a Network Interface Card line transformer is connected across the line at the node.
A POL LOAD condition is one in which a Power Over LAN separator is connected across the line at the node.
V0 is the voltage at the output of the power supply distributor for the line.
V1 is a predetermined programmable value which is arrived at by measuring the highest peak value of voltage Vout for a period of a few minutes when power is not transmitted along the line;
V2 is a predetermined programmable value which is arrived at by measuring the lowest value of voltage Vout for a period of a few minutes when power is not transmitted along the line and when no load is connected between +Vout and -Vout at the output of said power supply distributor for the line;
V3 is a predetermined programmable value which is arrived at by measuring the highest peak value of voltage Vout for a period of a few minutes when power is not transmitted along the line and when a resistance is connected between +Vout and -Vout at the output of said power supply distributor for the line;
V4 is a predetermined programmable value which is preferably arrived at by measuring the highest peak value of voltage Vout for a period of a few minutes when power is not transmitted along the line and when a resistance is connected between +Vout and -Vout at the output of said power supply distributor for the line;
V5 is a predetermined programmable value, which represents a typical threshold value of Vin at which a node power supply commences operation;
VoutT1 is Vout measured at a first time T1;
VoutT2 is Vout measured at a second time T2;
VoutT3 is Vout measured at a third time T3;
IO is the current flowing at the output of the power supply distributor for the line;
IL1 is the predetermined programmable value of the output of the power supply distributor for the line;
I2 is a predetermined programmable value which is arrived at by measuring the maximum peak value of the current IO for a period of a few minutes when power is not transmitted along the line and when no load is connected at the output of the power supply distributor for the line;
13 is a predetermined programmable value which is arrived at by measuring the minimum value of the current IO for a period of a few minutes when power is not transmitted along the line and when a resistance is connected between +Vout and -Vout at the output of said power supply distributor for the line;
15 is a predetermined programmable value which is arrived at by measuring the maximum peak value of the current IO for a period of a few minutes when power is not transmitted along the line and when no load is connected at the output of the power supply distributor for the line;
IOT1 is IO measured at time T1;
IOT2 is IO measured at time T2; and
IOT3 is IO measured at time T3.

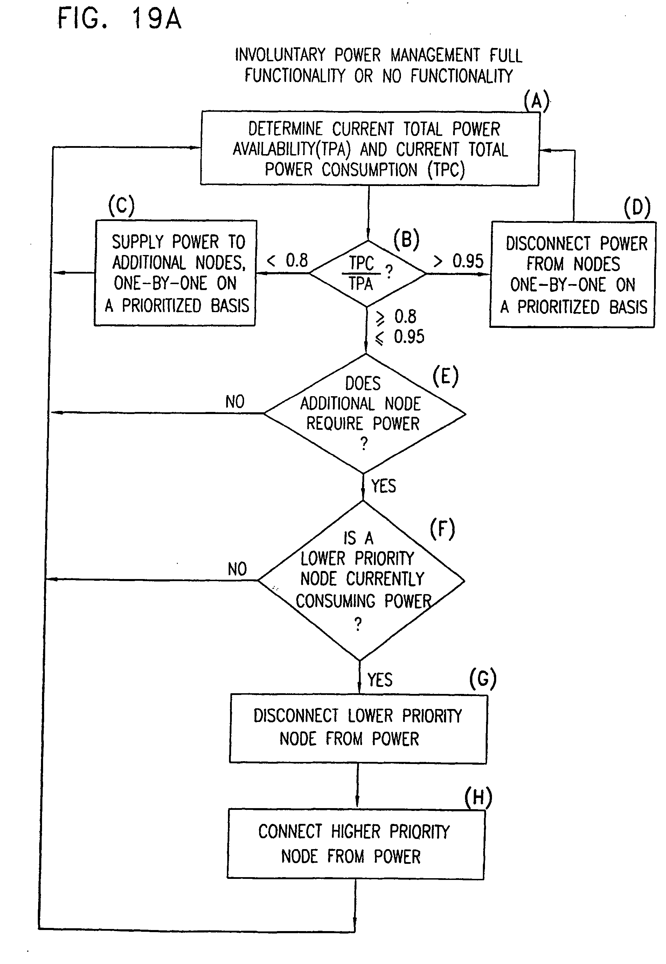

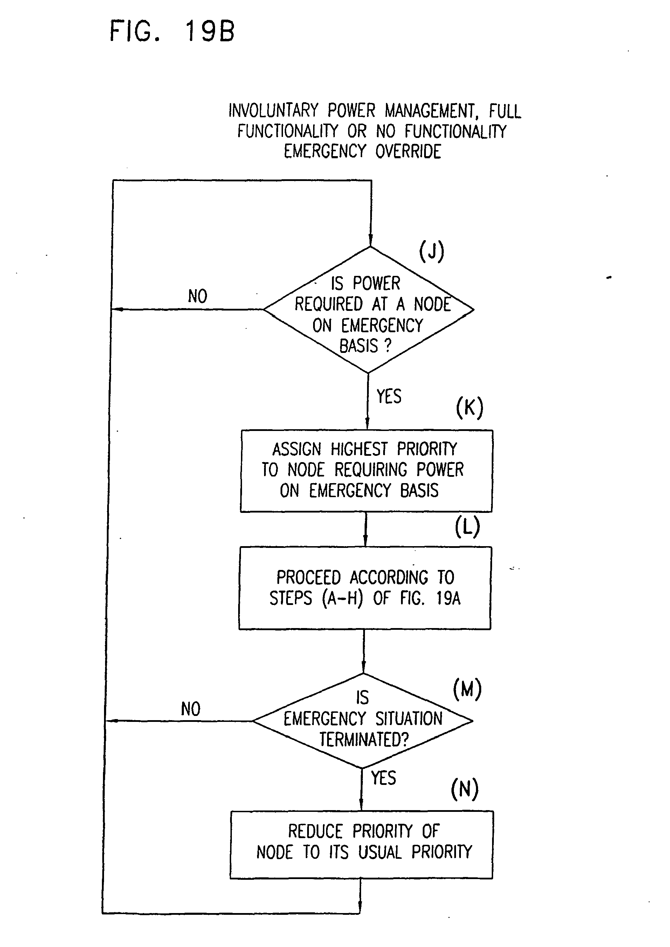

Reference is now made to Figs. 19A - 19D, 20A - 20D, 21A - 21D, 22A - 22D, 23A - 23D and 24A - 24D, which illustrate various functionalities for monitoring and managing power consumption in accordance with a preferred embodiment of the present invention. Most or all of the functionalities described hereinbelow employ a basic monitoring and managing technique which is now described:

In accordance with a preferred embodiment of the present invention, the functionality for monitoring and managing power consumption during normal operation includes sensing current on all lines. This is preferably carried out in a generally cyclic manner. The sensed current is compared with programmably predetermined reference values for each line. Alternatively or additionally, voltage may be sensed and employed for this purpose. On the basis of this comparison, each node is classified as being over-current, under-current or normal. The over-current classification may have programmably adjustable thresholds, such as high over-current, and regular over-current. The normal classification may have sub-classifications, such as active mode, sleep mode, and low-power mode.

The system is operative to control the operation of nodes classified as being over-current in the following manner: If the current at a node exceeds a regular over current threshold for at least a predetermined time, power to that node is cut off after the predetermined time. In any event, current supplied to a node is not permitted to exceed the high over-current threshold. In accordance with a preferred embodiment of the present invention, various intermediate thresholds may be defined between the regular over-current threshold and the high over-current threshold and the aforesaid predetermined time to cut-off is determined as a function of which of such intermediate thresholds is exceeded.

The system is operative to control the operation of nodes classified as being under-current in the following manner: Within a relatively short predetermined time following detection of an under-current node, which predetermined time is selected to avoid undesired response to noise, supply of current to such node is terminated.

In parallel to the functionality described hereinabove, the overall current flow to all of the nodes over all of the lines is monitored. This monitoring may take place in a centralized manner or alternatively may be based on an extrapolation of information received in the line-by-line monitoring described hereinabove.

The sensed overall current is compared with a programmably predetermined reference value. On the basis of this comparison, the entire power supply and management subsystem 2180 and the nodes connected thereto are together classified as being over-current or normal. The over-current classification may have programmably adjustable thresholds, such as high over-current, and regular over-current.

The system is operative to control the operation of hubs or power supply and management subsystems classified as being over-current in the following manner: If the overall current exceeds a regular overall over-current threshold for at least a predetermined time, power to at least some nodes is either reduced or cut off after the predetermined time. In any event, the overall current is not permitted to exceed the high overall over-current threshold. In accordance with a preferred embodiment of the present invention, various intermediate thresholds may be defined between the regular overall over-current threshold and the high overall over-current threshold and the aforesaid predetermined time to cut-off is determined as a function of which of such intermediate thresholds is exceeded.

Additionally in parallel to the functionality described hereinabove, the system is operative to report either continuously or intermittently, the current level classification of each node and of the entire hub or power supply and management subsystem to an external monitoring system.

Further in parallel to the functionality described hereinabove, the system is operative to notify nodes of the impending change in the current supply thereto.

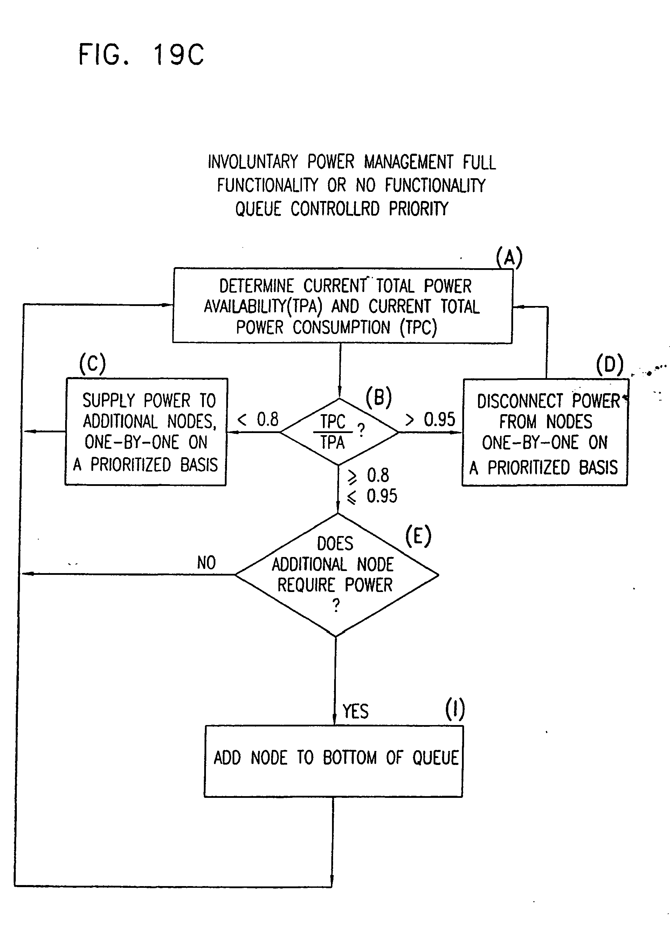

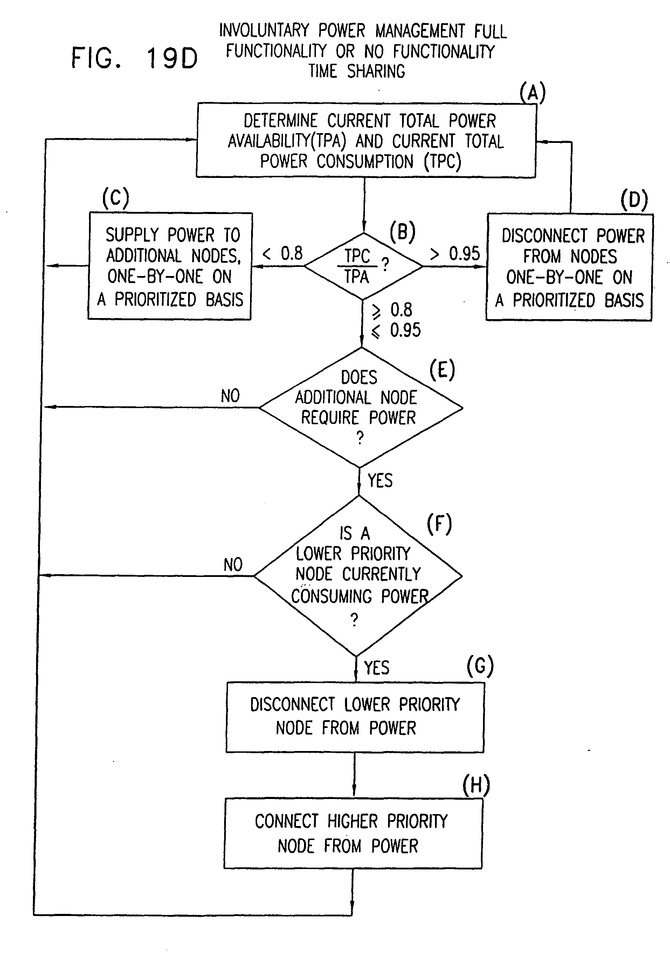

Reference is now made to Figs. 19A, 19B, 19C and 19D, which are generalized flowcharts each illustrating one possible mechanism for full or no functionality operation in an involuntary power management step in the flowchart of Fig. 16.

Fig. 19A illustrates a basic technique useful for full or no functionality operation in involuntary power management in accordance with a preferred embodiment of the present invention. As seen in Fig. 19A, the system initially determines the total power available to it as well as the total power that it is currently supplying to all nodes. The relationship between the current total power consumption (TPC) to the current total power availability (TPA) is then determined.

If TPC/TPA is less than typically 0.8, additional nodes are supplied full power one-by-one on a prioritized basis. If TPC/TPA is greater than typically 0.95, power to individual nodes is disconnected one-by-one on a prioritized basis.

If TPC/TPA is equal to or greater than typically 0.8 but less than or equal to typically 0.95, an inquiry is made as to whether a new node requires power. If so, and a node having a lower priority is currently receiving power, the lower priority node is disconnected from power and the higher priority node is connected to power.

Fig. 19B illustrates a technique useful for full or no functionality operation with emergency override in involuntary power management in accordance with a preferred embodiment of the present invention. The technique of Fig. 19B can be used in the environment of the functionality of Fig. 19A.

As seen in Fig. 19B, the system senses an emergency need for power at a given node. In such a case, the given node is assigned the highest priority and the functionality of Fig. 19A is applied. Once the emergency situation no longer exists, the priority of the given node is returned to its usual priority and the functionality of Fig. 19A operates accordingly.

Fig. 19C illustrates a technique useful for full or no functionality operation having queue-controlled priority in involuntary power management in accordance with a preferred embodiment of the present invention. As seen in Fig. 19C, the system initially determines the total power available to it as well as the total power that it is currently supplying to all nodes. The relationship between the current total power consumption (TPC) to the current total power availability (TPA) is then determined.

IfTPC/TPA is less than typically 0.8, additional nodes are supplied full power one-by-one on a queue-controlled, prioritized basis, typically on a first come, first served basis. If TPC/TPA is greater than typically 0.95, power to individual nodes is disconnected one-by-one on a prioritized basis.

If TPC/TPA is equal to or greater than typically 0.8 but less than or equal to typically 0.95, an inquiry is made as to whether a new node requires power. If so, that node is added to the bottom of the queue.

Fig. 19D illustrates a technique useful for full or no functionality operation on a time-sharing, prioritized basis in involuntary power management in accordance with a preferred embodiment of the present invention. As seen in Fig. 19D, the system initially determines the total power available to it as well as the total power that it is currently supplying to all nodes. The relationship between the current total power consumption (TPC) to the current total power availability (TPA) is then determined.

If TPC/TPA is less than typically 0.8, additional nodes are supplied full power one-by-one on a time-sharing, prioritized basis, typically on a basis that the node having the longest duration of use is cut off first. If TPC/TPA is greater than typically 0.95, power to individual nodes is disconnected one-by-one on a prioritized basis.

If TPC/TPA is equal to or greater than typically 0.8 but less than or equal to typically 0.95, an inquiry is made as to whether a new node requires power. If so, and a node having a lower priority, in the sense that it has been receiving power for a longer time, which is above a predetermined minimum time, is currently receiving power, the lower priority node is disconnected from power and the higher priority node is connected to power.

It is appreciated that normally it is desirable that the node be informed in advance in a change in the power to be supplied thereto. This may be accomplished by signalling along the communications cabling in a usual data transmission mode or in any other suitable mode.

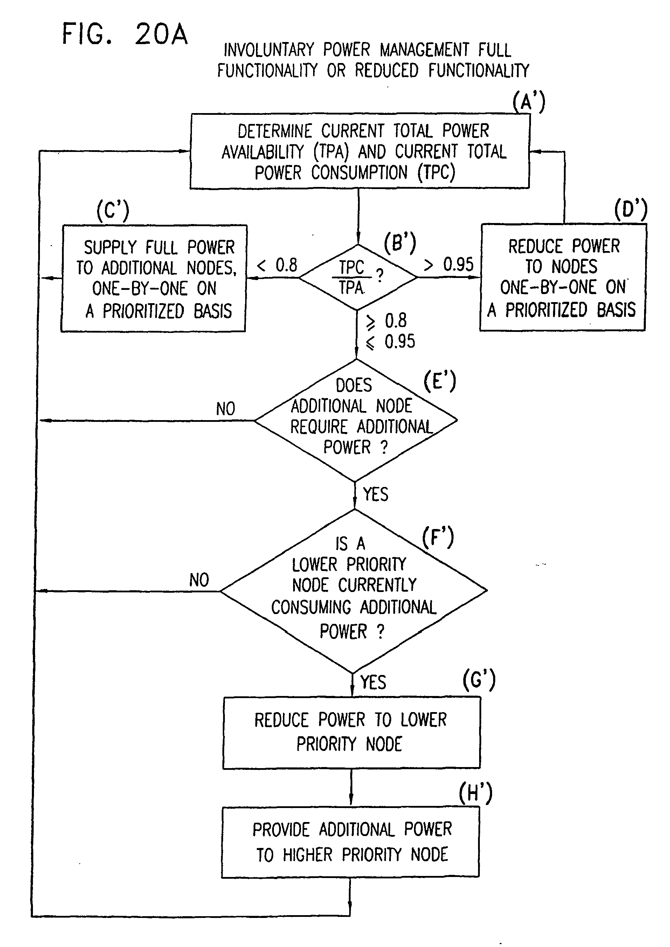

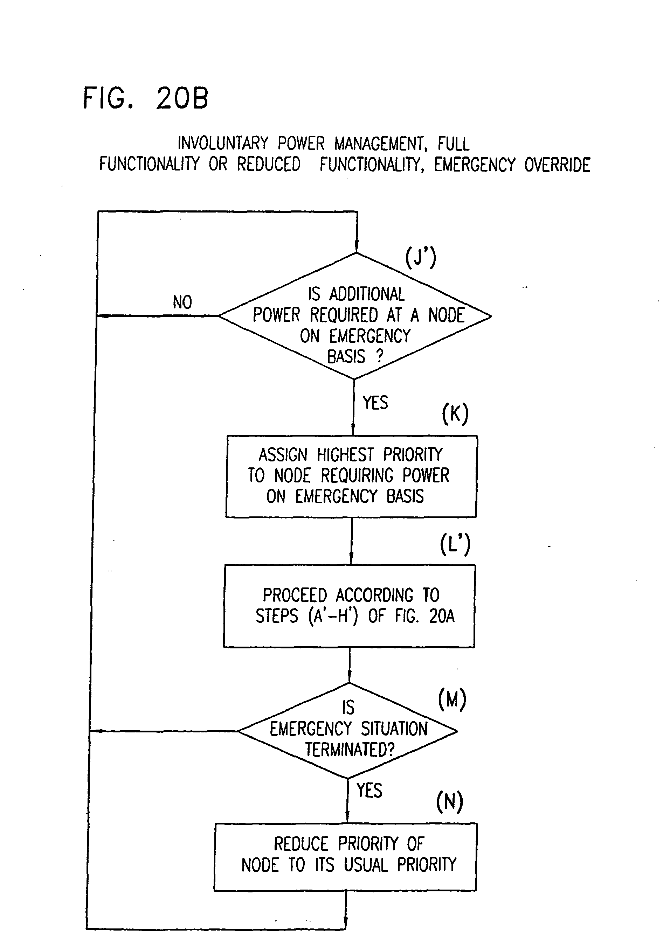

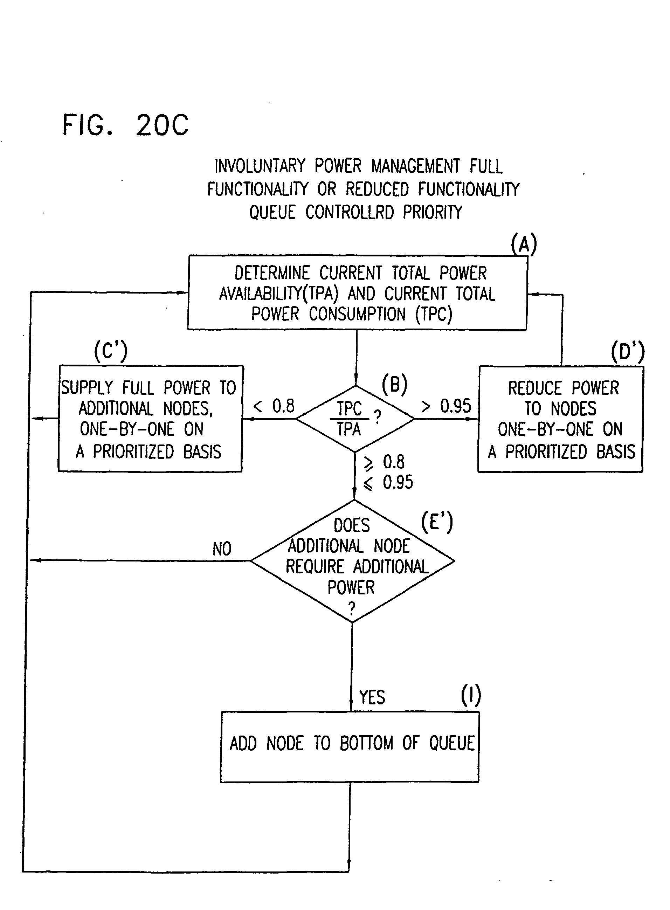

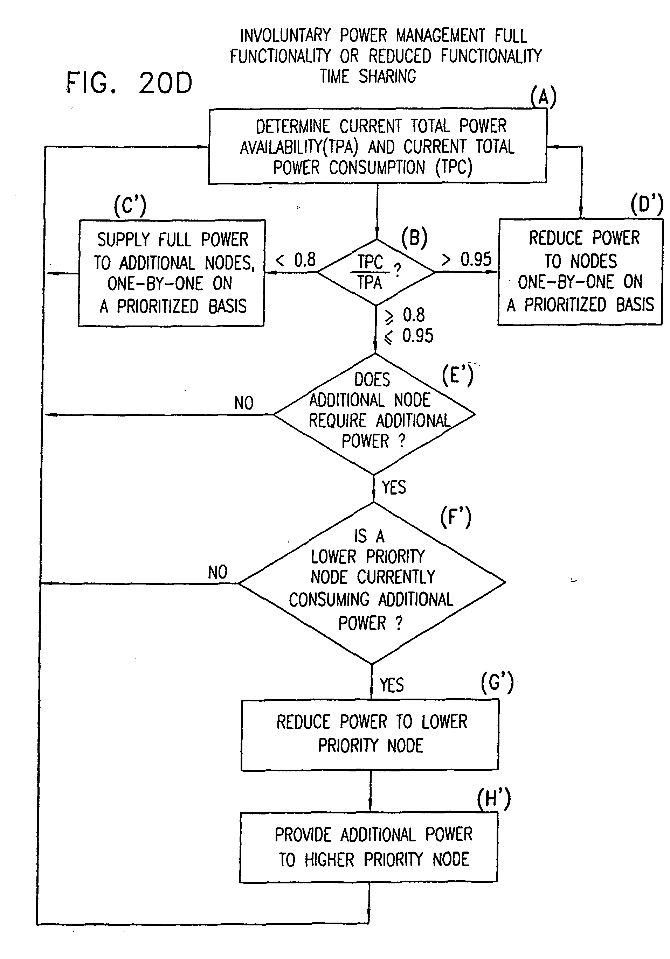

Reference is now made to Figs. 20A, 20B, 20C and 20D, which are generalized flowcharts each illustrating one possible mechanism for full or reduced functionality operation in an involuntary power management step in the flowchart of Fig. 16.

Fig. 20A illustrates a basic technique useful for full or reduced functionality operation in involuntary power management in accordance with a preferred embodiment of the present invention. As seen in Fig. 20A, the system initially determines the total power available to it as well as the total power that it is currently supplying to all nodes. The relationship between the current total power consumption (TPC) to the current total power availability (TPA) is then determined.

If TPC/TPA is less than typically 0.8, additional nodes are supplied full power one-by-one on a prioritized basis. If TPC/TPA is greater than typically 0.95, power to individual nodes is reduced one-by-one on a prioritized basis.

If TPC/TPA is equal to or greater than typically 0.8 but less than or equal to typically 0.95, an inquiry is made as to whether a node requires additional power or a new node requires power. If so, and a node having a lower priority is currently receiving power, the lower priority node has its power supply reduced and the higher priority node is provided with power.

Fig. 20B illustrates a technique useful for full or reduced functionality operation with emergency override in involuntary power management in accordance with a preferred embodiment of the present invention. The technique of Fig. 20B can be used in the environment of the functionality of Fig. 20A.

As seen in Fig. 20B, the system senses an emergency need for additional power at a given node. In such a case, the given node is assigned the highest priority and the functionality of Fig. 20A is applied. Once the emergency situation no longer exists, the priority of the given node is returned to its usual priority and the functionality of Fig. 20A operates accordingly.

Fig. 20C illustrates a technique useful for full or reduced functionality operation having queue-controlled priority in involuntary power management in accordance with a preferred embodiment of the present invention. As seen in Fig. 20C, the system initially determines the total power available to it as well as the total power that it is currently supplying to all nodes. The relationship between the current total power consumption (TPC) to the current total power availability (TPA) is then determined.

If TPC/TPA is less than typically 0.8, additional nodes are supplied power or nodes are supplied additional power one-by-one on a queue-controlled, prioritized basis, typically on a first come, first served basis. If TPC/TPA is greater than typically 0.95, power to individual nodes is reduced one-by-one on a prioritized basis.

If TPC/TPA is equal to or greater than typically 0.8 but less than or equal to typically 0.95, an inquiry is made as to whether a node requires additional power or a new node requires power. If so, that node is added to the bottom of the queue.

Fig. 20D illustrates a technique useful for full or reduced functionality operation on a time-sharing, prioritized basis in involuntary power management in accordance with a preferred embodiment of the present invention. As seen in Fig. 20D, the system initially determines the total power available to it as well as the total power that it is currently supplying to all nodes. The relationship between the current total power consumption (TPC) to the current total power availability (TPA) is then determined.

If TPC/TPA is less than typically 0.8, additional nodes are supplied power or nodes are supplied additional power one-by-one on a time-sharing, prioritized basis, typically on a basis that the node having the longest duration of use is cut off first. If TPC/TPA is greater than typically 0.95, power to individual nodes is reduced one-by-one on a prioritized basis.

If TPC/TPA is equal to or greater than typically 0.8 but less than or equal to typically 0.95, an inquiry is made as to whether a new node requires power or a node requires additional power. If so, and a node having a lower priority, in the sense that it has been receiving power for a longer time, which is above a predetermined minimum time, is currently receiving full power, the lower priority node has its power supply reduced and the higher priority node is provided with power.

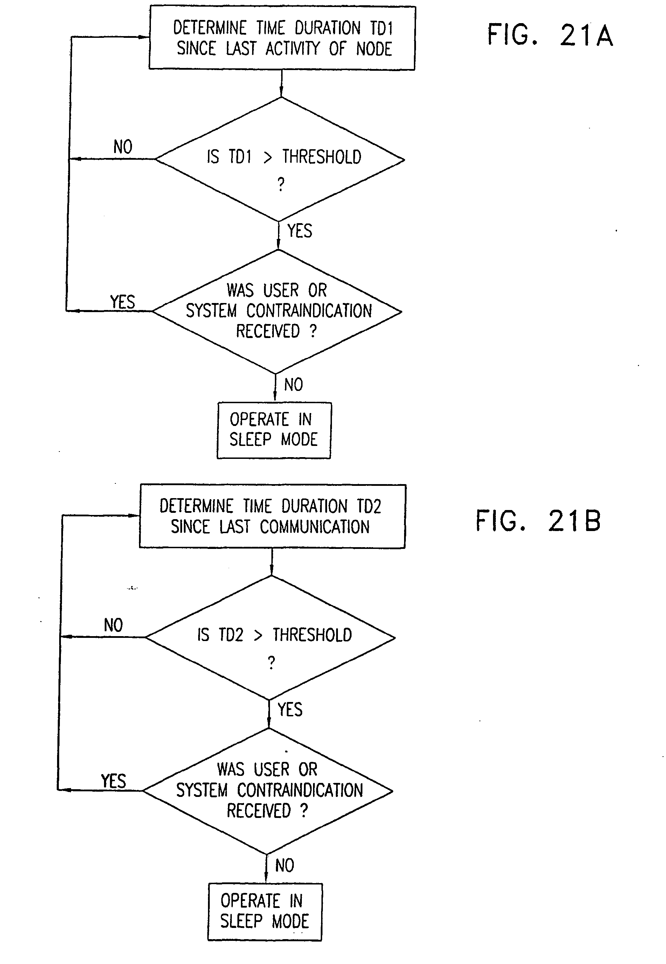

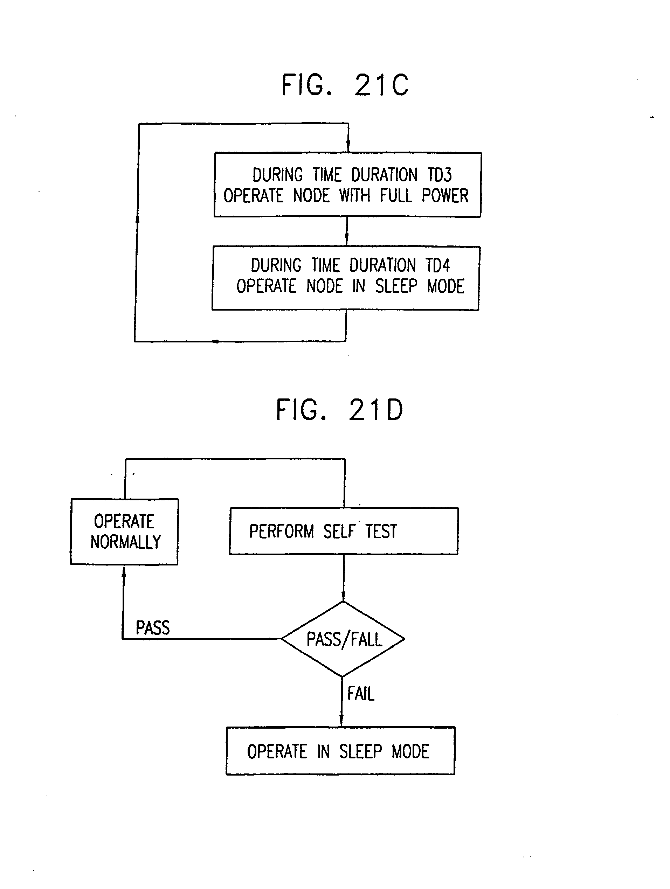

Reference is now made to Figs. 21A, 21B, 21C and 21D are generalized flowcharts each illustrating one possible mechanism for node initiated sleep mode operation in a voluntary power management step in the flowchart of Fig. 16.

Fig. 21 A illustrates a situation wherein a node operates in a sleep mode as the result of lack of activity for at least a predetermined amount of time. As seen in Fig. 21A, the time duration TD1 since the last activity of the node is measured. If TD1 exceeds typically a few seconds or minutes, in the absence of a user or system input contraindicating sleep mode operation, the node then operates in a sleep mode, which normally involves substantially reduced power requirements.

Fig. 21B illustrates a situation wherein a node operates in a sleep mode as the result of lack of communication for at least a predetermined amount of time. As seen in Fig. 21B, the time duration TD2 since the last communication of the node is measured. If TD2 exceeds typically a few seconds or minutes, in the absence of a user or system input contraindicating sleep mode operation, the node then operates in a sleep mode, which normally involves substantially reduced power requirements.

Fig. 21C illustrates a situation wherein a node operates in a sleep mode in response to clock control, such that the node is active within a periodically occurring time slot, absent an input from the system or the user. As seen in Fig. 21C, the time slots are defined as times TD3 while the remaining time is defined as TD4. The node determines whether it is currently within the time slot TD3. If not, i.e. during times TD4, it operates in the sleep mode.

Fig. 21D illustrates a situation wherein a node operates in a sleep mode as the result of a sensed fault condition. As seen in Fig. 21D, the node periodically performs a self-test. The self test may be, for example, an attempt to communicate with the hub or power supply and management subsystem . If the node passes the test, it operates normally. If the node fails the test, it operates in the sleep mode.

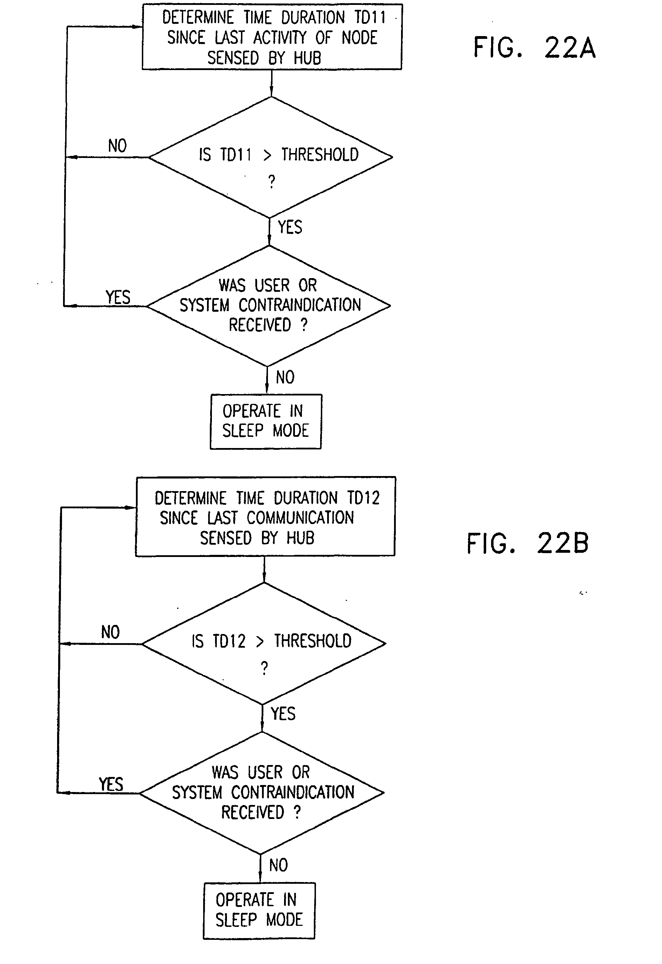

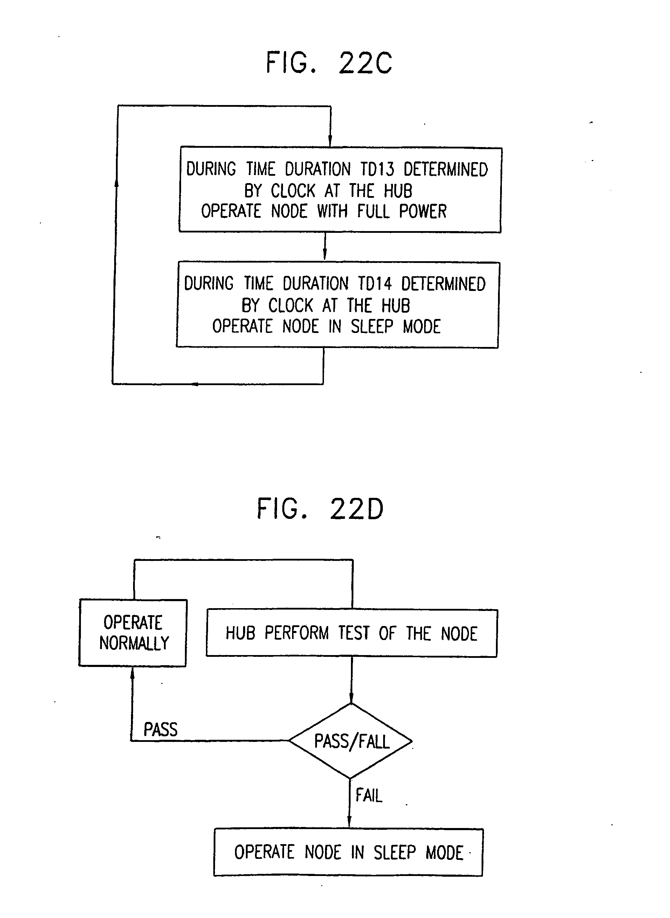

Reference is now made to Figs. 22A, 22B, 22C and 22D, which are generalized flowcharts each illustrating one possible mechanism for hub or power supply and management subsystem initiated sleep mode operation in a voluntary power management step in the flowchart of Fig. 16.

Fig. 22A illustrates a situation wherein a node operates in a sleep mode as the result of lack of activity for at least a predetermined amount of time. As seen in Fig. 22A, the time duration TD 1 since the last activity of the node as sensed by the hub or power supply and management subsystem is measured. If TD1 exceeds typically a few seconds or minutes, in the absence of a user or system input contraindicating sleep mode operation, the node is then operated in a sleep mode, which normally involves substantially reduced power requirements.

Fig. 22B illustrates a situation wherein a node is operated in a sleep mode as the result of lack of communication for at least a predetermined amount of time. As seen in Fig. 22B, the time duration TD2 since the last communication of the node as sensed by the hub or power supply and management subsystem is measured. If TD2 exceeds typically a few seconds or minutes, in the absence of a user or system input contraindicating sleep mode operation, the node is then operated in a sleep mode, which normally involves substantially reduced power requirements.

Fig. 22C illustrates a situation wherein a node is operated in a sleep mode in response to clock control from the hub or power supply and management subsystem , such that the node is active within a periodically occurring time slot, absent an input from the system or the user. As seen in Fig. 22C, the time slots are defined as times TD3 while the remaining time is defined as TD4. The node determines whether it is currently within the time slot TD3. If not, i.e. during times TD4, it operates in the sleep mode. Alternatively, the hub or power supply and management subsystem controls the node operation by governing the power supply to the node in accordance with the aforesaid clock control.

Fig. 22D illustrates a situation wherein a node is operated in a sleep mode as the result of a fault condition sensed by the hub or power supply and management subsystem. As seen in Fig. 22D, the hub or power supply and management subsystem periodically performs a test of the node. The self test may be, for example, an attempt to communicate with the hub or power supply and management subsystem . If the node passes the test, it is operated normally. If the node fails the test, it is operated in the sleep mode.

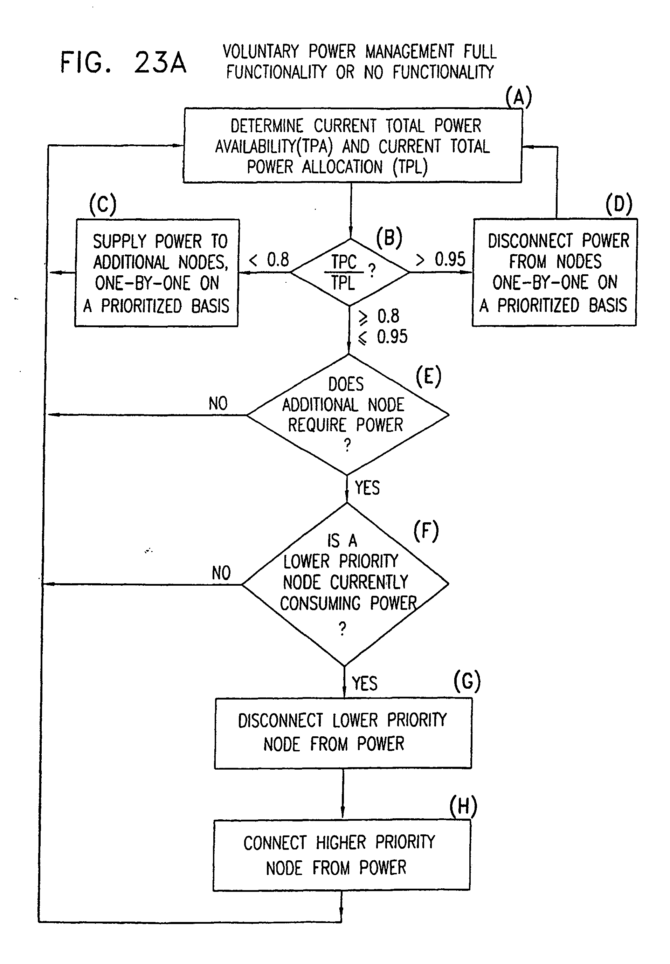

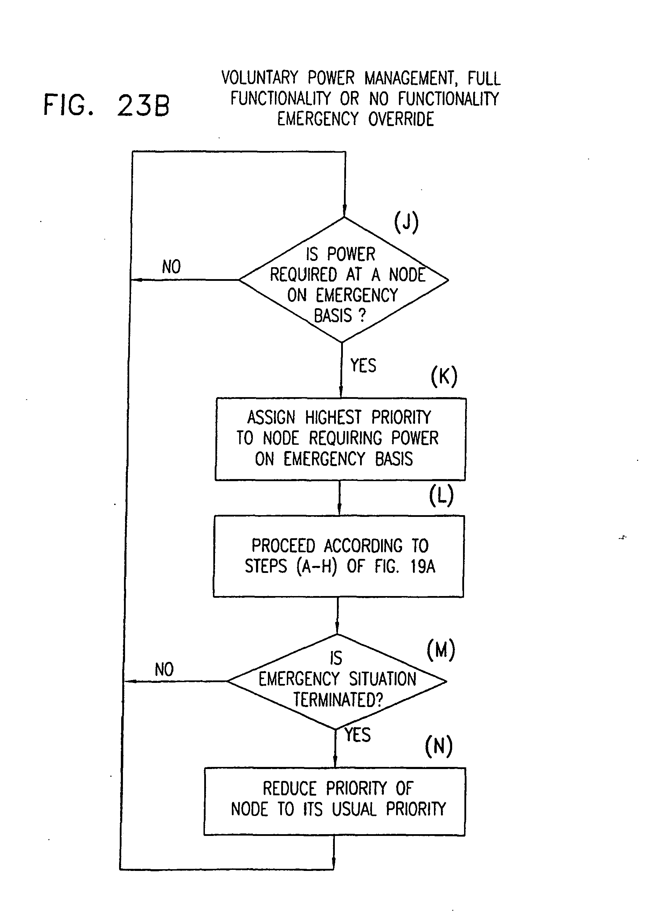

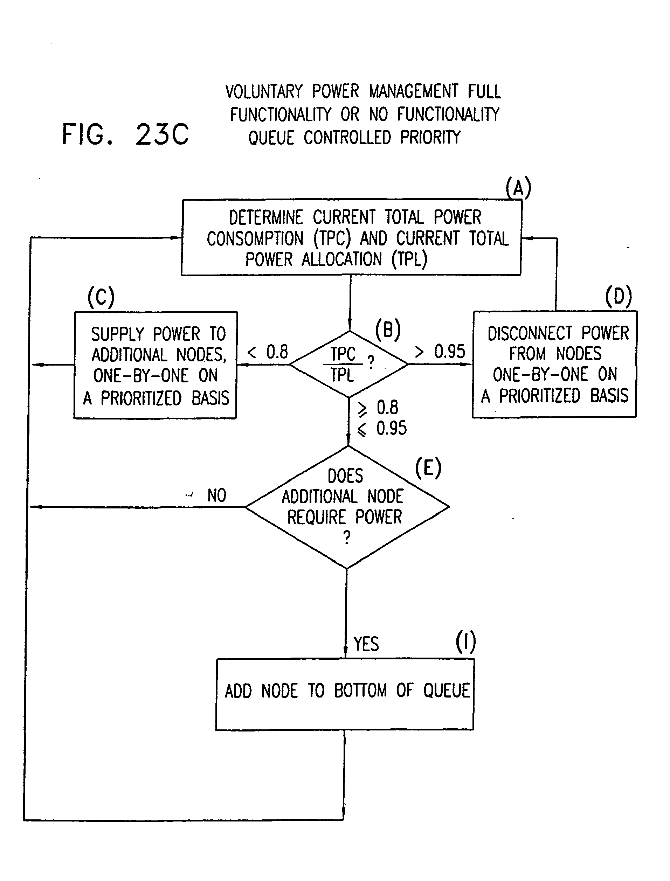

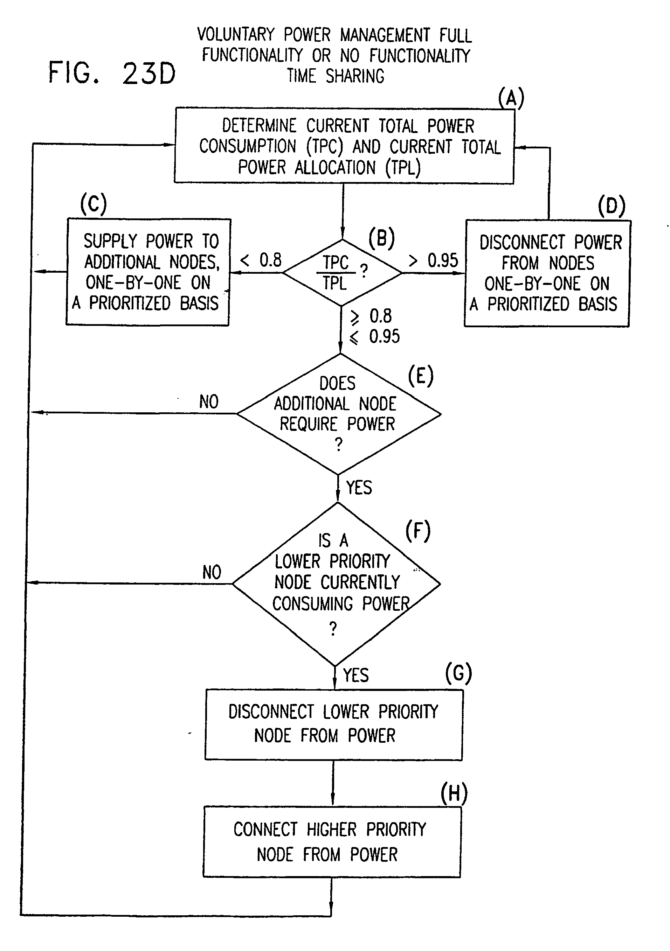

Reference is now made to Figs. 23A, 23B, 23C and 23D, which are generalized flowcharts each illustrating one possible mechanism for full or no functionality operation in a voluntary power management step in the flowchart of Fig. 16.

Fig. 23A illustrates a basic technique useful for full or no functionality operation in voluntary power management in accordance with a preferred embodiment of the present invention. As seen in Fig. 23A, the system initially determines the total power allocated to it by management at a given time in accordance with a power conservation program as well as the total power that it is currently supplying to all nodes. The relationship between the current total power consumption (TPC) to the current total power allocation (TPL) is then determined.

If TPC/TPL is less than typically 0.8, additional nodes are supplied full power one-by-one on a prioritized basis. If TPC/TPL is greater than typically 0.95, power to individual nodes is disconnected one-by-one on a prioritized basis.

If TPC/TPL is equal to or greater than typically 0.8 but less than or equal to typically 0.95, an inquiry is made as to whether a new node requires power. If so, and a node having a lower priority is currently receiving power, the lower priority node is disconnected from power and the higher priority node is connected to power.

Fig. 23B illustrates a technique useful for full or no functionality operation with emergency override in voluntary power management in accordance with a preferred embodiment of the present invention. The technique of Fig. 23B can be used in the environment of the functionality of Fig. 23A.

As seen in Fig. 23B, the system senses an emergency need for power at a given node. In such a case, the given node is assigned the highest priority and the functionality of Fig. 23A is applied. Once the emergency situation no longer exists, the priority of the given node is returned to its usual priority and the functionality of Fig. 23A operates accordingly.

In accordance with an alternative embodiment of the present invention, the functionality of the emergency mode may be to override any voluntary power management limitations.

Fig. 23C illustrates a technique useful for full or no functionality operation having queue-controlled priority in voluntary power management in accordance with a preferred embodiment of the present invention. As seen in Fig. 23C, the system initially determines the total power allocated to it as well as the total power that it is currently supplying to all nodes. The relationship between the current total power consumption (TPC) to the current total power allocation (TPL) is then determined. The technique of Fig. 23C can be used in the environment of the of Fig. 23A.

If TPC/TPL is less than typically 0.8, additional nodes are supplied full power one-by-one on a queue-controlled, prioritized basis, typically on a first come, first served basis. If TPC/TPL is greater than typically 0.95, power to individual nodes is disconnected one-by-one on a prioritized basis.

If TPC/TPL is equal to or greater than typically 0.8 but less than or equal to typically 0.95, an inquiry is made as to whether a new node requires power. If so, that node is added to the bottom of the queue.

Fig. 23D illustrates a technique useful for full or no functionality operation on a time-sharing, prioritized basis in voluntary power management in accordance with a preferred embodiment of the present invention. As seen in Fig. 23D, the system initially determines the total power allocated to it as well as the total power that it is currently supplying to all nodes. The relationship between the current total power consumption (TPC) to the current total power allocation (TPL) is then determined. The technique of Fig. 23D can be used in the environment of the of Fig. 23A.

If TPC/TPL is less than typically 0.8, additional nodes are supplied full power one-by-one on a time-sharing, prioritized basis, typically on a basis that the node having the longest duration of use is cut off first. If TPC/TPL is greater than typically 0.95, power to individual nodes is disconnected one-by-one on a prioritized basis.

If TPC/TPL is equal to or greater than typically 0.8 but less than or equal to typically 0.95, an inquiry is made as to whether a new node requires power. If so, and a node having a lower priority, in the sense that it has been receiving power for a longer time, which is above a predetermined minimum time, is currently receiving power, the lower priority node is disconnected from power and the higher priority node is connected to power.

It is appreciated that normally it is desirable that the node be informed in advance in a change in the power to be supplied thereto. This may be accomplished by signalling along the communications cabling in a usual data transmission mode or in any other suitable mode.

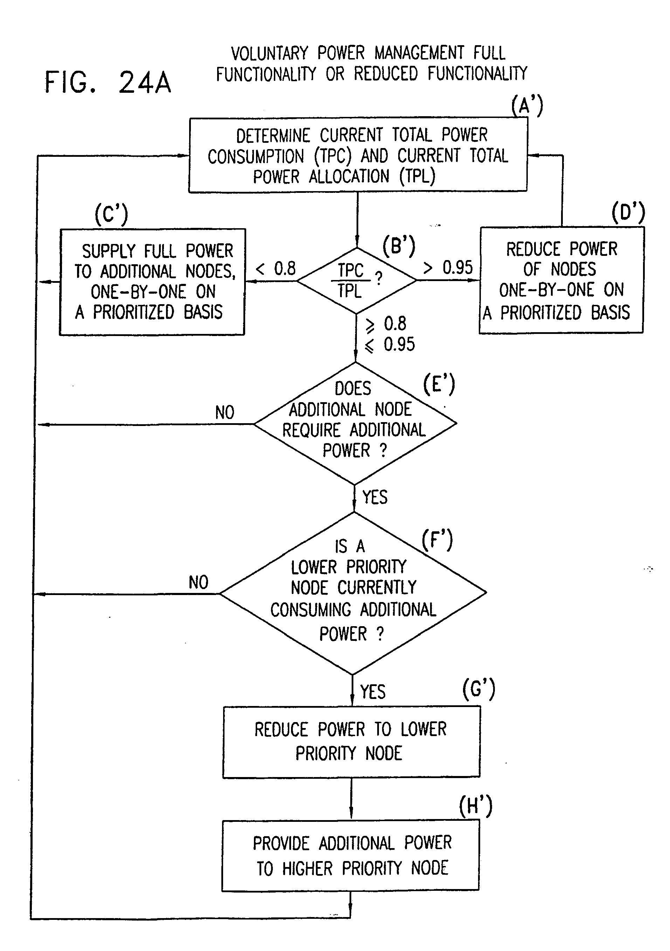

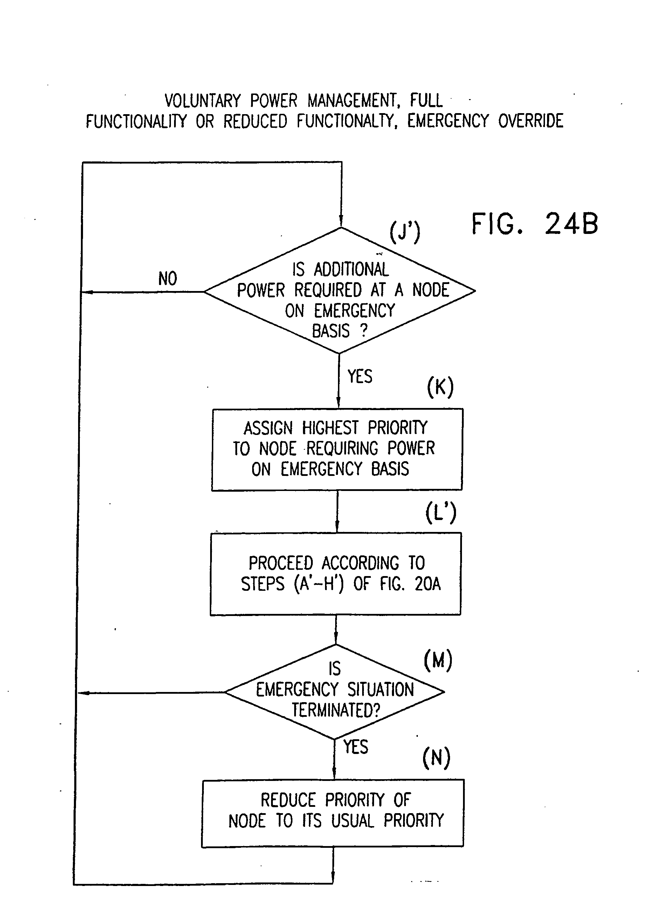

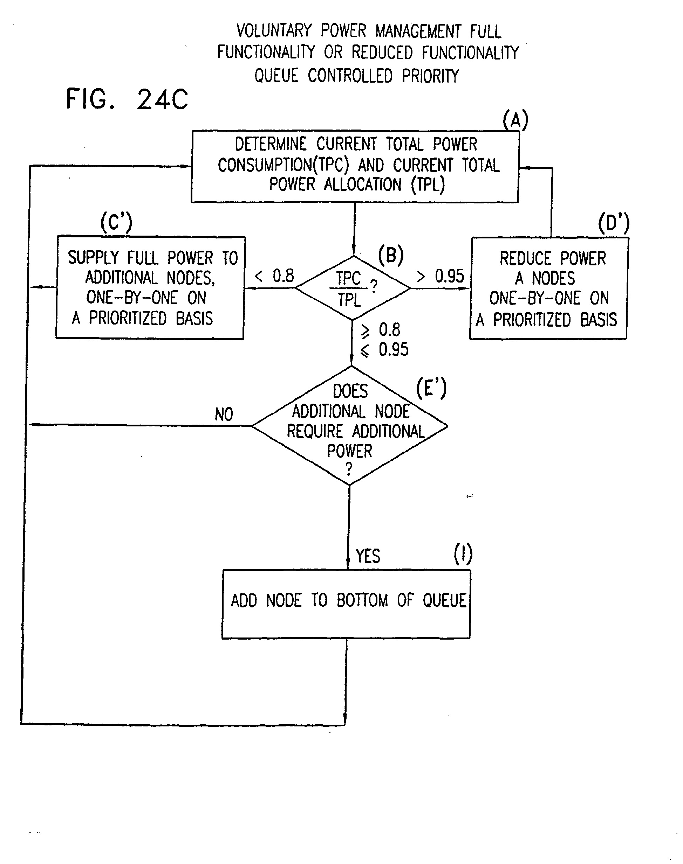

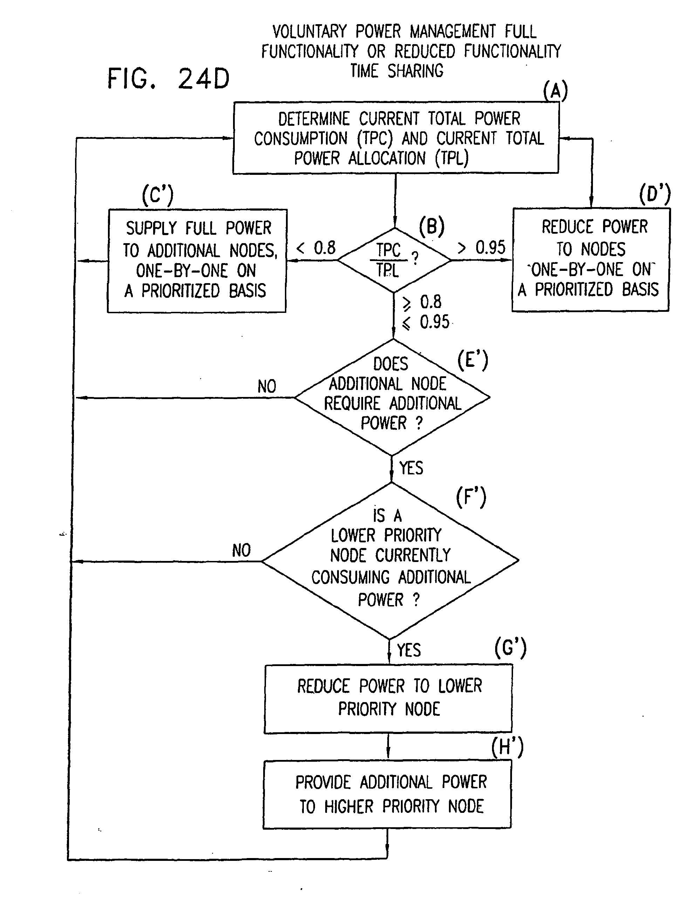

Reference is now made to Figs. 24A, 24B, 24C and 24D, which are generalized flowcharts each illustrating one possible mechanism for full or reduced functionality operation in a voluntary power management step in the flowchart of Fig. 16.

Fig. 24A illustrates a basic technique useful for full or reduced functionality operation in voluntary power management in accordance with a preferred embodiment of the present invention. As seen in Fig. 24A, the system initially determines the total power allocated to it as well as the total power that it is currently supplying to all nodes. The relationship between the current total power consumption (TPC) to the current total power allocation (TPL) is then determined. The technique of Fig. 24A can be used in the environment of the of Fig. 23A.

If TPC/TPL is less than typically 0.8, additional nodes are supplied full power one-by-one on a prioritized basis. If TPC/TPL is greater than typically 0.95, power to individual nodes is reduced one-by-one on a prioritized basis.

If TPC/TPL is equal to or greater than typically 0.8 but less than or equal to typically 0.95, an inquiry is made as to whether a new node requires additional power. If so, and a node having a lower priority is currently receiving power, the lower priority node has its power supply reduced and the higher priority node is provided with additional power.

Fig. 24B illustrates a technique useful for full or reduced functionality operation with emergency override in voluntary power management in accordance with a preferred embodiment of the present invention. The technique of Fig. 24B can be used in the environment of the functionality of Fig. 24A.

As seen in Fig. 24B, the system senses an emergency need for additional power at a given node. In such a case, the given node is assigned the highest priority and the functionality of Fig. 24A is applied. Once the emergency situation no longer exists, the priority of the given node is returned to its usual priority and the functionality of Fig. 24A operates accordingly.

In accordance with an alternative embodiment of the present invention, the functionality of the emergency mode may be to override any voluntary power management limitations.

Fig. 24C illustrates a technique useful for full or reduced functionality operation having queue-controlled priority in voluntary power management in accordance with a preferred embodiment of the present invention. As seen in Fig. 24C, the system initially determines the total power allocated to it as well as the total power that it is currently supplying to all nodes. The relationship between the current total power consumption (TPC) to the current total power allocation (TPL) is then determined. The technique of Fig. 24C can be used in the environment of the of Fig. 23 A.

If TPC/TPL is less than typically 0.8, additional nodes are supplied additional power one-by-one on a queue-controlled, prioritized basis, typically on a first come, first served basis. If TPC/TPL is greater than typically 0.95, power to individual nodes is reduced one-by-one on a prioritized basis.

If TPC/TPL is equal to or greater than typically 0.8 but less than or equal to typically 0.95, an inquiry is made as to whether a new node requires additional power. If so, that node is added to the bottom of the queue.

Fig. 24D illustrates a technique useful for full or additional functionality operation on a time-sharing, prioritized basis in voluntary power management in accordance with a preferred embodiment of the present invention. As seen in Fig. 24D, the system initially determines the total power allocated to it as well as the total power that it is currently supplying to all nodes. The relationship between the current total power consumption (TPC) to the current total power allocation (TPL) is then determined. The technique of Fig. 24D can be used in the environment of the of Fig. 23 A.

If TPC/TPL is less than typically 0.8, additional nodes are supplied additional power one-by-one on a time-sharing, prioritized basis, typically on a basis that the node having the longest duration of use is cut off first. If TPC/TPL is greater than typically 0.95, power to individual nodes is disconnected one-by-one on a prioritized basis.

If TPC/TPL is equal to or greater than typically 0.8 but less than or equal to typically 0.95, an inquiry is made as to whether a new node requires additional power. If so, and a node having a lower priority, in the sense that it has been receiving power for a longer time, which is above a predetermined minimum time, is currently receiving full power, the lower priority node has its power supply reduced and the higher priority node is provided with additional power.

In accordance with yet another preferred embodiment of the present invention, the enhanced structured cabling system comprises a system for generating, delivering and distributing electrical power to network elements over a data communication network infrastructure within a building, campus or enterprise. Consolidating power distribution and data communications over a single network serves to simplify and reduce the cost of network element installation and to provide a means of supplying uninterrupted or backup electrical power to critical network devices in the event of a power failure.

Hereinbelow is described an apparatus and methods for generating, delivering and managing electrical power over LAN network infrastructure that is primarily designed for digital communications purposes. The invention functions to reduce any possible disturbances to the data communications and to maintain compatibility with the IEEE 802.3 and other relevant standards.

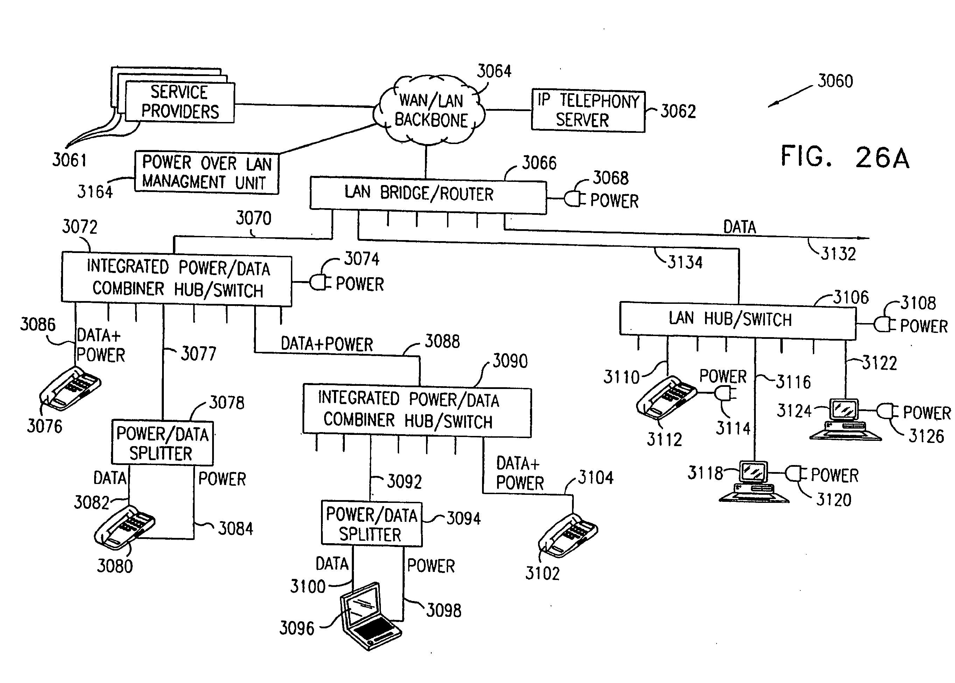

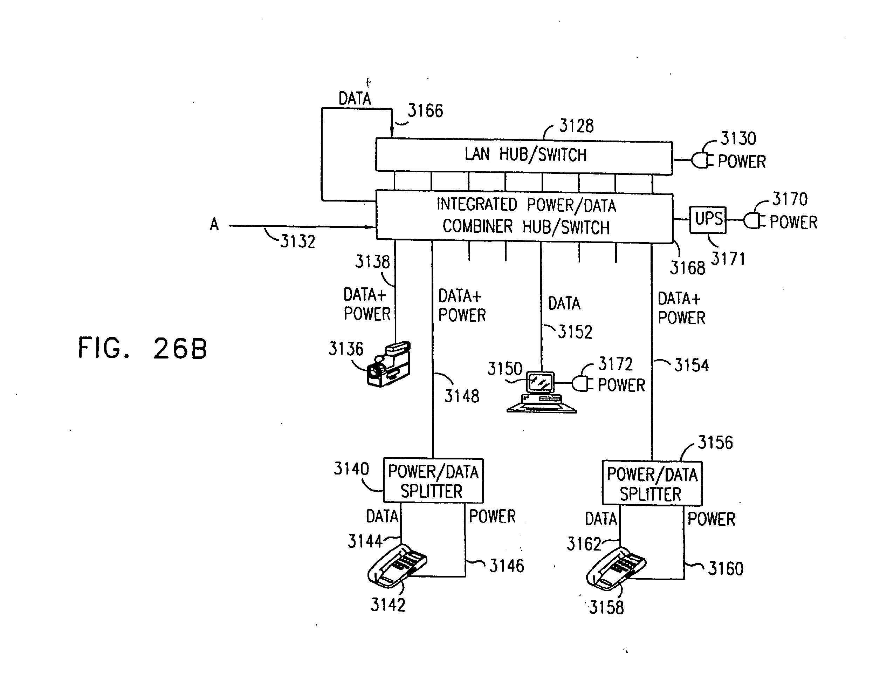

Reference is now made to Figs. 26A and 26B which illustrate a block diagram of a typical data communications system constructed and operative in accordance with a preferred embodiment of the present invention, wherein a network devices receive electrical and network connectivity over the same cable. The network, generally referenced 3060, comprises a WAN and/or LAN backbone 3064 that is coupled to an IP telephone server 3062, other service providers 3061, a power over LAN management unit 3164 and a LAN bridge/router 3066. An IP telephony server 3062 serves to provide telephone service to a plurality of IP telephones connected to the network 3060. The power over LAN management unit 3164, which is described in more detail hereinbelow, provides administrative and power management functions for all the power over LAN enabled devices in the network.

Electrical power may be combined with the data communication signals in a device termed a power/data combiner. The combined power/data signal is transmitted over standard LAN cabling, e.g., Category 3, 4, 5 LAN cabling, which meets EIA/TIA 568A or a similar cabling standard, a network device that functions to split or separate the data from the power. The data signal is input to the network port on the device and the electrical power is input to the power input connector on the device.

In the preferred embodiment, a power/data combiner circuitry is implemented as a standalone external power/data combiner unit 3168. Alternatively, the external power/data combiner unit 3168 is implemented together with a network element such as a hub or switch and referred to as an integrated power/data combiner hub/switch 3072, 3090.

Similarly, in one embodiment, the power/data splitter is implemented as a standalone external power/data splitter unit 3156. Alternatively, it is integrated into a network device such as IP telephone 3102.

Whether or not the power/data combiner 3168 and power/data splitter 3156 are implemented as an external standalone unit or integrated into a network device, their functionality is similar. The power/data combiner 3168 functions to superimpose a low frequency power signal onto the high frequency, low power data communications signal. The low frequency power signal may have a frequency, for example, from DC up to conventional power utility frequencies, i.e., 50 or 60 Hz. The power/data splitter 3156 functions to separate the low frequency power signal from the high frequency, low power data communication signal.

Various alternative embodiments of the power over LAN system, are shown in Figures 26A and 26B. Not all the network elements are power over LAN enabled. Not all the devices are power over LAN enabled. Conventional non-power over LAN network devices may be included in the same network. The power over LAN enabled devices operate transparently from non enabled devices.

Typical applications of network systems/elements that the power over LAN system of the present invention can be applied to include, but are not limited to, in general, any system or element that is connected to a LAN, and more specifically, IP or LAN telephony, digital video cameras, Web cameras, video conferencing equipment, wireless LAN products incorporating transmitters and receivers, portable computers, workstations and network printers. Also included are security system devices such as alarms and sensors that are connected to the network, remotely controlled Smart Home devices such as LonWorks or CEBus compatible products and all types of traditional data networking equipment such as hubs, switches, routers, bridges. Each of the above listed devices can be adapted to receive their operating electrical power from the LAN infrastructure. The number and type of devices that can be adapted to receive power over the LAN is limited, however, to the amount of power the LAN cabling is able to carry in terms of safety and cost.

The power over LAN system comprises systems and subsystems that can be integrated together at any network level, i.e., from the network element/device level through the network hub and backbone switch level. The power over LAN system can be added onto a conventional LAN installation or can be integrated into the network elements themselves, e.g., hubs, switches, routers, bridges, switches, etc.

Some of the devices receive electrical power from the AC main receptacles and some receive power over the LAN cabling infrastructure. The LAN bridge/router 3066 receives AC main power via electrical plug 3068. Likewise integrated power/data combiner hub/switch 3072 and conventional LAN hub/switch 3106, 3128, receive AC main power via electrical plugs 3074, 3108, 3130, respectively. External power/data combiner unit 3168 receives power from UPS 3171 which, in turn, is connected to AC main power via electrical plug 3170. Integrated power/data combiner hub/switch 3090 receives power over the LAN cabling via cable 3088.

Integrated power/data combiner hub/switch 3072 is connected to the LAN bridge/router 3066 via a cable 3070 that carries only data. Network devices connected to the hub/switch 3072 include IP telephones 3076, 3080. IP telephone 3076 is connected by a combined power/data cable 3086 and integrates a power/data splitter within the phone. IP telephone 3080 is connected to an external power/data splitter 3078 via separate data cable 3082 and power cable 3084. The power/data splitter 3078 is connected to the hub/switch 3072 via a cable 3077 that carries both power and data.

Devices coupled to the integrated power/data combiner hub/switch 3090 include portable computer 3096 and IP telephone 3102. The portable computer 3096 is connected to an external power/data splitter 3094 via a cable 3100 that carries only data and a power cable 3098. The power/data splitter 3094 is connected to the hub/switch 3090 via a cable 3092 that carries both power and data. IP telephone 3102 is connected by a cable 3104 that carries both power and data and integrates a power/data splitter within the phone. Note that the hub/switch 3090 comprises an internal power/data splitter to separate the combined data communications signal and electrical power signal received from hub/switch 3072.

Conventional LAN hub/switch 3106 is connected to the bridge/router 3066 via a cable connection 3134 and to AC power via electrical plug 3108. Network devices connected to the hub/switch 3106 include IP telephone 3112 and desktop computers 3118, 3124. The IP telephone is connected to the hub/switch 3106 via a cable 3110 that carries only data and to AC power via electrical plug 3114. Desktop computers 3118, 3124 are connected to the hub/switch 3106 via data only cables 3116, 3122, respectively, and to AC power via electrical plugs 3120, 3126, respectively.

A data communications only cable 3132 connects the bridge/router 3066 to the external power/data combiner unit 3168. A data communications only cable 3166 connects the power/data combiner unit 3168 to a conventional LAN hub/switch 3128 that is connected to AC power via electrical plug 3130. The power/data combiner unit 3168 is connected to a plurality of network devices comprising a network ready video camera 3136, IP telephone 3142, 3158 and desktop computer 3150. Each network device connected to the power/data combiner unit 3168 has a corresponding data communications only connection from the power/data combiner unit 3168 to the hub/switch 3128. Under normal operating conditions, the communications signals received over data cable 3132 are passed through, i.e., bridged, transparently to data cable 3166. In the event of a power failure, however, the conventional LAN hub/switch 3128 is bypassed and the data communication signals are routed directly to the network devices connected to the power/data combiner unit 3168.

The network ready video camera 3136 is connected to the power/data combiner 3168 via a cable 3138 that carries both data and power. IP telephone 3142 is connected to an external power/data splitter 3140 via separate data cable 3144 and power cable 3146. The power/data splitter 3140 is connected to the power/data combiner unit 3168 via a combined power/data cable 3148. Similarly, IP telephone 3158 is connected to an external power/data splitter 3156 via separate data cable 3162 and power cable 3160. The power/data splitter 3156 is connected to the power/data combiner unit 3168 via a combined power/data cable 3154. Desktop computer 3150 is connected to the power/data combiner unit 3168 via a data communications only cable 3152 and to AC power via electrical plug 3172.

As described above, the network 3060 can be adapted to provide backup electrical power in the event of a power failure. One or more UPS units can be placed strategically in the network 3060 to provide power to critical network devices that must be powered even in the event of a power failure. Examples include IP telephones, networked security devices, wireless LAN devices incorporating transmitters and receivers, etc. In the example network shown in Figures 26A and 26B, the UPS unit 3171 is connected to AC power via electrical plug 3170 and provides power to external power/data combiner unit 3168. Alternatively, additional UPS units can be placed in the network and/or UPS 3171 can be adapted to supply electrical power to more than one power/data combiner device.

It is important to note that distributing backup electrical power, i.e., power from an uninterruptable power source, from a few points in the network via the LAN infrastructure is more cost effective than connecting each critical network element to its own dedicated UPS or alternatively creating a UPS power distribution cabling system throughout the organization in addition to the ordinary power network. In the event of a power failure, electrical power is supplied from the UPS to those critical network elements that require it. Which power over LAN enabled network devices are to receive power in the event of a failure can be configured into the power/data combiner unit beforehand. Configuration can be performed locally via a management port or remotely via the management unit 3164 connected to the LAN/WAN backbone 3064.

It is important to note that a benefit of the system of the present invention is that the safety requirements and cost of network terminal equipment can be reduced since electrical power is distributed as low voltages over the LAN infrastructure. In the case of IP telephony providing power over the LAN permits the IP telephone to have a source of uninterruptable power just as ordinary analog based telephones connected to the PSTN enjoy today.

The electrical power distributed over the LAN can be delivered either as DC or low frequency AC voltages. In either case, the delivery of power over the LAN infrastructure does not interfere with data communications signals. The power voltages over the LAN cabling are kept below 120 V peak and the current is limited in order to maintain compatibility with safety standards such as UL 60950 and EN 60950.

Note also that the electrical power delivered over LAN cabling can be transmitted using one or more spare pairs in the cable. Ethernet communications requires 2 pairs (4 conductors) to implement. If the cabling plant is EIA/TIA 568A compatible and includes 4 pairs, than 2 pairs remain unused. The electrical power can be transmitted using one or two of the unused pairs. In this case the power splitter and combiner are not necessarily needed and direct injection and extraction of power can be implemented. Alternatively, if the data cable comprises only two pair, then the electrical power is distributed using one or two of the available pairs, i.e., the receive and transmit wires.

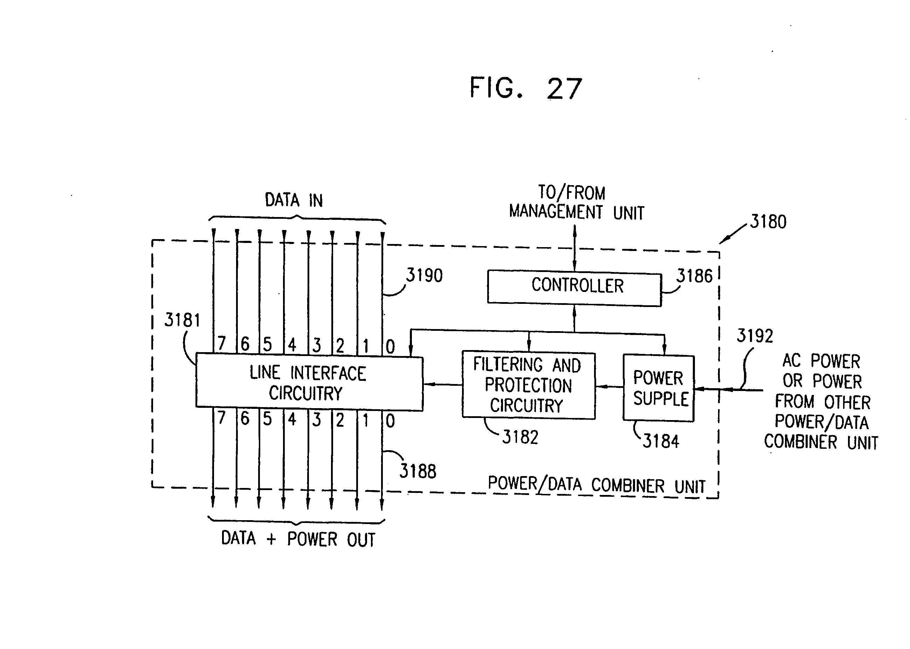

Reference is now made to Fig. 27 which illustrates a block diagram of a power/data combiner unit for placing electrical power onto the data communications infrastructure. As described previously, the power/data combiner functions, whether implemented as an external standalone unit or integrated with a network element, functions to combine an electrical power signal and a data communications signal to form a combined power/data signal. The description that follows uses the external power/data combiner as an illustrative example. Note, however, that the description applies as well to the integrated embodiment.

The power/data combiner, generally referenced 3180, comprises line interface circuitry 3181, filtering and protection circuitry 3182, a power supply 3184 and a controller 3186. The line interface circuitry 3181 comprises a plurality of input ports 3190 and output ports 3188 and provided voltage isolation between all inputs and outputs. The input ports 3190 receive data only signals from a hub or switch. The output ports 3188 output a combined data plus power signal to connected power over LAN enabled devices, e.g., power/data splitters or integrated network elements.

The power/data combiner unit 3180 is connected to a conventional LAN 10/100/1000 Base T hub or switch via the data in ports 3190. Note that although eight data in ports are shown, the power/data combiner can comprise any number of data in ports, e.g., 16, 24, 32. The conventional hub or switch and power/data combiner 3180 may or may not have the same number of ports, but preferably they are the same. The power/data combiner unit 3180 functions to inject the DC or AC power to each LAN channel.

The power/data combiner unit 3180 is adapted to accept electrical power from ordinary building AC power, an UPS or from another power over LAN enabled device and to distribute it to one or more network device connected thereto. Each output channel may comprise an Ethernet channel that carries data communications signals only, power signals only or both data communications and power signals simultaneously. The power/data combiner unit comprises circuitry that minimizes any disturbances to data communications.

The power supply 3184 is connected to a source of AC electrical power via connector or cable 3192. Alternatively, the power can be received from another power/data combiner unit. The power supply 3184 functions to provide the energy needed for the operation of the power/data combiner unit 3180 itself and the total energy needed by the remotely powered network devices connected downstream of the unit 3180. The power supply 3184 is preferably constructed to support the worst case energy, i.e., maximum, required by a channel multiplied by the number of channels. Alternatively, the power supply 3184 is constructed to support a lesser amount of power assuming there exists an a priori prediction of power consumption by all channels.

The filter and protection circuit 3182 functions to permit the high frequency data communications signal to pass uninterrupted and transparently from input to output. The circuit 3182 prevents the low impedance output of the power supply from attenuating the data communications signal and prevents communications signals on one channel from leaking into another channel via the common power supply unit 3184, i.e., prevents crosstalk. The circuit also functions to filter the high frequency ripple and noise produced by switching power supplies and to provide a high output impedance from the power supply for high frequencies.

Further functions of the filter and protection circuit 3182 comprise limiting the power available to each channel in accordance with a predetermined level, current sensing for each wire pair, minimum and maximum current threshold reference levels, unbalanced or current leakage detection and the capability of connecting and disconnecting power to/from each channel. The minimum and maximum current threshold reference levels may be fixed or controlled via a management unit depending on the implementation and configuration of the system. An important function of the circuit 3182 is that it will disconnect a shorted or otherwise faulty port such that other operational channels are not effected.

The controller 3186, suitably programmed, functions to administer and control the operation of the components within the power/data combiner 3180 and to provide telemetry functions to an external management entity. The controller functions to communicate with a management unit connected either locally or remotely via the network. The controller permits online modification of the power being distributed to each channel. Other functions include status reporting such as reporting on the power consumed by each channel, any channel failures and any failures within the power/data combiner unit itself.

In the integrated embodiment, the power/data combiner unit functionality is integrated into a conventional LAN connectivity hub or switch, e.g., 10, 100 or 1000 BaseT. The internal power supply of the hub is modified to support the increased load of the normal hub operation and the remote power feeding functions. A line interface circuit is inserted between the output port and the internal networking circuitry of the hub. In addition, the filtering and protection circuitry is added to couple the line interface circuitry to the power supply. Each of the standard LAN ports is replaced with a combined data plus power port. This integrated embodiment serves to reduce overall system cost, reduce the space required and reduces the complexity of the network. It does require, however, modification of a conventional hub or switch.

In either the external or integrated embodiments, the data being received by the power/data combiner is bidirectional transferred from each channel input to its corresponding channel output. The power is injected into each channel output port. The amount of output power allotted to each output channel can be set independently. In addition, each output channel is self protected against short circuit and overload conditions.

Further, in connection with the external power/data combiner embodiment, two additional LAN ports can optionally be provided. An input LAN port and an output LAN port can be provided whereby during normal operation, the two ports are bridged together. The conventional hub or switch is fed via the output LAN output port. The input LAN port is connected to the upstream network device, e.g., hub or switch. In the event of a power failure, the power/data combiner unit disconnects the input and output LAN ports and directs the data communications from the input LAN port directly to one or more output channels. Thus, both data and power continuity are provided in the event the upstream data hub or switch is not operational.

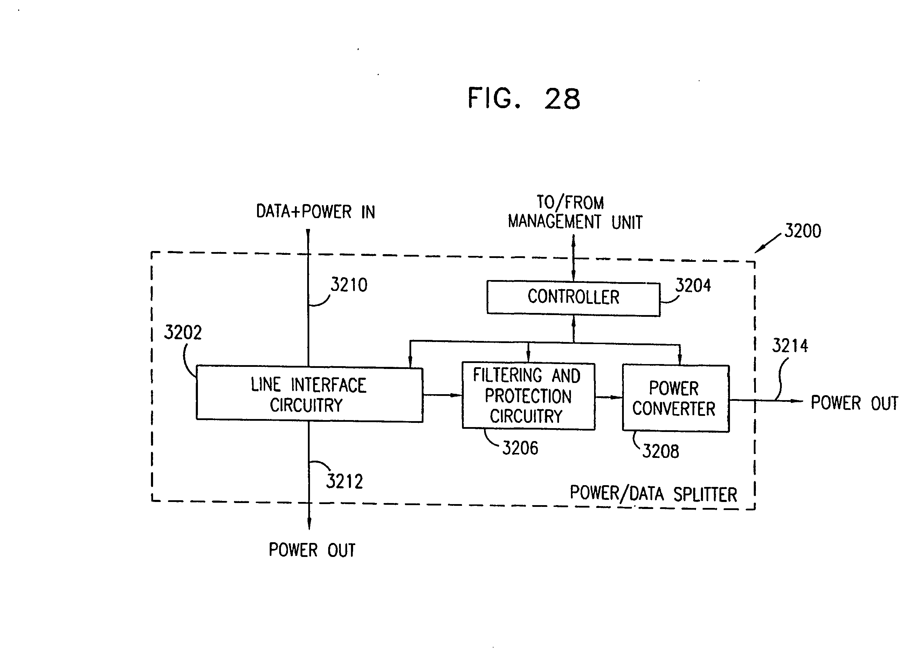

Reference is now made to Fig. 28 which illustrates a block diagram of a power/data splitter unit for separating electrical power from the data communications infrastructure. As described previously, the power/data splitter functions to accept a LAN channel at its input that carries both power and data simultaneously over the same cable wires and to separate the two signals into a power signal and a data signal. Both these signals are then forwarded to the attached network device. The two output signals can comprise two separate cable connections, i.e., one for data and one for power. The data cable connection behaves as a standard LAN data channel dedicated for data communications. The power cable connection serves to drive the power loads with power extracted from the combined input. The power/data splitter functions to isolate the input voltage from the output voltage. In addition, an AC/DC or DC/DC voltage converter can be used to convert the input voltage to one or more voltage levels to meet the specific requirements of the attached network device.

The power/data splitter, generally referenced 3200, comprises line interface circuitry 3202, filtering and protection circuitry 3206, a power converter 3208 and a controller 3204. The splitter 3200 is normally connected between the LAN wall outlet receptacle, for example, and the network device. Functionally, the power/data splitter 3200 blocks high frequency signals from passing through to the power output by presenting a high impedance to high frequencies, allows low frequency and DC power signals to pass through and blocks conduction of high frequency noise from the power converter input to the data channel.

The line interface circuitry 3202 comprises a data plus power input port 3210 and a data communications only output port 3212. The extracted power is output via power output port 3214. The line interface circuitry 3202 receives the signal from a LAN channel and provides high pass filtering to permit undisturbed bidirectional transport of the data communication signal form the data plus power input port 3210 to the data only output port 3212.

The filtering and protection circuitry 3206 provides low pass filtering between the data plus power input port 3210 to the input of the power converter 3208. The power converter 3208 accepts the voltage extracted from the LAN channel and functions to convert it to one or more output voltages. The power converter 3208 may comprise an AC/DC or a DC/DC voltage converter depending on the voltage extracted from the LAN channel. The power converter can be adapted to generate any number of voltages in accordance with the specific requirements of the network device attached to the power/data splitter 3200.

The controller 3204, suitably programmed, functions to administer and control the operation of the components within the power/data splitter 3200 and to provide telemetry functions to an external management entity. The controller functions to communicate with a management unit connected either locally or remotely via the network. Other optional functions include status reporting such as reporting on the power consumed by each channel, any channel failures and any failures within the power/data splitter itself

In the integrated embodiment, the power/data splitter functionality is integrated into a conventional network device, e.g., IP or LAN telephone, portable or desktop computer. The network device is modified to receive the combined power/data signal. The standard LAN port and power port are replaced with a combined data plus power port. A line interface circuit is inserted between the input port and the internal network data and power in port. In addition, the filtering and protection circuitry is added to couple the line interface circuitry to the power supply. This integrated embodiment serves to reduce overall system cost, reduce the space required and reduces the complexity of the network. It requires, however, modification of a conventional network device.

It would be inefficient in terms of complexity and cost to construct a power delivery and distribution network assuming that each network port and node simultaneously consumes the maximum allocated output power. In addition, such a power network would likely create power 'bottlenecks' over the data network and would force the use of special cabling that is non standard for common LAN installations. Further, the equipment used to implement such a power network would most likely exceed the thermal and power specifications of standard networking equipment cabinets which are designed to hold stackable hubs, switches, routers and various types of network management units, resulting in a failure to accommodate such equipment.

Therefore, the power over LAN system of the present invention may utilize in the construction of the power network, the statistical patterns that indicate the expected power consumption during (1) normal network operation and during (2) emergency operation in the event of a building power failure.

The management unit 3164 (Figure 26A) comprises software that may execute on any PC or server connected to the network. The management unit functions to communicate telemetry and control information to the power over LAN components, e.g., power/data combiners and splitters, distributed throughout the network. The data communications network itself transports the data messages between the power over LAN enabled devices and the management unit. The management unit provides monitoring and provisioning functions. The provisioning function allocates the available power resources, in an analogous manner to network data traffic being managed, and serves to configure the power path across the network from source to sink.

A network administrator is able to determine the systems method for handling those network ports that indicate no-load, overload or current leakage to earth ground. The power to a faulty port can be shut down or limited to a desired value. Recovery from a shut down state can be automatic based on port condition or can be done manually. Each port can be configured individually in accordance with system setup configuration.

Note that each power/data combiner can be constructed to be managed independently or via external control. Each power/data combiner may comprise a dedicated LAN data connection or it may comprise serial/parallel communications to a network host system that, in turn, transfers telemetry and control data to the network LAN.

In the event of a building power failure, certain network devices and nodes, e.g., hubs, routers, bridges, switches, etc., may need to be bypassed in order to maintain data and power continuity between critical network nodes, terminals and devices. The electrical power that is supplied by a single large LAN channel should, in most cases, be sufficient to operate the majority of network devices. This LAN channel, however, probably would not be sufficient to simultaneously operate a normal network hub/switch and all of its connected network devices. In addition, LAN devices are typically useless unless they receive both power and data communications at the same time. The power over LAN system of the present invention functions to maintain the flow of electrical power and data communications in the event of a failure. The LAN node units, i.e., hubs, switches, etc., and network devices switch to a reduced power operating mode during building power failures. When a device is in a reduced power operating mode, it will either reduce its data handling bandwidth and/or processing activities and keep only a few ports active and shut down its remaining ports in order to reduce its overall power consumption. Thus, a battery based UPS can be used to support a plurality of critical network elements for extended periods of time.

It will be appreciated by persons skilled in the art that the present invention is not limited by what has been particularly shown and described hereinabove. Rather the scope of the present invention includes both combinations and sub-combinations of various features described hereinabove as well as modifications and variations thereof which would occur to persons skilled in the art and which are not in the prior art.

Embodiments of the invention may include the features of the following enumerated paragraphs ("paras").
1. A local area network comprising:
a hub;
a plurality of nodes;
communication cabling connecting said plurality of nodes to said hub for providing data communication; and
a power supply distributor operative to provide at least some operating power to at least some of said plurality of nodes via said communication cabling.
2. Apparatus according to para 1 and wherein said communication cabling comprises at least part of a structured cabling system.
3. Apparatus according to para 1 and wherein said power supply distributor is located within the hub.
4. Apparatus according to para 1 and wherein said power supply distributor is located outside the hub.
5. Apparatus according to para 1 and wherein said power supply distributor is located partially within the hub and partially outside the hub.
6. Apparatus according to para 1 and wherein said operating power supplied by said power supply distributor to at least some of said plurality nodes via said communication cabling includes backup power.
7. Apparatus according to para 1 and wherein:
said hub includes a data communication concentrator;
said power supply distributor includes a combiner; and
said communication cabling connects said data communication concentrator via said combiner to said nodes.
8. Apparatus according to para 1 and wherein said hub includes a data communication concentrator and wherein said power supply distributor is also located within the hub.
9. Apparatus according to para 1 and wherein said hub includes a data communication concentrator and wherein said power supply distributor is also located within the hub and includes a power supply and a combiner, said combiner coupling power from said power supply to said communication cabling which also carries data from said data communication concentrator.
10. Apparatus according to para 8 and wherein said data communication concentrator comprises a LAN switch which functions as a data communication switch/repeater.
11. Apparatus according to para 1 and wherein said plurality of nodes includes at least one of the following types of nodes: wireless LAN access points, emergency lighting system elements, paging loudspeakers, CCTV cameras, alarm sensors, door entry sensors, access control units, laptop computers, IP telephones, hubs, switches, routers, monitors and memory backup units for PCs and workstations.
12. Apparatus according to para 1 and wherein:
said hub includes a data communication concentrator;
said power supply distributor includes a combiner and a power supply;
said communication cabling connects said data communication concentrator via said combiner to said nodes; and
said combiner comprises a plurality of couplers, each of which is connected to an output of said power supply.
13. Apparatus according to para 1 and wherein:
said hub includes a data communication concentrator;
said power supply distributor includes a combiner and a power supply;
said communication cabling connects said data communication concentrator via said combiner to said nodes; and
said combiner comprises a plurality of couplers and a plurality of filters, each coupler being connected via a filter to an output of said power supply.
14. Apparatus according to para i and wherein:
said hub includes a data communication concentrator;
said power supply distributor includes a combiner and a power supply;
said communication cabling connects said data communication concentrator via said combiner to said nodes; and
said combiner comprises a plurality of couplers and a plurality of filters and a plurality of smart power allocation and reporting circuits (SPEARs), each coupler being connected via a filter and a SPEAR to an output of said power supply.
15. Apparatus according to para I and wherein:
said hub includes a data communication concentrator;
said power supply distributor includes a combiner and a power supply; and
said power supply includes a power failure backup facility.
16. Apparatus according to para 3 and wherein:
said hub includes a data communication concentrator;
said power supply distributor includes a combiner and a power supply;
said communication cabling connects said data communication concentrator via said combiner to said nodes; and
said combiner comprises a plurality of couplers and a plurality of filters, each coupler being connected via a filter to an output of said power supply.
17. Apparatus according to para 3 and wherein:
said hub includes a data communication concentrator;
said power supply distributor includes a combiner and a power supply;
said communication cabling connects said data communication concentrator via said combiner to said nodes; and
said combiner comprises a plurality of couplers and a plurality of filters and a plurality of smart power allocation and reporting circuits (SPEARs), each coupler being connected via a filter and a SPEAR to an output of said power supply.
18. Apparatus according to para 4 and wherein:
said hub includes a data communication concentrator;
said power supply distributor includes a combiner and a power supply;
said communication cabling connects said data communication concentrator via said combiner to said nodes; and
said combiner comprises a plurality of couplers and a plurality of filters, each coupler being connected via a filter to an output of said power supply.
19. Apparatus according to para and wherein:
said hub includes a data communication concentrator;
said power supply distributor includes a combiner and a power supply;
said communication cabling connects said data communication concentrator via said combiner to said nodes; and
said combiner comprises a plurality of couplers and a plurality of filters and a plurality of smart power allocation and reporting circuits (SPEARs), each coupler being connected via a filter and a SPEAR to an output of said power supply.
20. Apparatus according to para 5 and wherein:
said hub includes a data communication concentrator;
said power supply distributor includes a combiner and a power supply;
said communication cabling connects said data communication concentrator via said combiner to said nodes; and
said combiner comprises a plurality of couplers and a plurality of filters, each coupler being connected via a filter to an output of said power supply.
21. Apparatus according to para 5 and wherein:
said hub includes a data communication concentrator;
said power supply distributor includes a combiner and a power supply;
said communication cabling connects said data communication concentrator via said combiner to said nodes; and
said combiner comprises a plurality of couplers and a plurality of filters and a plurality of smart power allocation and reporting circuits (SPEARs), each coupler being connected via a filter and a SPEAR to an output of said power supply.
22. Apparatus according to para 1 and wherein said power supply distributor is operative to provide electrical power along said communication cabling without unacceptable degradation of said digital communication.
23. Apparatus according to para 1 and wherein said communication cabling comprises at least one twisted wire pair connected to each node and wherein power is transmitted over a twisted wire pair along which data is also transmitted.
24. Apparatus according to para 23 and wherein:
said hub includes a data communication concentrator;
said power supply distributor includes a combiner and a power supply;
said communication cabling connects said data communication concentrator via said combiner to said nodes; and
said combiner comprises a plurality of filters and a plurality of smart power allocation and reporting circuits (SPEARs), each filter being connected via a SPEAR to an output of said power supply.
25. Apparatus according to para 1 and wherein said communication cabling comprises at least two twisted wire pairs connected to each node and wherein power is transmitted over a twisted wire pair different from that along which data is transmitted.
26. Apparatus according to para. 25 and wherein:
said hub includes a data communication concentrator;
said power supply distributor includes a power supply interface and a power supply;
said communication cabling connects said data communication concentrator via said power supply interface to said nodes; and
said power supply interface comprises a plurality of filters and a plurality of smart power allocation and reporting circuits (SPEARs), each filter being connected via a SPEAR to an output of said power supply.
27. Apparatus according to para 25 and wherein:
said hub includes a data communication concentrator;
said power supply distributor includes a power supply interface and a power supply;
said communication cabling connects said data communication concentrator via said power supply interface to said nodes; and
said power supply interface comprises a plurality of smart power allocation and reporting circuits (SPEARs), each SPEAR being connected to an output of said power supply.
28. Apparatus according to para 1 and wherein:
said hub includes a data communication concentrator;
said power supply distributor includes a combiner and a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
each coupler has at least two ports, one of which is connected to a port of said data communication concentrator and the other of which is connected, via communication cabling, to one of said plurality of nodes.
29. A local area network node for use in a local area network including a hub, a plurality of nodes, communication cabling connecting said plurality of nodes to said hub for providing digital communication and a power supply distributor operative to provide at least some operating power to at least some of said plurality of nodes via said hub and said communication cabling, the local area network node comprising:
a communications cabling interface receiving both power and data and separately providing power to a node power input and data to a node data input.
30. Apparatus according to para 29 and wherein said power supply distributor is located within the hub.
31. Apparatus according to para 29 and wherein said power supply distributor is located outside the hub.
32. Apparatus according to para 29 and wherein said
node is operative for node initiated sleep mode operation in voluntary power management
33. Apparatus according to para 32 and wherein said node has the following functionality in node initiated sleep mode operation in voluntary power management:
measuring the time duration TD1 since the last activity of the node; and
if TD1 exceeds a first threshold, in the absence of a user or system input contraindicating sleep mode operation, the node then operates in a sleep mode which involves reduced power consumption.
34. Apparatus according to para 32 and wherein said node has the following functionality in node initiated sleep mode operation in voluntary power management:
measuring a time duration TD2 since the last communication of the node; and
if TD2 exceeds a first threshold, in the absence of a user or system input contraindicating sleep mode operation, the node then operates in a sleep mode, which involves reduced power consumption.
35. Apparatus according to para 29 and wherein said node operates with the following functionality:
operating the node normally within a periodically occurring time slot; and
operating the node in a sleep mode outside the periodically occurring time slot.
36. Apparatus according to para 29 and wherein said node operates in a sleep mode as the result of a sensed fault condition.
37. Apparatus according to para 36 and wherein said node has the following functionality:
the node periodically performs a self-test;
if the node passes the test, it operates normally; and
if the node fails the test, it operates in the sleep mode.
38. Apparatus according to para 29 and wherein said
node is operative for power supply distributor initiated sleep mode operation in voluntary power management.
39. Apparatus according to para 38 and wherein said node has the following functionality in power supply distributor initiated sleep mode operation in voluntary power management:
measuring the time duration TD 1 since the last activity of the node; and
if TD1 exceeds a first threshold, in the absence of a user or system input contraindicating sleep mode operation, the node is operated in a sleep mode which involves reduced power consumption.
40. Apparatus according to para 38 and wherein said node has the following functionality in power supply distributor initiated sleep mode operation in voluntary power management:
measuring a time duration TD2 since the last communication of the node; and
if TD2 exceeds a first threshold, in the absence of a user or system input contraindicating sleep mode operation, the node is then operated in a sleep mode, which involves reduced power consumption.
41. Apparatus according to para 29 and wherein said node has the following functionality:
the power supply distributor periodically performs a test on the node;
if the node passes the test, it is operated normally; and
if the node fails the test, it is operated in the sleep mode.
42. Apparatus according to para 29 and wherein said communications cabling interface is internal to at least one of said plurality of nodes.
43. Apparatus according to para 29 and wherein said communications cabling interface is external to at least one of said plurality of nodes.
44. Apparatus according to para 29 and wherein said power supply distributor is operative to provide electrical power along said communication cabling without unacceptable degradation of said digital communication.
45. Apparatus according to para 29 and wherein said communication cabling comprises at least one twisted wire pair connected to each node and wherein power is transmitted over a twisted wire pair along which data is also transmitted.
46. Apparatus according to para 29 and wherein said communication cabling comprises at least two twisted wire pairs connected to each node and wherein power is transmitted over a twisted wire pair different from that along which data is transmitted.
47. Apparatus according to para 30 and wherein said power supply distributor is operative to provide electrical power along said communication cabling without unacceptable degradation of said digital communication.
48. Apparatus according to para 30 and wherein said communication cabling comprises at least one twisted wire pair connected to each node and wherein power is transmitted over a twisted wire pair along which data is also transmitted.
49. Apparatus according to para 30 and wherein said communication cabling comprises at least two twisted wire pairs connected to each node and wherein power is transmitted over a twisted wire pair different from that along which data is transmitted.
50. Apparatus according to para 31 and wherein said power supply distributor is operative to provide electrical power along said communication cabling without unacceptable degradation of said digital communication.
51. Apparatus according to para 31 and wherein said communication cabling comprises at least one twisted wire pair connected to each node and wherein power is transmitted over a twisted wire pair along which data is also transmitted.
52. Apparatus according to para 31 and wherein said communication cabling comprises at least two twisted wire pairs connected to each node and wherein power is transmitted over a twisted wire pair different from that along which data is transmitted.
53. Apparatus according to para 1 and wherein:
said hub includes a data communication concentrator;
said power supply distributor includes a combiner, a management and control unit and a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
said SPEAR is operative to report to said management and control unit the current consumption of a node connected thereto.
54. Apparatus according to para 1 and wherein:
said hub includes a data communication concentrator;
said power supply distributor includes a combiner and a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
said SPEAR is operative to limit the maximum current supplied to a node connected thereto.
55. Apparatus according to para 1 and wherein:
said hub includes a data communication concentrator,
said power supply distributor includes a combiner and
a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
said SPEAR is operative to automatically disconnect a node connected thereto displaying an overcurrent condition following elapse of a programmably predetermined period of time.
56. Apparatus according to para 1 and wherein:
said hub includes a data communication concentrator;
said power supply distributor includes a combiner and a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
said SPEAR is operative to automatically disconnect power from a node connected thereto displaying an overcurrent condition following elapse of a programmably predetermined period of time and to automatically reconnect the node to power thereafter when it no longer displays the overcurrent condition.
57. Apparatus according to para 1 and wherein:
said hub includes a data communication concentrator;
said power supply distributor includes a combiner and
a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
said SPEAR comprises:
   a current sensor which receives a voltage input Vin from a power supply and generates a signal which is proportional to the current passing therethrough; and
   a multiplicity of comparators receiving said signal from said current sensor and also receiving a reference voltage Vref from respective reference voltage sources.
58. Apparatus according to para 57 and wherein said reference voltage sources are programmable reference voltage sources and receive control inputs from management & control circuits.
59. Apparatus according to para 58 and wherein outputs of said multiplicity of comparators are supplied to a current limiter and switch which receives input voltage Vin via the current sensor and provides a current-limited voltage output Vout.
60. Apparatus according to para 59 and wherein said outputs of said comparators are supplied to management & control circuits to serve as monitoring inputs providing information regarding the DC current flowing through the SPEAR.
61. Apparatus according to para 1 and wherein:
said hub includes a data communication concentrator;
said power supply distributor includes a combiner and a power supply;
said communication cabling connects said data communication concentrator via said combiner to said nodes; and
said combiner comprises a plurality of couplers each of which includes at least a pair of transformers, each having a center tap at a secondary thereof via which the DC voltage is fed to each wire of a twisted pair connected thereto.
62. Apparatus according to para 1 and wherein:
said hub includes a data communication concentrator,
said power supply distributor includes a combiner and a power supply;
said communication cabling connects said data communication concentrator via said combiner to said nodes; and
said combiner comprises a plurality of couplers each of which includes at least one transformer, which is characterized in that it includes a secondary which is split into two separate windings and a capacitor which is connected between said two separate windings and which effectively connects the two windings in series for high frequency signals, but effectively isolates the two windings for DC.
63. Apparatus according to para I and wherein:
said hub includes a data communication concentrator;
said power supply distributor includes a combiner and a power supply;
said communication cabling connects said data communication concentrator via said combiner to said nodes; and
said combiner comprises a pair of capacitors which effectively block DC from reaching the data communication concentrator.
64. Apparatus according to para 1 and wherein:
said hub includes a data communication concentrator,
said power supply distributor includes a combiner and a power supply;
said communication cabling connects said data communication concentrator via said combiner to said nodes; and
said combiner comprises two pairs of capacitors which effectively block DC from reaching the data communication concentrator.
65. Apparatus according to para 1 and wherein:
said hub includes a data communication concentrator;
said power supply distributor includes a combiner and a power supply;
said communication cabling connects said data communication concentrator via said combiner to said nodes; and
said combiner comprises a self-balancing capacitor-less and transformer-less common mode coupling circuit.
66. A local area network node according to para 29 and wherein said communications cabling interface includes a separator comprising a pair of transformers, each having a center tap at a primary thereof via which the DC voltage is extracted from each wire of a twisted pair connected thereto.
67. A local area network node according to para 29 and wherein said communications cabling interface includes a separator comprising at least one transformer, which is characterized in that it includes a primary which is split into two separate windings and a capacitor which is connected between said two separate windings and which effectively connects the two windings in series for high frequency signals, but effectively isolates the two windings for DC.
68. A local area network node according to para 29 and wherein said communications cabling interface includes a separator comprising a pair of capacitors which effectively block DC from reaching a data input of a node connected thereto.
69. A local area network node according to para 29 and wherein said communications cabling interface includes a separator comprising two pairs of capacitors which effectively block DC from reaching a data input of a node connected thereto.
70. A local area network node according to para 29 and wherein said communications cabling interface includes a separator comprising a self-balancing capacitor-less and transformer-less common mode coupling circuit.
71. A local area network comprising:
a hub;
a plurality of nodes;
communication cabling connecting said plurality of nodes to said hub for providing data communication; and
a power supply distributor operative to provide at least some operating power to at least some of said plurality of nodes via said communication cabling, said power supply distributor including power management functionality.
72. A local area network according to para 71 and wherein said power management functionality governs the supply of power to at least some of said plurality of nodes via said communications cabling.
73. A local area network according to para 72 and wherein said power management functionality monitors and manages the power consumption of said nodes.
74. A local area network according to para 73 and wherein said power management functionality senses overcurrent situations and effects power cutoffs as appropriate.
75. A local area network according to para 72 and wherein said power management functionality operates in at least one of an involuntary power management mode and a voluntary power management mode.
76. A local area network according to para 75 and wherein in said involuntary power management mode of operation, if the power supply distributor senses a situation of insufficient power availability for power transmission over the communications cabling to said nodes, it supplies a reduced amount of power to at least some of said nodes.
77. A local area network according to para 76 and wherein said power supply distributor also provides control inputs to said nodes to cause them to operate in a reduced power mode.
78. A local area network according to para 75 and wherein in said voluntary power management mode of operation, reduced power availability is mandated at certain times of reduced activity.
79. A local area network according to para 71 and wherein said power management functionality includes at least one of the following functional elements:
interrogating the communications cabling connection to nodes, to which it is intended to transmit power over the communications cabling;
setting individual voltage and current limits for nodes based at least on results of interrogating the communications cabling connection to nodes and pre-defined parameters;
sending suitable signaling messages to the remote node; and
reporting status of a line connected to the node to a management work station.
80. A local area network according to para 71 and wherein said power management functionality includes at least one of the following functional elements:
voltage is measured at an output of said power supply distributor, corresponding to a line to which it is intended to transmit power over the communications cabling in the absence of power transmission therealong;
if the absolute value of the voltage is higher than a predetermined programmable threshold, the line is classified as having a voltage present thereon from an external source.
if the absolute value of the voltage is not higher than the predetermined programmable threshold, a current limit is set to a predetermined programmable value and power is transmitted along the line;
thereafter, the voltage and the current are measured at the output of the power supply distributor for said line at at least one predetermined programmable time;
based on the foregoing measurements the status of the node and the line to which it is connected are determined.
81. A local area network according to para 80 and wherein determination of the status of the node and the line includes at least one of the following determinations:

| | |
|---|---|
| NO LOAD | WHEN Vout > V2 AND THE ABSOLUTE VALUE OF IO < I2, FOR ALL T1, T2, T3 |
| SHORT CIRCUIT | WHEN Vout < V3 AND THE ABSOLUTE VALUE OF IO > I3, FOR ALL T1, T2, T3 |
| NIC LOAD | WHEN VoutT3 < V4 AND THE ABSOLUTE VALUE OF IOT1<IOT2<IOT3 |
| POL LOAD | WHEN VoutT1>V5 AND VoutT2>V5 AND VoutT3>V5 AND THE ABSOLUTE VALUE OF IOT1>15 OR THE ABSOLUTE VALUE OF IOT2>15 OR THE ABSOLUTE VALUE OF IOT3>15. |

wherein
A NO LOAD condition is one in which a node is not connected to the line.
A SHORT CIRCUIT condition is one in which a short circuit exists across positive and negative conductors of the line upstream of the node or in the node.
A NIC LOAD condition is one in which a Network Interface Card line transformer is connected across the line at the node.
A POL LOAD condition is one in which a Power Over LAN separator is connected across the line at the node.
V0 is the voltage at the output of the power supply distributor for the line.
V1 is a predetermined programmable value which is arrived at by measuring the highest peak value of voltage Vout for a period of a few minutes when power is not transmitted along the line;
V2 is a predetermined programmable value which is arrived at by measuring the lowest value of voltage Vout for a period of a few minutes when power is not transmitted along the line and when no load is connected between +Vout and -Vout at the output of said power supply distributor for the line;
V3 is a predetermined programmable value which is arrived at by measuring the highest peak value of voltage Vout for a period of a few minutes when power is not transmitted along the line and when a resistance is connected between +Vout and -Vout at the output of said power supply distributor for the line;
V4 is a predetermined programmable value which is preferably arrived at by measuring the highest peak value of voltage Vout for a period of a few minutes when power is not transmitted along the line and when a resistance is connected between +Vout and -Vout at the output of said power supply distributor for the line;
V5 is a predetermined programmable value, which represents a typical threshold value of Vin at which a node power supply commences operation;
VoutT1 is Vout measured at a first time T1;
VoutT2 is Vout measured at a second time T2;
VoutT3 is Vout measured at a third time T3;
IO is the current flowing at the output of the power supply distributor for the line;
IL1 is the predetermined programmable value of the output of the power supply distributor for the line;
12 is a predetermined programmable value which is arrived at by measuring the maximum peak value of the current IO for a period of a few minutes when power is not transmitted along the line and when no load is connected at the output of the power supply distributor for the line;
I3 is a predetermined programmable value which is arrived at by measuring the minimum value of the current IO for a period of a few minutes when power is not transmitted along the line and when a resistance is connected between +Vout and -Vout at the output of said power supply distributor for the line;
I5 is a predetermined programmable value which is arrived at by measuring the maximum peak value of the current IO for a period of a few minutes when power is not transmitted along the line and when no load is connected at the output of the power supply distributor for the line;
IOT1 is IO measured at time T1;
IOT2 is IO measured at time T2; and
IOT3 is IO measured at time T3.
82. A local area network according to para 71 and wherein said power management functionality includes functionality for monitoring and managing power consumption during normal operation comprising sensing current for each node.
83. A local area network according to para 82 and wherein said functionality for monitoring and managing power consumption during normal operation comprises sensing current for each node in a generally cyclic manner.
84. A local area network according to para 83 and wherein said functionality for monitoring and managing power consumption during normal operation comprises sensing current for each node and comparing sensed current with programmably predetermined reference values for each line.
85. A local area network according to para 82 and wherein each node is classified as being over-current, under-current or normal.
86. A local area network according to para 85 and wherein said over-current classification includes programmably adjustable thresholds.
87. A local area network according to para 85 and wherein said normal classification includes at least one of the following sub-classifications: active mode, sleep mode, and low-power mode.
88. A local area network according to para 82 and wherein said functionality for monitoring and managing power consumption during normal operation is operative to control the operation of nodes classified as being over-current on the basis of at least one of the following functionalities:
if current at a node exceeds a regular over-current threshold for at least a predetermined time, power to that node is cut off after the predetermined time;
current supplied to a node is not permitted to exceed a high over-current threshold; and
at least one intermediate threshold is defined between a regular over-current threshold and said high over-current threshold and a predetermined time to cut-off is determined as a function of which of such intermediate thresholds is exceeded.
89. A local area network according to para 82 and wherein said functionality for monitoring and managing power consumption during normal operation is operative to control the operation of nodes classified as being under-current on the basis of the following functionality:
within a relatively short predetermined time following detection of an under-current node, which predetermined time is selected to avoid undesired response to noise, supply of current to such node is terminated.
90. A local area network according to para 82, comprising functionality for monitoring overall current flow as follows:
in parallel, overall current flow to all of the nodes over all of the lines is monitored;
said overall current flow is compared with a programmably predetermined reference value; and
on the basis of this comparison, said power supply distributor and the nodes connected thereto are together classified as being over-current or normal.
91. A local area network according to para 85 and wherein said over-current classification includes programmably adjustable thresholds.
92. A local area network according to para 82 and wherein said functionality for monitoring and managing power consumption during normal operation is operative to control the operation of power supply distributors classified as being over-current on the basis of at least one of the following functionalities:
if the overall current exceeds a regular overall over-current threshold for at least a predetermined time, power to at least some nodes is either reduced or cut off after the predetermined time; and
in any event, the overall current is not permitted to exceed a high overall over-current threshold, which exceeds said regular overall over-current threshold.
93. A local area network according to para 71 and wherein said power supply distributor forms part of said hub.
94. A local area network according to para 71 and wherein said power supply distributor does not form part of said hub.
95. A local area network according to para 92 and wherein intermediate thresholds are defined between said regular overall over-current threshold and said high overall over-current threshold and a predetermined time to cut-off is determined as a function of which of such intermediate thresholds is exceeded.
96. A local area network according to para 71 and wherein said power supply distributor is operative to report a current level classification of each node and of the power supply distributor to an external monitoring system.
97. A local area network according to para 71 and wherein said power supply distributor is operative to notify nodes of an impending change in the current supply thereto.
98. A local area network according to para 71 and wherein said power supply distributor is operative to provide at least one of full and no functionality operation to individual nodes in involuntary power management operation.
99. A local area network according to para 98 and wherein said power supply distributor is operative in accordance with at least some of the following functionality:
initially determining the total power available to it as well as the total power that it is currently supplying to said nodes;
determining the relationship between the current total power consumption (TPC) to the current total power availability (TPA);
if TPC/TPA is less than a first threshold, supplying full power to additional nodes one-by-one on a prioritized basis;
if TPC/TPA is greater than a second threshold, higher than said first threshold, disconnecting power to individual nodes one-by-one on a prioritized basis;
if TPC/TPA is between said first and second thresholds, inquiring as to whether a new node requires power; and
if a new node requires power and a node having a lower priority than the new node is currently receiving power, disconnecting the lower priority node from power and connecting the higher priority node to power.
100. A local area network according to para 71 and wherein said power supply distributor is operative to provide at least one of full or no functionality operation with emergency override to individual nodes in involuntary power management operation.
101. A local area network according to para 100 and wherein said power supply distributor is operative in accordance with the following functionality in involuntary power management operation:
sensing an emergency need for power at a given node; and
thereafter assigning a highest priority to the given node.
102. A local area network according to para 71 and wherein said power supply distributor is operative to provide at least one of full or no functionality operation queue-controlled priority in involuntary power management.
103. A local area network according to para 102 and wherein said power supply distributor is operative in accordance with the following functionality in involuntary power management operation:
initially determining the total power available to it as well as the total power that it is currently supplying to all nodes;
determining the relationship between the current total power consumption (TPC) to the current total power availability (TPA);
if TPC/IPA is less than a first threshold, supplying full power to additional nodes one-by-one on a queue-controlled, prioritized basis;
if TPC/TPA is greater than a second threshold, higher than said first threshold, disconnecting power to individual nodes one-by-one on a prioritized basis;
if TPC/TPA is between said first and second thresholds, inquiring as to whether a new node requires power; and
if a new node requires power, adding the new node to the bottom of the queue.
104. A local area network according to para 71 and wherein said power supply distributor is operative to provide at least one of full or no functionality operation on a time-sharing, prioritized basis in involuntary power management.
105. A local area network according to para 104 and wherein said power supply distributor is operative in accordance with the following functionality in involuntary power management operation:
initially determining the total power available to it as well as the total power that it is currently supplying to all nodes;
determining the relationship between the current total power consumption (TPC) to the current total power availability (TPA);
if TPC/TPA is less than a first threshold, supplying full power to additional nodes one-by-one on a time-sharing, prioritized basis;
if TPC/TPA is greater than a second threshold, greater than said first threshold, disconnecting power from individual nodes one-by-one on a prioritized basis.
if TPC/TPA is between said first and second thresholds, inquiring as to whether a new node requires power;
if a node having a lower priority, in the sense that it has been receiving power for a longer time, which is above a predetermined minimum time, is currently receiving power, disconnecting power from the lower priority node and connecting the higher priority node to power.
106. A local area network according to para 71 and wherein said power supply distributor is operative to provide advance notice to a node of a change in the power to be supplied thereto.
107. A local area network according to para 71 and wherein said power supply distributor is operative to provide at least one of full and reduced functionality operation to individual nodes in involuntary power management operation.
108. A local area network according to para 107 and wherein said power supply distributor is operative in accordance with at least some of the following functionality:
initially determining the total power available to it as well as the total power that it is currently supplying to said nodes;
determining the relationship between the current total power consumption (TPC) to the current total power availability (TPA);
if TPC/TPA is less than a first threshold, supplying full power to additional nodes one-by-one on a prioritized basis;
if TPC/TPA is greater than a second threshold, higher than said first threshold, reducing power to individual nodes one-by-one on a prioritized basis;
if TPC/TPA is between said first and second thresholds, inquiring as to whether a new node requires power or a node requires additional power, and
if a new node requires power or a node requires additional power and a node having a lower priority than the new node is currently receiving power, reducing power to the lower priority node and supplying power to the new node or increased power to a node requiring additional power.
109. A local area network according to para 106 and wherein said power supply distributor is operative to provide at least one of full or reduced functionality operation with emergency override to individual nodes in involuntary power management operation.
110. A local area network according to para 109 and wherein said power supply distributor is operative in accordance with the following functionality in involuntary power management operation:
sensing an emergency need for power at a given node; and
thereafter assigning a highest priority to the given node.
111. A local area network according to para 71 and wherein said power supply distributor is operative to provide at least one of full or reduced functionality operation queue-controlled priority in involuntary power management.
112. A local area network according to para 111 and wherein said power supply distributor is operative in accordance with the following functionality in involuntary power management operation:
initially determining the total power available to it as well as the total power that it is currently supplying to all nodes;
determining the relationship between the current total power consumption (TPC) to the current total power availability (TPA);
if TPC/TPA is less than a first threshold, supplying power to additional nodes or additional power to nodes which currently receive power one-by-one on a queue-controlled, prioritized basis;
if TPC/TPA is greater than a second threshold, higher than said first threshold, reducing power to individual nodes one-by-one on a prioritized basis;
if TPC/TPA is between said first and second thresholds, inquiring as to whether a new node requires power or a node requires additional power, and
if a new node requires power or a node requires additional power, adding the node to the bottom of the queue.
113. A local area network according to para 71 and wherein said power supply distributor is operative to provide at least one of full or reduced functionality operation on a time-sharing, prioritized basis in involuntary power management.
114. A local area network according to para 113 and wherein said power supply distributor is operative in accordance with the following functionality in involuntary power management operation:
initially determining the total power available to it as well as the total power that it is currently supplying to all nodes;
determining the relationship between the current total power consumption (TPC) to the current total power availability (TPA);
if TPC/TPA is less than a first threshold, supplying additional power to nodes or power to additional nodes one-by-one on a time-sharing, prioritized basis;
if TPC/TPA is greater than a second threshold, greater than said first threshold, reducing power to individual nodes one-by-one on a prioritized basis.
if TPC/TPA is between said first and second thresholds, inquiring as to whether a node requires additional power or a new node requires power;
if a node having a lower priority, in the sense that it has been receiving power for a longer time, which is above a predetermined minimum time, is currently receiving power, reducing power to the lower priority node and supplying power to a higher priority node.
115. A local area network according to para 71 and wherein said power supply distributor is operative to provide at least one of full and no functionality operation to individual nodes in voluntary power management operation.
116. A local area network according to para 115 and wherein said power supply distributor is operative in accordance with at least some of the following functionality:
initially determining the total power available to it in accordance with a power conservation program as well as the total power that it is currently supplying to said nodes;
determining the relationship between the current total power consumption (TPC) to the current total power availability (TPA);
if TPC/TPA is less than a first threshold, supplying full power to additional nodes one-by-one on a prioritized basis;
if TPC/TPA is greater than a second threshold, higher than said first threshold, disconnecting power to individual nodes one-by-one on a prioritized basis;
if TPC/TPA is between said first and second thresholds, inquiring as to whether a new node requires power; and
if a new node requires power and a node having a lower priority than the new node is currently receiving power, disconnecting the lower priority node from power and connecting the higher priority node to power.
117. A local area network according to para 71 and wherein said power supply distributor is operative to provide at least one of full or no functionality operation with emergency override to individual nodes in voluntary power management operation.
118. A local area network according to para 117 and wherein said power supply distributor is operative in accordance with the following functionality in voluntary power management operation:
sensing an emergency need for power at a given node; and
thereafter assigning a highest priority to the given node.
119. A local area network according to para 71 and wherein said power supply distributor is operative to provide at least one of full or no functionality operation queue-controlled priority in voluntary power management.
120. A local area network according to para 118 and wherein said power supply distributor is operative in accordance with the following functionality in voluntary power management operation:
initially determining the total power available to it in accordance with a power conservation program as well as the total power that it is currently supplying to all nodes;
determining the relationship between the current total power consumption (TPC) to the current total power availability (TPA);
if TPC/TPA is less than a first threshold, supplying full power to additional nodes one-by-one on a queue-controlled, prioritized basis;
if TPC/TPA is greater than a second threshold, higher than said first threshold, disconnecting power to individual nodes one-by-one on a prioritized basis;
if TPC/TPA is between said first and second thresholds, inquiring as to whether a new node requires power; and
if a new node requires power, adding the new node to the bottom of the queue.
121. A local area network according to para 71 and wherein said power supply distributor is operative to provide at least one of full or no functionality operation on a time-sharing, prioritized basis in voluntary power management.
122. A local area network according to para 121 and wherein said power supply distributor is operative in accordance with the following functionality in voluntary power management operation:
initially determining the total power available to it in accordance with a power conservation program as well as the total power that it is currently supplying to all nodes;
determining the relationship between the current total power consumption (TPC) to the current total power availability (TPA);
if TPC/TPA is less than a first threshold, supplying full power to additional nodes one-by-one on a time-sharing, prioritized basis;
if TPC/TPA is greater than a second threshold, greater than said first threshold, disconnecting power from individual nodes one-by-one on a prioritized basis.
if TPC/TPA is between said first and second thresholds, inquiring as to whether a new node requires power;
if a node having a lower priority, in the sense that it has been receiving power for a longer time, which is above a predetermined minimum time, is currently receiving power, disconnecting power from the lower priority node and connecting the higher priority node to power.
123. A local area network according to para 71 and wherein said power supply distributor is operative to provide at least one of full and reduced functionality operation to individual nodes in voluntary power management operation.
124. A local area network according to para 123 and wherein said power supply distributor is operative in accordance with at least some of the following functionality:
initially determining the total power available to it in accordance with a power conservation program as well as the total power that it is currently supplying to said nodes;
determining the relationship between the current total power consumption (TPC) to the current total power availability (TPA);
if TPC/TPA is less than a first threshold, supplying full power to additional nodes one-by-one on a prioritized basis;
if TPC/TPA is greater than a second threshold, higher than said first threshold, reducing power to individual nodes one-by-one on a prioritized basis;
if TPC/TPA is between said first and second thresholds, inquiring as to whether a new node requires power or a node requires additional power; and
if a new node requires power or a node requires additional power and a node having a lower priority than the new node is currently receiving power, reducing power to the lower priority node and supplying power to the new node or increased power to a node requiring additional power.
125. A local area network according to para 71 and wherein said power supply distributor is operative to provide at least one of full or reduced functionality operation with emergency override to individual nodes in voluntary power management operation.
126. A local area network according to para 125 and wherein said power supply distributor is operative in accordance with the following functionality in voluntary power management operation:
sensing an emergency need for power at a given node; and
thereafter assigning a highest priority to the given node.
127. A local area network according to para 71 and wherein said power supply distributor is operative to provide at least one of full or reduced functionality operation queue-controlled priority in voluntary power management.
128. A local area network according to para 127 and wherein said power supply distributor is operative in accordance with the following functionality in voluntary power management operation:
initially determining the total power available to it in accordance with a power conservation program as well as the total power that it is currently supplying to all nodes;
determining the relationship between the current total power consumption (TPC) to the current total power availability (TPA);
if TPC/TPA is less than a first threshold, supplying power to additional nodes or additional power to nodes which currently receive power one-by-one on a queue-controlled, prioritized basis;
if TPC/TPA is greater than a second threshold; higher than said first threshold, reducing power to individual nodes one-by-one on a prioritized basis;
if TPC/TPA is between said first and second thresholds, inquiring as to whether a new node requires power or a node requires additional power, and
if a new node requires power or a node requires additional power, adding the node to the bottom of the queue.
129. A local area network according to para 71 and wherein said power supply distributor is operative to provide at least one of full or reduced functionality operation on a time-sharing, prioritized basis in voluntary power management.
130. A local area network according to para 129 and wherein said power supply distributor is operative in accordance with the following functionality in voluntary power management operation:
initially determining the total power available to it in accordance with a power conservation program as well as the total power that it is currently supplying to all nodes;
determining the relationship between the current total power consumption (TPC) to the current total power availability (TPA);
if TPC/TPA is less than a first threshold, supplying additional power to nodes or power to additional nodes one-by-one on a time-sharing, prioritized basis;
if TPC/TPA is greater than a second threshold, greater than said first threshold, reducing power to individual nodes one-by-one on a prioritized basis.
if TPC/TPA is between said first and second thresholds, inquiring as to whether a node requires additional power or a new node requires power;
if a node having a lower priority, in the sense that it has been receiving power for a longer time, which is above a predetermined minimum time, is currently receiving power, reducing power to the lower priority node and supplying power to a higher priority node.
131. Apparatus according to para 71 and wherein said power supply distributor comprises a power management & control unit which monitors and controls the power supplied to various nodes via the communications cabling.
132. Apparatus according to para 131 and also comprising a management workstation which is operative to govern the operation of said power management & control unit.
133. Apparatus according to para 132 and wherein said management workstation governs the operation of multiple power management & control units.
134. Apparatus according to para 131 and wherein said power management & control unit communicates with various nodes via a data communication concentrator thereby to govern their current mode of power usage.
135. Apparatus according to para 131 and wherein said power management & control unit communicates with various nodes via control messages which are decoded at the nodes and are employed for controlling whether full or partial functionality is provided thereat.
136. Apparatus according to para 131 and wherein said power management & control unit senses that mains power to said power supply distributor is not available and sends a control message to cause nodes to operate in a backup or reduced power mode.
137. A local area network node according to para 29 and wherein said node includes essential circuitry, which is required for both full functionality and reduced functionality operation, and non-essential circuitry, which is not required for reduced functionality operation.
138. A local area network node according to para 137 and wherein said node includes a switch and a controller, controlling the operation of said switch which selectably operates said non-essential circuitry.
139. A local area network node according to para 138 and wherein said node also includes a power supply and wherein said controller is operative in response to an output from said power supply.
140. A local area network node according to para 139 and wherein node also includes a sensor and wherein said controller is operative in response to an input received from said sensor.
141. A local area network node according to para 140 and wherein sensor senses a voltage level of electrical power being supplied to said power supply.
142. A local area network node according to para 140 and wherein said sensor senses a control signal transmitted thereto, via said communication cabling from said power supply distributor.
143. A local area network node according to para 139 and wherein when said controller receives a control input from said power supply indicating that mains power is available, it operates said switch such that power is supplied to both said essential circuitry and said non-essential circuitry and when said controller receives a control input from said power supply indicating that mains power is not available, and said sensor indicates that sufficient power is available via the communications cabling, said controller operates said switch such that power is supplied to both said essential circuitry and said non-essential circuitry.
144. A local area network node according to para 143 and wherein when said controller receives a control input from said power supply indicating that mains power is not available via said power supply, and said sensor indicates that sufficient power is not available, said controller operates said switch such that adequate power is supplied with highest priority to said essential circuitry and if additional power beyond that required by said essential circuitry is also available, it is supplied to said non-essential circuitry via said switch.
145. A local area network node according to para 29 and wherein said node is operative in both full-functionality and sleep mode functionality.
146. A local area network node according to para 29 and wherein said node includes a controller, a switch, monitoring circuitry, at least one power supply and node circuitry and wherein said switch receives a control input from said controller which receives a control input from said sensor as well as a control input from said monitoring circuitry, which is continually powered by said at least one power supply.
147. A local area network node according to para 145 and wherein said monitoring circuitry receives a user input indicating an intention to use the node or a control message via the communications cabling, indicating a need to operate in a full-functionality mode and is responsive thereto for causing said switch to cause said node circuitry to operate in a full-functionality mode.
148. A local area network node according to para 145 and wherein said sensor senses a voltage level of electrical power being supplied to said at least one power supply.
149. A local area network node according to para 145 and wherein said sensor senses a control signal transmitted thereto via the communication cabling from said power supply distributor.
150. A local area network node according to para 145 and wherein said node circuitry comprises essential node circuitry and non-essential node circuitry and wherein said switch comprises an essential node circuitry switch and a non-essential node circuitry switch.
151. A local area network node according to para 150 and wherein when said controller receives a control input from said at least one power supply indicating that mains power is available, said controller operates said essential node circuitry switch and said non-essential node circuitry switch such that power is supplied to both said essential node circuitry and said non-essential node circuitry and when mains power is not available via said at least one power supply, but said sensor indicates that sufficient power is available via the communications cabling, said controller operates said essential node circuitry switch and said non-essential node circuitry switch such that power is supplied to both said essential node circuitry and said non-essential node circuitry.
152. A local area network node according to para 149 and wherein when said controller receives a control input from said at least one power supply indicating that mains power is not available via said at least one power supply and said sensor indicates that sufficient power is not available, said controller operates said essential node circuitry switch such that adequate power is supplied with highest priority to said essential node circuitry and if additional power beyond that required by said essential node circuitry is also available, it is supplied to said non-essential node circuitry via said non-essential node circuitry switch.
153. A local area network node according to para 149 and wherein said node is operative in one of three modes, a full-functionality mode when both said essential and non-essential node circuitry are operative, an essential functionality mode when said essential node circuitry is operative and a sleep functionality mode wherein at least part of said essential node circuitry is not operative.
154. A local area network node according to para 31 and wherein said node also includes a power supply and wherein
said power supply includes at least one rechargeable energy storage element.
155. A local area network node according to para 154 and wherein said power supply provides limited back-up power.
156. A local area network node according to para 154 and wherein said power supply enables intermittent operation of said node in situations where only very limited power may be transmitted over said communication cabling.
157. A local area network power supply distributor for use in a local area network including a hub, a plurality of nodes and communication cabling connecting said plurality of nodes to a hub for providing digital communication therebetween, said power supply distributor being operative to provide at least some operating power to at least some of said plurality of nodes via said communication cabling.
158. Apparatus according to para 157 and wherein said power supply distributor is located within the hub.
159. Apparatus according to para 157 and wherein said power supply distributor is located outside the hub.
160. Apparatus according to para 157 and wherein said power supply distributor is located partially within the hub and partially outside the hub.
161. Apparatus according to para 157 and wherein said operating power supplied by said power supply distributor to at least some of said plurality nodes via said communication cabling includes backup power.
162. Apparatus according to para 157 and wherein:
said hub includes a data communication concentrator;
said power supply distributor includes a combiner; and
said communication cabling connects said data communication concentrator via said combiner to said nodes.
163. Apparatus according to para 157 and wherein said hub includes a data communication concentrator and wherein said power supply distributor is also located within the hub.
164. Apparatus according to para 157 and wherein said hub includes a data communication concentrator and wherein said power supply distributor is also located within the hub and includes a power supply and a combiner, said combiner coupling power from said power supply to said communication cabling which also carries data from said data communication concentrator.
165. Apparatus according to para 162 and wherein:
said combiner comprises a plurality of couplers, each of which is connected to an output of said power supply.
166. Apparatus according to para 162 and wherein:
said combiner comprises a plurality of couplers and a plurality of filters, each coupler being connected via a filter to an output of said power supply.
167. Apparatus according to para 162 and wherein:
said combiner comprises a plurality of couplers and a plurality of filters and a plurality of smart power allocation and reporting circuits (SPEARs), each coupler being connected via a filter and a SPEAR to an output of said power supply.
168. Apparatus according to para 162 and wherein:
said power supply distributor includes a power supply; and
said power supply includes a power failure backup facility.
169. Apparatus according to para 162 and wherein:
said combiner comprises a plurality of couplers and a plurality of filters, each coupler being connected via a filter to an output of a power supply.
170. Apparatus according to para 157 and wherein said power supply distributor is operative to provide electrical power along said communication cabling without unacceptable degradation of said digital communication.
171. Apparatus according to para 157 and wherein said communication cabling comprises at least one twisted wire pair connected to each node and wherein power is transmitted over a twisted wire pair along which data is also transmitted.
172. Apparatus according to para 157 and wherein:
said power supply distributor includes a power supply interface and a power supply;
said communication cabling connects said data communication concentrator via said power supply interface to said nodes; and
said power supply interface comprises a plurality of filters and a plurality of smart power allocation and reporting circuits (SPEARs), each filter being connected via a SPEAR to an output of said power supply.
173. Apparatus according to para 157 and wherein said communication cabling comprises at least two twisted wire pairs connected to each node and wherein power is transmitted over a twisted wire pair different from that along which data is transmitted.
174. Apparatus according to para 157 and wherein:
said hub includes a data communication concentrator;
said power supply distributor includes a power supply interface and a power supply;
said communication cabling connects said data communication concentrator via said power supply interface to said nodes; and
said power supply interface comprises a plurality of filters and a plurality of smart power allocation and reporting circuits (SPEARs), each filter being connected via a SPEAR to an output of said power supply.
175. Apparatus according to para 157 and wherein:
said hub includes a data communication concentrator;
said power supply distributor includes a combiner and a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
each coupler has at least two ports, one of which is connected to a port of said data communication concentrator and the other of which is connected, via communication cabling, to one of said plurality of nodes.
176. Apparatus according to para 157 and wherein:
said hub includes a data communication concentrator;
said power supply distributor includes a combiner, a management and control unit and a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
said SPEAR is operative to report to said management and control unit the current consumption of a node connected thereto.
177. Apparatus according to para 157 and wherein:
said hub includes a data communication concentrator,
said power supply distributor includes a combiner and a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
said SPEAR is operative to limit the maximum current supplied to a node connected thereto.
178. Apparatus according to para 157 and wherein:
said hub includes a data communication concentrator;
said power supply distributor includes a combiner and a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
said SPEAR is operative to automatically disconnect a node connected thereto displaying an overcurrent condition following elapse of a programmably predetermined period of time.
179. Apparatus according to para 157 and wherein:
said hub includes a data communication concentrator;
said power supply distributor includes a combiner and a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
said SPEAR is operative to automatically disconnect power from a node connected thereto displaying an overcurrent condition following elapse of a programmably predetermined period of time and to automatically reconnect the node to power thereafter when it no longer displays the overcurrent condition.
180. Apparatus according to para 157 and wherein:
said hub includes a data communication concentrator,
said power supply distributor includes a combiner and a power supply;
said communication cabling connects said data communication concentrator via said combiner to said nodes;
said combiner comprises a plurality of couplers and a plurality of filters and a plurality of smart power allocation and reporting circuits (SPEARs), each coupler being connected via a filter and a SPEAR to an output of said power supply; and
said SPEAR comprises:
   a current sensor which receives a voltage input Vin from a power supply and generates a signal which is proportional to the current passing therethrough; and
   a multiplicity of comparators receiving said signal from said current sensor and also receiving a reference voltage Vref from respective reference voltage sources.
181. Apparatus according to para 180 and wherein said reference voltage sources are programmable reference voltage sources and receive control inputs from management & control circuits.
182. Apparatus according to para 181 and wherein outputs of said multiplicity of comparators are supplied to a current limiter and switch which receives input voltage Vin via the current sensor and provides a current-limited voltage output Vout.
183. Apparatus according to para 182 and wherein said outputs of said comparators are supplied to management & control circuits to serve as monitoring inputs providing information regarding the DC current flowing through the SPEAR.
184. Apparatus according to para 157 and wherein:
said hub includes a data communication concentrator;
said power supply distributor includes a combiner and a power supply;
said communication cabling connects said data communication concentrator via said combiner to said nodes; and
said combiner comprises a plurality of couplers each of which includes at least a pair of transformers, each having a center tap at a secondary thereof via which the DC voltage is fed to each wire of a twisted pair connected thereto.
185. Apparatus according to para 157 and wherein:
said hub includes a data communication concentrator;
said power supply distributor includes a combiner and a power supply;
said communication cabling connects said data communication concentrator via said combiner to said nodes; and
said combiner comprises a plurality of couplers each of which includes at least one transformer, which is characterized in that it includes a secondary which is split into two separate windings and a capacitor which is connected between said two separate windings and which effectively connects the two windings in series for high frequency signals, but effectively isolates the two windings for DC.
186. Apparatus according to para 157 and wherein:
said hub includes a data communication concentrator;
said power supply distributor includes a combiner and a power supply;
said communication cabling connects said data communication concentrator via said combiner to said nodes; and
said combiner comprises a pair of capacitors which effectively block DC from reaching the data communication concentrator.
187. Apparatus according to para 157 and wherein:
said hub includes a data communication concentrator;
said power supply distributor includes a combiner and a power supply;
said communication cabling connects said data communication concentrator via said combiner to said nodes; and
said combiner comprises two pairs of capacitors which effectively block DC from reaching the data communication concentrator.
188. Apparatus according to para 157 and wherein:
said hub includes a data communication concentrator;
said power supply distributor includes a combiner and a power supply;
said communication cabling connects said data communication concentrator via said combiner to said nodes; and
said combiner comprises a self-balancing capacitor-less and transformer-less common mode coupling circuit.
189. Apparatus according to para 157 and wherein said power supply distributor includes power management functionality.
190. Apparatus according to para 189 and wherein said power supply distributor comprises a power management & control unit which monitors and controls the power supplied to various nodes via the communications cabling.
191. Apparatus according to para 190 and also comprising a management workstation which is operative to govern the operation of said power management & control unit.
192. Apparatus according to para 191 and wherein said management workstation governs the operation of multiple power management & control units.
193. Apparatus according to para 190 and wherein said power management & control unit communicates with various nodes via a data communication concentrator thereby to govern their current mode of power usage.
194. Apparatus according to para 190 and wherein said power management & control unit communicates with various nodes via control messages which are decoded at the nodes and are employed for controlling whether full or partial functionality is provided thereat.
195. Apparatus according to para 190 and wherein said power management & control unit senses that mains power to said power supply distributor is not available and sends a control message to cause nodes to operate in a backup or reduced power mode.
196. A local area network node according to para 190 and wherein said node includes essential circuitry, which is required for both full functionality and reduced functionality operation, and non-essential circuitry, which is not required for reduced functionality operation.
197. A method for setting-up a local area network comprising the steps of:
providing a hub;
providing a plurality of nodes;
connecting said plurality of nodes to said hub for providing data communication by using a communication cable; and
operating a power supply distributor to provide at least some operating power to at least some of said plurality of nodes via said communication cable.
198. A method for setting-up a local area network node in a local area network comprising the steps of:
providing a hub;
providing a plurality of nodes;
connecting said plurality of nodes to said hub for providing digital communication by using communication cabling; and
operating a power supply distributor to provide at least some operating power to at least some of said plurality of nodes via said hub and said communication cabling,
the local area network node comprising a communications cabling interface receiving both power and data and separately providing power to a node power input and data to a node data input.
199. A method for setting-up a local area network comprising the steps of:
providing a hub;
providing a plurality of nodes;
connecting said plurality of nodes to said hub for providing data communication via communication cabling; and
operating a power supply distributor to provide at least some operating power to at least some of said plurality of nodes via said communication cabling, said power supply distributor including power management functionality.
200. A method for setting-up a local area network power supply distributor for use in a local area network comprising the steps of:
providing including a hub;
providing a plurality of nodes and communication cabling connecting said plurality of nodes to a hub for providing digital communication therebetween, said power supply distributor being operative to provide at least some operating power to at least some of said plurality of nodes via said communication cabling.
201. A system for distributing electrical power over a data communication cabling infrastructure to one or more electrical power consuming network devices, comprising:
a data communications cabling network;
a source of electrical power;
at least one power/data combiner coupled to said source of electrical power and to said data communications cabling network, said at least one power/data combiner operative to generate and inject a low frequency power signal onto a data communications signal received from said data communications cabling network so as to yield a combined power/data signal which is subsequently output onto said data communications cabling network; and
at least one power/data splitter adapted to receive said combined power/data signal and to extract and separate therefrom said original data communication signal and said low frequency power signal.
202. The system according to para 201, wherein said data communications network comprises an Ethernet based Local Area Network (LAN).
203. The system according to para 201, wherein said power/data combiner is implemented as a standalone unit.
204. The system according to para 201, wherein said power/data combiner is integrated into a Local Area Network (LAN) hub.
205. The system according to para 201, wherein said power/data combiner is integrated into a Local Area Network (LAN) switch.
206. The system according to para 201, wherein said power/data combiner comprises a plurality of data only input ports and a plurality of data plus power output ports, each data in port and data plus power output port forming a separate channel.
207. The system according to para 201, wherein said power/data combiner is adapted to receive electrical from an AC mains power receptacle.
208. The system according to para 201, wherein said power/data combiner is adapted to receive electrical from an uninterruptable Power Supply (UPS).
209. The system according to para 201, wherein said power/data combiner is adapted to receive electrical from an another power/data combiner.
210. The system according to para 201, wherein said power/data combiner comprises means for filtering high frequency noise and ripple.
211. The system according to para 201, wherein said power/data combiner comprises means for sensing the current in said low frequency power signal.
212. The system according to para 201, wherein said power/data combiner comprises means for connecting and disconnecting said low frequency power signal to and from said combined output power/data signal.
213. The system according to para 201, wherein said power/data combiner comprises means for detecting no-load and overload conditions on said combined output power/data signal.
214. The system according to para 201, further comprising a management unit for monitoring and provisioning, via said data communications cabling network, the power/data combiners and power/data splitters located in said data communications cabling network.
215. The system according to para 201, wherein said power/data splitter is implemented as a standalone unit.
216. The system according to para 201, wherein said power/data combiner is integrated into a network device.
217. The system according to para 201, wherein said power/data combiner comprises an AC/DC power converter for converting said extracted low frequency power signal into one or more output voltages.
218. The system according to para 201, wherein said power/data combiner comprises an DC/DC power converter for converting said extracted low frequency power signal into one or more output voltages.
219. A method for distributing electrical power over a data communication cabling infrastructure to one or more electrical power consuming network devices, said method comprising the steps of:
generating a low frequency power signal from a source of electrical power; injecting said low frequency power signal into a data communications signal being carried over said data communications cabling network so as to generate a combined power/data signal;
transmitting said combined power/data signal onto said data communications cabling network;
receiving said combined power/data signal carried over said data communication cabling network; and
splitting said combined power/data signal so as to yield said data communication signal separated from said low frequency power signal.
220. The method according to para 219, wherein said data communications network comprises an Ethernet based Local Area Network (LAN).
221. The method according to para 219, wherein said source of electrical power comprises an AC mains power receptacle.
222. The method according to para 219, wherein said source of electrical power comprises an uninterruptable Power Supply (UPS).
223. The method according to 219, further comprising the step of filtering high frequency noise and ripple from said low frequency power signal.
224. The method according to para 219, further comprising the step of sensing the current in said low frequency power signal.
225. The method according to para 219, further comprising the step of connecting and disconnecting said low frequency power signal to and from said combined output power/data signal.
226. The method according to para 219, further comprising the step of detecting no-load and overload conditions on said combined output power/data signal.
227. The method according to para 219, further comprising the step of converting said extracted low frequency power signal into one or more output voltages.
228. A system for distributing electrical power over a data communication cabling infrastructure to one or more electrical power consuming network devices, comprising:
a data communications cabling network;
a source of electrical power;
power supply means for generating a low frequency power signal from said source of electrical power;
combiner means coupled to said data communications cabling network, said combiner means for injecting said low frequency power signal onto a data communications signal being carried over said data communications cabling network so as to yield a combined power/data signal;
regulator means for regulating the injection of said low frequency power signal onto said data communications signal, said regulation including, but not limited to, ceasing the injection of said low frequency power signal and limiting its current;
extraction means for extracting said low frequency power signal from said combined power/data signal and for outputting said original data communication signal and said low frequency power signal.
229. The system according to para 228, wherein said data communications network comprises an Ethernet based Local Area Network (LAN).
230. The system according to para 228, wherein said power supply means is adapted to receive electrical from an AC mains power receptacle.
231. The system according to para 228, wherein said power supply means is adapted to receive electrical from an uninterruptable Power Supply (UPS).
232. The system according to para 228, wherein said combiner means comprises means for filtering high frequency noise and ripple.
233. The system according to para 228, wherein said regulator means comprises means for sensing the current in said low frequency power signal.
234. The system according to para 228, wherein said regulator means comprises means for detecting no-load and overload conditions on said combined output power/data signal.
235. The system according to para 228, further comprising a management unit for monitoring and provisioning, via said data communications cabling network, the power/data combiners and power/data splitters located in said data communications cabling network.
236. The system according to para 228, wherein said extraction means comprises an AC/DC power converter for converting said extracted low frequency power signal into one or more output voltages.
237. The system according to para 228, wherein said extraction means comprises an DC/DC power converter for converting said extracted low frequency power signal into one or more output voltages.

## Claims

1. A power supply subsystem for providing electrical power to at least node over communication cabling, the power supply subsystem comprising:
at least one of a power supply interface and a combiner for distributing power into the communication cabling substantially without interfering with data communication; and
current limiting circuitry controlling current of said power distributed into said communication cabling via said power supply interface,
wherein said current limiting circuitry is operative to provide a first current limit level which is never exceeded, and a second current limit level which is not exceeded for more than a predetermined period of time.

2. A power supply subsystem according to claim 1, further comprising a management and control unit operative to interrogate the at least one node to which it is intended to transmit power over the communication cabling in order to determine whether the node's characteristics allow it to receive power over the communication cabling

3. A power supply subsystem according to Claim 2, wherein said interrogation of the at least one node includes measuring the voltage across the communication cabling connected to the at least one node and determining whether said measured voltage is within a predefined range.

4. A power supply subsystem according to Claim 3, wherein in the event that said measured voltage is within said predetermined range, the at least one node is classified as a Power over LAN node.

5. A power supply subsystem according to Claim 2, wherein said interrogation of the at least node comprises measuring the voltage across the communication cabling connected to the at least node and determining whether said measured voltage exceeds a predetermined threshold.

6. A power supply subsystem according to Claim 2, wherein said interrogation of the at least one node comprises measuring the voltage across the communication cabling connected to the at least one node and determining whether said measured voltage is within a predefmed range.

7. A power supply subsystem according to Claim 6, wherein in the event said measured voltage is within said predefined range, the at least one node is classified as a Power over LAN node.

8. A power supply subsystem according to Claim 2, wherein said interrogation of the at least one node includes measuring the voltage across the communication cabling connected to the at least one node and determining whether said measured voltage exceeds a predetermined threshold.

9. A power supply subsystem according to Claim 2, wherein said management and control unit is further operable to output a report pertaining to the status of the at least one node.

10. A power supply subsystem according to Claim 9, wherein said report includes a report of at least one characteristic of the at least one node.

11. A power supply subsystem according to Claim 10, wherein said at least one characteristic comprises an indication of power consumption of the at least one node.

12. A power supply subsystem according to Claim 1, wherein said power supply interface comprise at least one filter.

13. A power supply subsystem according to either Claim 1 or Claim 2, wherein said power is distributed into wire pairs of the communication cabling not providing data communication between the at least one node and a LAN switch.

14. A power supply subsystem according to either Claim 1 or Claim 2, wherein said power supply subsystem is configured to enable attachment between a LAN switch and the at least one node.

15. A power supply subsystem according to either Claim 1 or Claim 2, wherein said power is distributed into wire pairs of the communication cabling providing data communication between the at least one node and a LAN switch.

16. A power supply subsystem according to either Claim 1 or Claim 2, wherein said power supply subsystem is configured to be within a LAN switch.

17. A power supply subsystem according to either Claim 1 or Claim 2, further comprising a power supply, said power supply interface distributing power from said power supply into the communication cabling.

18. A power supply subsystem according to Claim 2, wherein said management and control unit is further operative to determine the status of the associated communication cabling over which it is intended to transmit power.

19. A local power supply subsystem according to Claim 18, wherein said interrogation and said status determination is achieved by a plurality of measurements of at least one of voltage and current, said plurality of measurements being accomplished at a plurality of times.

20. A method of supplying power to at least one node of a local area network, the method comprising:
providing a power supply subsystem;
interrogating at least one node connected to said power supply subsystem by communication cabling, said communication cabling further enabling data communication between said at least one node and a LAN switch, said interrogating determining whether characteristics of said at least one node allow it to receive power over said communication cabling; and
in the event said characteristics are determine to allow it to receive power over said communication cabling,
supplying a current limited power to said node from said power supply subsystem, said current limited power exhibiting a first current limit level which is never exceeded, and a second current limit level which is not exceeded for more than a predetermined period of time.

21. A method of supplying power according to Claim 20, wherein said supplying a current limited power is accomplished over data pairs, said data pairs being used for said data communication.

22. A method of supplying power according to Claim 20, wherein said supplying a current limited power is accomplished over spare pairs not being used for said data communication.
